(19) Europäisches Patentamt
European Patent Office
Office européen des brevets

(11) **EP 4 323 559 B1**

(12) **EUROPÄISCHE PATENTSCHRIFT**

(45) Veröffentlichungstag und Bekanntmachung des Hinweises auf die Patenterteilung:
**11.12.2024 Patentblatt 2024/50**

(21) Anmeldenummer: **22727950.2**

(22) Anmeldetag: **02.06.2022**

(51) Internationale Patentklassifikation (IPC):
*C23C 2/00* (2006.01)   *C23C 2/02* (2006.01)
*C23C 2/06* (2006.01)   *C23C 2/12* (2006.01)
*C23C 2/26* (2006.01)   *C23C 2/30* (2006.01)
*C23C 2/40* (2006.01)   *C23C 30/00* (2006.01)
*C09D 5/18* (2006.01)   *E04B 1/94* (2006.01)
*C22C 18/00* (2006.01)   *C22C 21/00* (2006.01)

(52) Gemeinsame Patentklassifikation (CPC):
**C23C 2/02; C09D 5/18; C22C 18/00; C22C 21/00; C23C 2/024; C23C 2/06; C23C 2/12; C23C 2/26; C23C 2/30; C23C 2/50; C23C 30/00; E04B 1/943**

(86) Internationale Anmeldenummer:
**PCT/EP2022/065045**

(87) Internationale Veröffentlichungsnummer:
**WO 2022/253956 (08.12.2022 Gazette 2022/49)**

(54) **VERFAHREN ZUR ERZEUGUNG VON STAHLBAUTEILEN MIT BRANDBESTÄNDIGKEIT**

PROCESS OF MANUFACTURING FIRE RESISTANT STEEL COMPONENTS

PROCÉDÉ DE PRODUCTION D'ÉLÉMENTS D'ACIER IGNIFUGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **04.06.2021 DE 102021002872**
**08.06.2021 DE 102021002896**
**22.06.2021 DE 102021116159**

(43) Veröffentlichungstag der Anmeldung:
**21.02.2024 Patentblatt 2024/08**

(60) Teilanmeldung:
**23211698.8 / 4 328 347**

(73) Patentinhaber: **Fontaine Holdings NV**
**3530 Houthalen (BE)**

(72) Erfinder: **PINGER, Thomas**
**3530 Houthalen (BE)**

(74) Vertreter: **Von Rohr Patentanwälte Partnerschaft mbB**
**Rüttenscheider Straße 62**
**45130 Essen (DE)**

(56) Entgegenhaltungen:
EP-A1- 2 599 889   WO-A1-2019/029856
WO-A1-2020/173586   DE-A1- 102007 048 504
US-A1- 2014 185 650

**Beschreibung**

Die vorliegende Erfindung betrifft das technische Gebiet des Brandschutzes, insbesondere des baulichen Brandschutzes, aber auch des Brandschutzes in anderen technischen Bereichen (wie z. B. im Bereich der Automobil- bzw. Fahrzeugfertigung).

Insbesondere betrifft die vorliegende Erfindung ein Verfahren zur Erzeugung von Brandbeständigkeit und/oder Feuerwiderstand, insbesondere Brandbeständigkeit und/oder Feuerwiderstand gemäß DIN EN 13501-2: 2016-12 und/oder DIN 4102-2: 1977-09, an einem Stahlbauteil und/oder zur Ausrüstung eines Stahlbauteils mit Brandbeständigkeit und/oder Feuerwiderstand, insbesondere mit Brandbeständigkeit und/oder Feuerwiderstand gemäß DIN EN 13501-2: 2016-12 und/oder DIN 4102-2: 1977-09, insbesondere ein Verfahren zur Erzeugung eines brand- und/oder feuerbeständigen Stahlbauteils, insbesondere eines gemäß DIN EN 13501-2: 2016-12 und/oder DIN 4102-2: 1977-09 brand- und/oder feuerbeständigen Stahlbauteils.

Des Weiteren betrifft die vorliegende Erfindung die Verwendung einer aluminiumhaltigen und/oder aluminiumlegierten Feuerverzinkungsschicht zur Erzeugung von Brandbeständigkeit und/oder Feuerwiderstand, insbesondere Brandbeständigkeit und/oder Feuerwiderstand gemäß DIN EN 13501-2: 2016-12 und/oder DIN 4102-2: 1977-09, an einem Stahlbauteil und/oder zur Ausrüstung eines Stahlbauteils mit Brandbeständigkeit und/oder Feuerwiderstand, insbesondere mit Brandbeständigkeit und/oder Feuerwiderstand gemäß DIN EN 13501-2: 2016-12 und/oder DIN 4102-2: 1977-09, vorzugsweise zur Erzeugung eines brand- und/oder feuerbeständigen Stahlbauteils, insbesondere eines gemäß DIN EN 13501-2: 2016-12 und/oder DIN 4102-2: 1977-09 brand- und/oder feuerbeständigen Stahlbauteils.

Darüber hinaus ist Gegenstand der vorliegenden Erfindung auch die Verwendung einer Feuerverzinkung (Schmelztauchverzinkung) bzw. eines Feuerverzinkungsverfahrens zur Erzeugung von Brandbeständigkeit und/oder Feuerwiderstand, insbesondere Brandbeständigkeit und/oder Feuerwiderstand gemäß DIN EN 13501-2: 2016-12 und/oder DIN 4102-2: 1977-09, an einem Stahlbauteil und/oder zur Ausrüstung eines Stahlbauteils mit Brandbeständigkeit und/oder Feuerwiderstand, insbesondere mit Brandbeständigkeit und/oder Feuerwiderstand gemäß DIN EN 13501-2: 2016-12 und/oder DIN 4102-2: 1977-09, insbesondere zur Erzeugung eines brand- und/oder feuerbeständigen Stahlbauteils, vorzugsweise eines gemäß DIN EN 13501-2: 2016-12 und/oder DIN 4102-2: 1977-09 brand- und/oder feuerbeständigen Stahlbauteils.

Gleichermaßen betrifft die vorliegende Erfindung die Verwendung von Aluminium zur Erhöhung und/oder Verbesserung der Brandbeständigkeit und/oder des Feuerwiderstands, insbesondere der Brandbeständigkeit und/oder des Feuerwiderstands gemäß DIN EN 13501-2: 2016-12 und/oder DIN 4102-2: 1977-09, eines feuerverzinkten und/oder mit einer Feuerverzinkungsschicht versehenen Stahlbauteils.

Weiterhin ist Gegenstand der vorliegenden Erfindung auch die Verwendung eines mit einer aluminiumhaltigen und/oder aluminiumlegierten Feuerverzinkungsschicht versehenen Stahlbauteils als baulicher Konstruktionsbestandteil zur Einhaltung der Erfordernisse von Brandbeständigkeit und/oder Feuerwiderstand, insbesondere Brandbeständigkeit und/oder Feuerwiderstand gemäß DIN EN 13501-2: 2016-12 und/oder DIN 4102-2: 1977-09.

Überdies betrifft die vorliegende Erfindung die Verwendung eines mit einer aluminiumhaltigen und/oder aluminiumlegierten Feuerverzinkungsschicht versehenen Stahlbauteils als Konstruktionsbestandteil von Aufnahmevorrichtungen, insbesondere Einhausungen oder Behältnisse, für Energiespeicher oder Energiewandler, wie Brennstoffzellen, Akkumulatoren, Batterien, galvanische Elemente oder dergleichen, insbesondere für den Automobilbereich, vorzugsweise zur Einhaltung der Erfordernisse von Brandbeständigkeit und/oder Feuerwiderstand.

Darüber hinaus betrifft die vorliegende Erfindung ein Tragwerk, insbesondere Stahlbautragwerk, für ein Bauwerk, insbesondere für ein Gebäude oder Gebäudeteil, wobei das Tragwerk als bauliche Konstruktionsbestandteile zur Einhaltung der Erfordernisse von Brandbeständigkeit und/oder Feuerwiderstand eine Vielzahl von mit einer aluminiumhaltigen und/oder aluminiumlegierten Feuerverzinkungsschicht versehenen Stahlbauteilen umfasst, sowie ein das erfindungsgemäße Tragwerk ausweisendes Bauwerk, insbesondere Gebäude oder Gebäudeteil.

Schließlich betrifft die vorliegende Erfindung auch die Verwendung einer aluminiumhaltigen und/oder aluminiumlegierten Feuerverzinkungsschicht zur Erzeugung von Brandbeständigkeit und/oder Feuerwiderstand an eisenbasierten oder eisenhaltigen, insbesondere stahlbasierten oder stahlhaltigen, Gegenständen und/oder zur Ausrüstung eisenbasierten oder eisenhaltigen, insbesondere stahlbasierten oder stahlhaltigen, Gegenständen mit Brandbeständigkeit und/oder Feuerwiderstand.

Unter Brandschutz im Allgemeinen versteht man insbesondere sämtliche Maßnahmen, welche der Entstehung und Ausbreitung eines Brandes (d. h. Feuer und Rauch) vorbeugen (d. h. vorbeugender Brandschutz oder Brandverhütung) und die Rettung von Menschen und Tieren sowie wirksame Löscharbeiten bei einem Brand ermöglichen (d. h. abwehrender Brandschutz). Brandschutz ist vielschichtig sowie komplex und findet sich daher in vielen Bereichen des täglichen Lebens. Daher finden sich zum Beispiel in Deutschland Anforderungen an den Brandschutz in einer Vielzahl von Rechtsvorschriften, wie zum Beispiel den Feuerwehrgesetzen und Bauordnungen der Bundesländer sowie zahlreichen weiteren Gesetzen, Verordnungen und Richtlinien.

Wie zuvor ausgeführt, unterscheidet man im Allgemeinen insbesondere den vorbeugenden Brandschutz einerseits und den abwehrenden Brandschutz andererseits. Vorbeugender Brandschutz ist insbesondere der Begriff für sämtliche Maßnahmen, welche präventiv getroffen werden, um einer Entstehung und Ausbreitung von Bränden durch bauliche, anlagentechnische und organisatorische Maßnahmen entgegenzuwirken und die Auswirkungen von Bränden soweit es geht einzuschränken. Folglich gliedert sich also der vorbeugende bzw. präventive Brandschutz in den baulichen Brandschutz, den anlagentechnischen Brandschutz und den organisatorischen Brandschutz.

Im bauordnungsrechtlichen Sinne dient der vorbeugende Brandschutz dem Schutz von Leib und Leben, der Umwelt und der öffentlichen Sicherheit und ist als Voraussetzung für eine wirksame Brandbekämpfung gefordert. Die öffentlichrechtlichen Vorschriften der Landesbauordnungen sind in Deutschland als Mindestanforderungen erlassen. In Ergänzung zum Bauordnungsrecht basieren die Anforderungen in Bezug auf den Sachschutz auf privatrechtlichen Vereinbarungen; maßgeblich sind hierbei häufig die Anforderungen, welche der jeweilige Sachversicherer an die Ausführung des Gebäudes bzw. seiner technischen Anlagen stellt.

Bei dem vorbeugenden baulichen Brandschutz handelt es sich also um ein sehr komplexes Aufgabengebiet, wobei die Lösungswege zur Erfüllung der Schutzziele, wie Brandverhütung, Verhinderung der Brandausbreitung, Rettung und wirksame Brandbekämpfung etc., zu unterschiedlichsten Lösungen führen, welche jeweils durch die zuständige Bauaufsicht zu genehmigen sind. Aspekte, welche brandschutztechnische Lösungen beeinflussen können, sind beispielsweise die Bauweise (z. B. Stellung der Gebäude auf dem Gelände und zueinander), die Bauart (z. B. bauliche Beschaffenheit, wie beispielsweise Massiv-, Skelett-, Fachwerk-, Montagebau etc.), die Auswahl der Baustoffe, die Lage des Gebäudes (z. B. Erreichbarkeit sowie Zugänglichkeit), die Art und Anzahl der nutzenden Personen, die Abmessungen (z. B. Größe, Aufbau und Unterteilung der Gebäude), die Art und Menge von Brandlasten und Gefahrstoffen (z. B. Gefahr der Brand- und Schadensausbreitung), die Gefahren der Brand- und/oder Schadensentstehung (z. B. Zündquellen, Bedingungen und Wahrscheinlichkeiten), die Art der Nutzung (z. B. betriebliche sowie nutzungstechnische Abläufe), die Brandentdeckung (z. B. Wahrscheinlichkeit bis zur Feststellung und Meldung), der Beginn der Rettungs- und Brandbekämpfungsmaßnahmen, der Umfang und Dauer der Rettungs- und Brandbekämpfungsmaßnahmen, die Leistungsfähigkeit der Gefahrenabwehrkräfte (z. B. Feuerwehr, Rettungsdienst, Löschmittelbereitstellung etc.), das Vorhandensein technischer Einrichtungen (z. B. Löschanlagen, Brandmeldeanlagen, Rauch- und Wärmeabzugsanlagen, Gefahrenmeldeanlagen), der Umfang betrieblicher Gefahrenabwehrmaßnahmen (z. B. Brandschutzordnungen, Gefahrenabwehrpläne, Schulungen, Unterweisungen, Werkfeuerwehren, Löschhilfen usw.).

Wesentliche Aufgaben und Schutzziele des vorbeugenden Brandschutzes sind es, Leben, Gesundheit, Eigentum, Besitz und Umwelt zu schützen.

Im Rahmen des baulichen Brandschutzes sind die baulichen Maßnahmen sehr vielfältig und beinhalten unter anderem die verwendeten Baustoffe und Bauteile, in Europa und Deutschland beispielsweise geregelt in DIN EN 13501 und DIN EN 1992-1-2 für den Stahlbetonbau, DIN EN 1993-1-2 für den Stahlbau und DIN EN 1995-1-2 für den Holzbau, sowie den bautechnischen Brandschutz in Industriebauten (geregelt in DIN 18230), aber auch die Fluchtwegplanung und das Vorsehen von Löschanlagen in Gebäuden. Die baulichen Maßnahmen müssen vor allem das Brandverhalten von Baustoffen und den Feuerwiderstand der Bauteile berücksichtigen.

Besondere Bedeutung kommt dem Brandschutz gerade im Fall des Stahlbaus zu, wobei im Rahmen der vorliegenden Erfindung der Begriff des Stahlbaus weit zu verstehen ist und nicht nur den reinen Stahlbau umfasst, sondern darüber hinaus auch den Stahlverbundbau, bei welchem Stahlelemente mit Beton verbunden sind, den Stahl-Skelettbau sowie den Stahlhochbau.

Der Stahlbau bezeichnet somit ein technisches Gebiet des Ingenieurbaus, bei welchem für den Bau von Tragwerken vorrangig Stahl eingesetzt wird. Im reinen Stahlbau werden insbesondere gewalzte Stahlträger, Bleche und Rohre aus Baustahl beispielsweise durch Verschrauben, Verschweißen oder Nieten miteinander zu einem Tragwerk verbunden. Wie zuvor ausgeführt, gehört zum Stahlbau - neben dem reinen Stahlbau - auch der Stahlverbundbau, bei welchem Stahlelemente im Verbund mit Beton eingesetzt werden, der Stahl-Skelettbau sowie der Stahlhochbau. Die Bemessung von Stahlbauten erfolgt in der Regel nach Eurocode 3: Bemessung und Konstruktion von Stahlbauten (EN 1993). Der Stahlbau verbindet den Vorteil einer vergleichsweise kurzen Planungs- und Bauzeit mit einer flexiblen Ausführung des Tragwerkes, wobei diese Flexibilität beispielsweise aus der Verwendung relativ leichter und schlanker, aber hochbelastbarer Bauteile und einem hohen wie präzisen Vorfertigungsgrad und damit verkürzte Montagezeiten resultiert.

Der Bewitterung ausgesetzte Bauteile aus Stahl müssen allerdings durch vor Korrosion geschützt werden, beispielsweise durch besondere Oberflächenbeschichtungen oder dergleichen.

Stahlkonstruktionen und Stahl(bau)teile werden zudem oftmals in verschiedenen Situationen und Anwendungen einer erhöhten Temperatur ausgesetzt. Hierbei kann diese Belastung planmäßig vorliegen, entweder dauerhaft oder zyklisch, z. B. im Bereich von Thermoprozessanlagen, oder sie kann lediglich in Ausnahmesituationen auftreten, z. B. im Brandfall eines Gebäudes. Für planmäßig thermisch beanspruchte Bauteile wird in aller Regel ein warmfester Stahl verwendet, dessen Festigkeit durch eine vorliegende Temperatur in geringerem Maße im Vergleich zu einem nicht-warmfesten Stahl herabgesetzt wird; derartiger warmfester Stahl ist für die konstruktive Anwendung im Bauwesen aber vollkommen ungeeignet. Stellt die thermische Belastung einen außergewöhnlichen, also nicht planmäßigen Lastfall dar, ist die Anpassung der Stahlsorte aus wirtschaftlichen Gründen nicht sinnvoll; man versucht vielmehr, die Bauteile mittels zusätzlicher Schutzmaßnahmen vor einer überkritischen thermischen Belastung zu schützen. Die hierfür erforderlichen Maßnahmen sehen in der Regel passive Schutzsysteme, wie z. B. Beschichtungen, Verkleidungen oder dergleichen vor. Diese Maßnahmen sind jedoch mit nennenswerten Kosten verbunden, wobei dies zum einen die reine Applikation der Beschichtung beinhaltet als auch zum anderen die notwendigen Maßnahmen, um die Dauerhaftigkeit der Beschichtungen, Verkleidungen oder dergleichen sicherzustellen, z. B. sowohl die Instandsetzungen, welche infolge von Beschädigungen während der Montage und/oder im Zuge von baulichen oder nutzungsbedingten Maßnahmen auftreten können, als auch die kontinuierlichen Wartungen.

Nach dem bisherigen Stand der Technik werden im Stahlhochbau insbesondere passive Brandschutzbeschichtungen zur Absicherung der Stahlkonstruktion gegenüber einem Brandfall eingesetzt; solche Beschichtungen werden auf die Stahlbauteile appliziert. Ihre Funktion basiert darauf, dass sie Stoffe enthalten, welche unter thermischer Last im Brandfall aufschäumen bzw. intumeszieren und auf diese Weise eine isolierende Wirkung erzielen, d. h. die Erwärmung der Stahlkomponente wird für eine definierte Zeitspanne unterbunden. Nachteilig bei diesen Beschichtungen ist jedoch, dass ihre Wirksamkeit nur für eine begrenzte Dauer zugelassen ist (insbesondere maximal 10 Jahre) und somit eine regelmäßige Erneuerung erforderlich wird, was insbesondere zeit- und kostenintensiv ist. Zudem sind Brandschutzbeschichtungen anfällig gegenüber mechanischen Belastungen und müssen entsprechend vor diesen geschützt bzw., falls dies nicht möglich oder gewollt ist, bei potentiellen Ereignissen auf mögliche Schäden hin untersucht werden. Unter Nachhaltigkeitsaspekten ist neben der begrenzten Dauerhaftigkeit vor allem die mangelnden Zirkularität der eingesetzten Stoffe als nachteilig zu benennen.

Der erforderliche Brandschutz von Stahlbauteilen wird also üblicherweise durch passive Maßnahmen, insbesondere durch Brandschutzverkleidungen oder Brandschutzbeschichtungen, gewährleistet.

Insbesondere Stahlbauwerke benötigen aber oft besonderen Brandschutz, da durch die relativ dünnwandigen Querschnitte der Stahlbauteile (z. B. Träger) und deren gute Wärmeleitfähigkeit diese bei einem Brand schnell erwärmen. Da die mechanischen Eigenschaften des Stahls stark temperaturabhängig sind, verringert sich in Folge dieser Erwärmung beispielsweise die Streckgrenze von Stahl bei 600 °C um die Hälfte des Wertes bei 20 °C absinkt, wobei auch der Elastizitätsmodul (E-Modul) mit zunehmender Stahltemperatur abnimmt. In Abhängigkeit von der Brandlast und dem vorgesehenen Gebrauch des Bauwerks kann mit einer der geforderten Feuerwiderstandsdauer angepassten Überdimensionierung der Stahlbauteile und/oder mit speziellen Brandschutzummantelungen oder Brandschutzbeschichtungen die Funktionalität des Tragwerks (Tragfähigkeit) für eine festgelegte Mindestdauer gesichert und ein vorzeitiges Versagen der Konstruktion verhindert werden.

Für den Brandschutz muss eine vom Gesetzgeber für das jeweilige Bauwerk geforderte Feuerwiderstandsdauer eingehalten werden, welche für übliche Gebäude jeweils in den Landesbauordnungen der Bundesländer definiert ist. Diese erforderliche Feuerwiderstandsdauer wird abhängig von dem Bauwerk und der Nutzung in Kategorien eingeteilt, beispielsweise nach deutscher Norm (DIN 4102: Brandverhalten von Baustoffen und Bauteilen, insbesondere DIN 4102-2: 1977-09) in die Kategorien F30, F60, F90, F120 oder F180, wobei diese Zahlen die Mindestdauer (in Minuten angegeben) festlegen, welche die Konstruktion dem Brand standhalten muss. Der für die Überdimensionierung des Bauteils und/oder für die Bestimmung der dämmenden Brandschutzmaßnahmen anzunehmende Normbrand ist die Einheitstemperatur/¬Zeit-Kurve (auch kurz ETK genannt), welche eine Temperatur/¬Zeit-Kurve beschreibt, nach der die Gastemperatur innerhalb der ersten Minuten steil auf über 600 °C ansteigt und dann langsam, aber stetig weitersteigend zunimmt. In dieser Art und Weise stellen alle zusätzlichen Maßnahmen, ein Stahlbauteil zu schützen, ihr Leistungsprofil unter Beweis. Die Methodik des Überbemessens (nach der Europäischen Norm EN 1993-1-2 bzw. nach DIN EN 13501-2: 2016-12) basiert hingegen auf einer rechnerischen Bestimmung, wobei Ausgangsbasis die rechnerische Bestimmung der Stahltemperatur in einem "ETK-Brand" ist und sich mit der Bestimmung der Stahltemperatur die für die Bemessung notwendigen mechanischen Eigenschaften bestimmen lassen, wobei die eigentliche Bemessung ähnlich der Kaltbemessung mit den wärmebeeinflussten mechanischen Eigenschaften unter dem Brand angepassten Sicherheitsbeiwerten stattfindet (wobei dieses Bemessungsverfahren anhand von Versuchen kalibriert wird). Bei der Heißbemessung wird dagegen kein Brandschutz angesetzt bzw. angebracht, sondern vielmehr wird das Bauteil überdimensioniert, d. h. das Bauteil wird stärker ausgelegt, als dies für die Kaltbemessung erforderlich wäre. Durch die hieraus resultierende größere Bauteilabmessung (d. h. Massigkeit des Bauteils) ergibt sich unter Brandlast eine langsamere Erwärmung des Bauteils, was wiederum mit einer geringeren Reduzierung der Stahlfestigkeit und entsprechend einer höheren Tragfähigkeit korreliert.

Für den Brandschutz von reinen Stahlbauteilen ist eine Überdimensionierung oftmals übermäßig und daher nicht realisierbar oder zumindest nicht ökonomisch; folglich müssen im Allgemeinen zusätzliche passive und/oder aktive Brandschutzmaßnahmen vorgesehen werden. Am Stahlbauteil nachträglich angebrachte Brandschutzmaßnahmen haben im Allgemeinen dämmende, abschirmende und/oder wärmeabführende Wirkung. Dämmende, abschirmende und/oder wärmeabführende Brandschutzmaßnahmen sind beispielsweise Ummantelungen oder Verkleidungen aus zementgebundenen Spritzputzen wie z. B. mit Vermiculiten oder Mineralfasern (meistens zusammen mit einem notwendigen Putzträger), kastenförmige Umkleidungen z. B. aus Gipskarton, Dämmschichtbildner-Beschichtungen, raumabschließende Systeme wie abgehängte Decken, Verfüllung von Stahlprofil-Hohlräumen mit pumpenunabhängigem und thermisch frei zirkulierendem Wasser etc. Diese erforderlichen Brandschutzmaßnahmen sind jedoch zeit- und kostenaufwendig zu installieren und erfordern die Anbringung weiterer bzw. zusätzlicher Materialien und Werkstoffe. Dies ist im Hinblick auf wirtschaftliche, technische und die Sicherheit betreffende Faktoren, aber auch im Hinblick auf ästhetische Aspekte nachteilig. Auch ist dies in Bezug auf den Aspekt der Nachhaltigkeit abträglich.

Die DE 10 2007 048 504 A1 betrifft eine Korrosionsschutzbeschichtung für Stahlbleche mit verbesserter Haftung, wobei diese Korrosionsschutzbeschichtung neben dem Hauptbestandteil Zink auch 0,1 bis 5 % Aluminium und vor allem 0,2 bis 2 % Magnesium enthält und mit Schichtdicken von 5 bis 25 μm aufgebracht wird.

Weiterhin betrifft die WO 2020/173586 A1 ein Verfahren zur Erzeugung einer aluminiumlegierten Zinkschicht, insbesondere mit erhöhter Schichtdicke, auf einem eisenbasierten Bauteil, vorzugsweise Stahlbauteil, mittels Feuerverzinkung, insbesondere ein Verfahren zur Erhöhung und/oder Einstellung, vorzugsweise Erhöhung, der Schichtdicke einer mittels Feuerverzinkung erzeugten aluminiumlegierten Zinkschicht auf einem eisenbasierten Bauteil, sowie ein auf diese Weise erhältliches, mit einer aluminiumlegierten Zinkschicht versehenes Bauteil und dessen jeweilige Verwendung.

Die WO 2019/029856 A1 betrifft das technische Gebiet der Verzinkung von eisenbasierten bzw. eisenhaltigen Bauteilen, insbesondere stahlbasierten bzw. stahlhaltigen Bauteilen, insbesondere ein Feuerverzinkungsverfahren sowie ein Beschichtungsverfahren zur Beschichtung von im Rahmen der Feuerverzinkung verwendbaren Trage- und/oder Haltemitteln und die auf diese Weise erhältlichen Trage- und/oder Haltemittel und deren Verwendungen und darüber hinaus auch eine diesbezügliche Feuerverzinkungsanlage.

Die US 2014/185650 A1 betrifft ein Legierungspositionsbestimmungsverfahren, wobei Informationen von Strahlungsmessungen eines beförderten Stahlblechs in einer Wärmezone erfasst werden, die Stahlblechtemperaturen an Installationspositionen der Strahlungsthermometer unter Verwendung des Temperaturabnahmemusters des Stahlblechs abgeschätzt werden, der Emissionsgrad an den Einbaupositionen der Strahlungsthermometer berechnet wird und daraus die Legierungsposition basierend auf dem berechneten Emissionsgrade bestimmt wird.

Außerdem betrifft die EP 2 599 889 A1 ein Verfahren zum Heißprägen eines galvanisierten Stahlblechs, wobei mit dem Pressen und Abschrecken begonnen werden kann, nachdem das geschmolzene Zink vollständig verschwunden ist.

Schließlich betrifft die EP 2 385 181 A2 ein Brandschutzelement, insbesondere zur Bekleidung von Stahlstützen und Lüftungs- oder Kabelkanälen, wobei es wenigstens eine als Eckelement ausgebildete Platte umfasst, die einen zumindest bereichsweise mit Glasvlies ummantelten Gipskern aufweist.

Das der vorliegenden Erfindung zugrundeliegende Problem besteht folglich darin, den erforderlichen Brandschutz (d. h. Brandbeständigkeit und/oder Feuerwiderstand) für Stahlbauteile auf vereinfachte Art und Weise bereitzustellen, wobei die zuvor geschilderten Nachteile des Standes der Technik zumindest weitestgehend vermieden oder aber wenigstens abgeschwächt werden sollen.

Insbesondere soll ein Verfahren zur Erzeugung von Brandbeständigkeit und/oder Feuerwiderstand an Stahlbauteilen bzw. zur Ausrüstung von Stahlbauteilen mit Brandbeständigkeit und/oder Feuerwiderstand bereitgestellt werden, mit welchem sich gegenüber herkömmlichen konstruktiven Brandschutzmaßnahmen des Standes der Technik auf vereinfachte und kostenökonomische sowie in technischer Hinsicht zuverlässig zu realisierende Weise brand- und/oder feuerbeständige Stahlbauteil erzeugen lassen.

Insbesondere sollen im Rahmen der vorliegenden Erfindung auch die Aspekte der Reproduzierbarkeit in Bezug auf Planung und Ausführung, der Prozessökonomie und der betriebswirtschaftlichen Kompatibilität sowie der Nachhaltigkeit einschließlich einer verbesserte Kosten- und Ressourcennutzung ermöglicht werden.

Zur Lösung des zuvor geschilderten Problems schlägt die vorliegende Erfindung - gemäß einem **ersten** Aspekt der vorliegenden Erfindung - ein Verfahren zur Erzeugung von Brandbeständigkeit und/oder Feuerwiderstand an einem Stahlbauteil und/oder zur Ausrüstung eines Stahlbauteils mit Brandbeständigkeit und/oder Feuerwiderstand gemäß Anspruch 1 vor; weitere, insbesondere besondere und/oder vorteilhafte Ausgestaltungen des erfindungsgemäßen Verfahrens sind Gegenstand der diesbezüglichen Verfahrensunteransprüche.

Weiterhin betrifft die vorliegende Erfindung - gemäß einem **zweiten** Aspekt der vorliegenden Erfindung - die Verwendung einer aluminiumhaltigen und/oder aluminiumlegierten Feuerverzinkungsschicht zur Erzeugung von Brandbeständigkeit und/oder Feuerwiderstand und/oder zur Ausrüstung eines Stahlbauteils mit Brandbeständigkeit und/oder Feuerwiderstand gemäß dem diesbezüglichen unabhängigen Verwendungsanspruch (Anspruch 8); weitere, insbesondere besondere und/oder vorteilhafte Ausgestaltungen der erfindungsgemäßen Verwendung sind Gegenstand des diesbezüglichen Verwendungsunteranspruchs.

Des Weiteren betrifft die vorliegende Erfindung - gemäß einem **dritten** Aspekt der vorliegenden Erfindung - die Verwendung einer Feuerverzinkung (Schmelztauchverzinkung) bzw. eines Feuerverzinkungsverfahrens zur Erzeugung von Brandbeständigkeit und/oder Feuerwiderstand an einem Stahlbauteil und/oder zur Ausrüstung eines Stahlbauteils mit Brandbeständigkeit und/oder Feuerwiderstand gemäß dem diesbezüglichen unabhängigen Verwendungsanspruch (Anspruch 9); weitere, insbesondere besondere und/oder vorteilhafte Ausgestaltungen der erfindungsgemäßen Verwendung sind Gegenstand des diesbezüglichen Verwendungsunteranspruchs.

Darüber hinaus betrifft die vorliegende Erfindung - gemäß einem **vierten** Aspekt der vorliegenden Erfindung - die Verwendung von Aluminium zur Erhöhung und/oder Verbesserung der Brandbeständigkeit und/oder des Feuerwiderstands, eines feuerverzinkten und/oder mit einer Feuerverzinkungsschicht versehenen Stahlbauteils gemäß dem diesbezüglichen unabhängigen Verwendungsanspruch (Anspruch 10); weitere, insbesondere besondere und/oder vorteilhafte Ausgestaltungen der erfindungsgemäßen Verwendung sind Gegenstand des diesbezüglichen Verwendungsunteranspruchs.

Gleichermaßen betrifft die vorliegende Erfindung - gemäß einem **fünften** Aspekt der vorliegenden Erfindung - die Verwendung eines mit einer aluminiumhaltigen und/oder aluminiumlegierten Feuerverzinkungsschicht versehenen Stahlbauteils als baulicher Konstruktionsbestandteil zur Einhaltung der Erfordernisse von Brandbeständigkeit und/oder Feuerwiderstand gemäß dem diesbezüglichen unabhängigen Verwendungsanspruch (Anspruch 12).

Überdies ist Gegenstand der vorliegenden Erfindung - gemäß einem **sechsten** Aspekt der vorliegenden Erfindung - die Verwendung eines mit einer aluminiumhaltigen und/oder aluminiumlegierten Feuerverzinkungsschicht versehenen Stahlbauteils als Konstruktionsbestandteil von Aufnahmevorrichtungen, insbesondere Einhausungen oder Behältnisse, für Energiespeicher oder Energiewandler, wie Brennstoffzellen, Akkumulatoren, Batterien, galvanische Elemente oder dergleichen, insbesondere für den Automobilbereich, vorzugsweise zur Einhaltung der Erfordernisse von Brandbeständigkeit und/oder Feuerwiderstand, gemäß dem diesbezüglichen unabhängigen Verwendungsanspruch (Anspruch 13).

Gleichermaßen betrifft die vorliegende Erfindung - gemäß einem **siebten** Aspekt der vorliegenden Erfindung - ein Tragwerk, insbesondere Stahlbautragwerk, für ein Bauwerk, insbesondere für ein Gebäude oder Gebäudeteil, gemäß dem diesbezüglichen unabhängigen Anspruch (Anspruch 14).

Darüber hinaus betrifft die vorliegende Erfindung - gemäß einem **achten** Aspekt der vorliegenden Erfindung - ein das erfindungsgemäße Tragwerk ausweisendes Bauwerk, insbesondere Gebäude oder Gebäudeteil, gemäß dem diesbezüglichen unabhängigen Anspruch (Anspruch 15).

Schließlich ist Gegenstand der vorliegenden Erfindung - gemäß einem **neunten** Aspekt der vorliegenden Erfindung - die Verwendung einer aluminiumhaltigen und/oder aluminiumlegierten Feuerverzinkungsschicht zur Erzeugung von Brandbeständigkeit und/oder Feuerwiderstand an eisenbasierten oder eisenhaltigen, insbesondere stahlbasierten oder stahlhaltigen, Gegenständen und/oder zur Ausrüstung eisenbasierten oder eisenhaltigen, insbesondere stahlbasierten oder stahlhaltigen, Gegenständen mit Brandbeständigkeit und/oder Feuerwiderstand gemäß dem diesbezüglichen unabhängigen Anspruch (Anspruch 16).

Es versteht sich bei den nachfolgenden Ausführungen von selbst, dass Ausgestaltungen, Ausführungsformen, Vorteile und dergleichen, welche nachfolgend zu Zwecken der Vermeidung von Wiederholungen nur zu einem Erfindungsaspekt ausgeführt sind, selbstverständlich auch in Bezug auf die übrigen Erfindungsaspekte entsprechend gelten, ohne dass dies einer gesonderten Erwähnung bedarf.

Bei allen nachstehend genannten relativen bzw. prozentualen gewichtsbezogenen Angaben, insbesondere relativen Mengen- oder Gewichtsangaben, ist weiterhin zu beachten, dass diese im Rahmen der vorliegenden Erfindung vom Fachmann derart auszuwählen sind, dass sie sich in der Summe unter Einbeziehung aller Komponenten bzw. Inhaltsstoffe, insbesondere wie nachfolgend definiert, stets zu 100 % bzw. 100 Gew.-% ergänzen bzw. addieren; dies versteht sich aber für den Fachmann von selbst.

Im Übrigen gilt, dass der Fachmann - anwendungsbezogen oder einzelfallbedingt - von den nachfolgend angeführten Bereichsangaben erforderlichenfalls abweichen kann, ohne dass er den Rahmen der vorliegenden Erfindung verlässt.

Zudem gilt, dass alle im Folgenden genannten Werte- bzw. Parameterangaben oder dergleichen grundsätzlich mit genormten bzw. standardisierten oder explizit angegebenen Bestimmungsverfahren oder andernfalls mit dem Fachmann auf diesem Gebiet an sich geläufigen Bestimmungs- bzw. Messmethoden ermittelt bzw. bestimmt werden können.

Dies vorausgeschickt, wird die vorliegende Erfindung nunmehr nachfolgend im Detail erläutert.

Gegenstand der vorliegenden Erfindung - gemäß einem **ersten** Aspekt der vorliegenden Erfindung - ist somit ein Verfahren zur Erzeugung eines brand- und/oder feuerbeständigen Stahlbauteils, insbesondere eines gemäß DIN EN 13501-2: 2016-12 und/oder DIN 4102-2: 1977-09 brand- und/oder feuerbeständigen Stahlbauteils,

wobei das Stahlbauteil mit einer aluminiumhaltigen und/oder aluminiumlegierten Feuerverzinkungsschicht versehen wird und/oder wobei das Stahlbauteil einer Feuerverzinkung unter Verwendung einer aluminiumhaltigen und/oder aluminiumlegierten Zinkschmelze unterzogen wird,

wobei die aluminiumhaltige und/oder aluminiumlegierte Feuerverzinkungsschicht mit einer Schichtdicke im Bereich von 4 $\mu$m bis 25 $\mu$m auf das Stahlbauteil aufgebracht wird und

wobei die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, im Bereich von 4 Gew.-% bis 8 Gew.-% aufweist;

derart und/oder mit der Maßgabe, dass das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C eine Emissivität der Oberfläche $\varepsilon_m$ im Bereich von 0,05 bis 0,60, bestimmt gemäß DIN EN 1993-1-2: 2006-10, aufweist;

wobei die aluminiumhaltige und/oder aluminiumlegierte Feuerverzinkungsschicht die folgende Zusammensetzung aufweist, wobei alle nachfolgend genannten Mengenangaben auf die aluminiumhaltige und/oder aluminiumlegierte Feuerverzinkungsschicht bezogen sind und derart auszuwählen sind, dass insgesamt 100 Gew.-% resultieren:

(i) Zink (Zn) in Mengen von 92 Gew.-% bis 96 Gew.-%,
(ii) Aluminium (Al) in Mengen von 4 Gew.-% bis 8 Gew.-%,
(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%;

mit der Maßgabe, dass der Magnesiumanteil weniger als 0,2 Gew.-%, insbesondere weniger als 0,15 Gew.-%, beträgt.

Denn, wie die Anmelderin nun vollkommen überraschend herausgefunden hat, lässt sich die Brandbeständigkeit und oder der Feuerwiderstand (insbesondere Brandbeständigkeit und oder der Feuerwiderstand gemäß DIN EN 13501-2: 2016-12 und/oder DIN 4102-2: 1977-09) von Stahlbauteilen in effizienter Weise dadurch erreichen, dass die betreffenden Stahlbauteile mit einer aluminiumhaltigen und/oder aluminiumlegierten Feuerverzinkungsschicht versehen werden. Denn in vollkommen unerwarteter Weise wird durch eine solche aluminiumhaltige bzw. aluminiumlegierte Feuerverzinkungsschicht im Brandfall die Bauteilerwärmung signifikant reduziert und verlangsamt (und zwar ohne zusätzliche konstruktive und aufwendige Brandschutzmaßnahmen, wie sie eingangs im Zusammenhang mit dem Stand der Technik geschildert sind).

Besonders überraschend ist dabei, dass die Brandbeständigkeit bzw. der Feuerwiderstand solcher Stahlbauteile, welche mit einer aluminiumhaltigen bzw. aluminiumlegierten Feuerverzinkungsschicht versehen sind, nicht nur eine signifikant verbesserte bzw. erhöhte Brandbeständigkeit bzw. Feuerwiderstand im Vergleich zu unverzinkten Stahlbauteilen aufweisen, sondern auch im Vergleich zu herkömmlich verzinkten Stahlbauteilen (d. h. Stahlbauteilen, welche mit einer herkömmlichen Verzinkungsschicht aus Reinzink, d. h. ohne Aluminiumanteil, versehen sind). Der Begriff des Reinzinks wird im Rahmen der vorliegenden Erfindung verwendet, um Zinkschmelzen bzw. hieraus durch Feuerverzinkung erzeugte Feuerverzinkungsschichten zu bezeichnen, welche aus reinem bzw. quasi-reinem Zink bestehen (d. h. welch ohne relevanten Aluminiumanteil versehen sind bzw. zumindest im Wesentlichen frei, vorzugsweise (vollkommen) frei von Aluminium sind.

Eine derart signifikante Steigerung bzw. Verbesserung der Brandbeständigkeit bzw. des Feuerwiderstands der mit der aluminiumhaltigen bzw. aluminiumlegierten Feuerverzinkungsschicht versehenen Stahlbauteile gemäß der vorliegenden Erfindung war für den Fachmann nicht vorhersehbar und ist daher als vollkommen überraschend zu werten.

Ohne sich auf eine bestimmte Theorie festlegen zu wollen, lässt sich die überraschend gefundene Erzeugung von Brandbeständigkeit und/oder Feuerwiderstand auf Stahlbauteilen infolge der aluminiumhaltigen bzw. aluminiumlegierten Feuerverzinkungsschicht möglicherweise dadurch erklären, dass im Brand- bzw. Feuerfall, insbesondere diffusionsbedingt, eine Umwandlung von Zn/Al-Phasen in Fe/Al-Phasen stattfindet, welche eine verringerte Emissivität im Vergleich zu Zink und/oder Fe/Zn-Phasen aufweisen, und/oder dass im Brandfall temperaturbeständige Aluminiumoxide in der Feuerverzinkungsschicht ausgebildet werden, wodurch die Oberfläche des mit einer solchen aluminiumhaltigen bzw. aluminiumlegierten Feuerverzinkungsschicht versehenen Stahlbauteils in effizienter Weise von dem Brand bzw. Feuer bzw. vor den hohen Temperaturen wirksam abgeschirmt wird, so dass eine signifikant abgeschwächte und/oder verzögerte Erwärmung des Bauteils eintritt.

Wie die Anmelderin gleichermaßen überraschend herausgefunden hat, lässt sich infolge der Anwesenheit von Aluminium die Brandbeständigkeit bzw. der Feuerwiderstand nicht nur gegenüber unverzinkten Stahlbauteilen, sondern auch im Vergleich zu herkömmlich verzinkten Stahlbauteilen mit einer auf reinem Zink basierenden Feuerverzinkungsschicht signifikant steigern bzw. verbessern, wie nachfolgend noch im Detail ausgeführt wird. Auch können im Vergleich zu herkömmlich verzinkten Stahlbauteilen infolge des Aluminiumanteils der Feuerverzinkungsschicht deutlich geringere Schichtdicken realisiert werden (einhergehend mit einer signifikanten Ressourcen- und Gewichtseinsparung).

Darüber hinaus gewährleistet die aluminiumhaltige bzw. aluminiumlegierte Feuerverzinkungsschicht gleichermaßen einen effizienten Korrosionsschutz, welcher im Vergleich zu herkömmlich verzinkten Stahlbauteilen ebenfalls verbessert ist (zumal bei gleichzeitig geringeren Schichtdicken der Feuerverzinkungsschicht).

Durch das erfindungsgemäße Konzept kann die Brandbeständigkeit bzw. der Feuerwiderstand von Stahlbauteilen in einem solchen Maße erzeugt bzw. bewirkt werden, dass keine weiteren zusätzlichen konstruktiven Brandschutzmaßnahmen erforderlich sind, wie sie eingangs im Zusammenhang mit der Schilderung des Standes der Technik als nachteilig genannt und geschildert worden sind (wie z. B. Brandschutzbeschichtungen, Brandschutzverkleidungen etc.).

Der vorliegende Lösungsansatz der Erfindung basiert insbesondere maßgeblich auf der Verwendung von aluminiumlegierten Zinkschmelzen insbesondere zur Stückverzinkung von Konstruktionselementen aus Stahl zum Zwecke des Brandschutzes und/oder des kombinierten Korrosions- und Brandschutzes derselben. Insbesondere ab einem Gehalt von 250 ppm bzw. 500 ppm Aluminium in der Zinkschmelze (und folglich auch in den resultierenden Feuerverzinkungsschichten) entstehen Zinküberzüge, welche sich gegenüber aluminiumfreien Zinküberzügen unter Einwirkung von thermischen Belastungen, wie sie typischerweise im Brandfall auftreten, deutlich günstiger verhalten.

Insbesondere wird mit dem neuen erfindungsgemäßen Lösungsansatz eine Vielzahl von Vorteilen und Besonderheiten erzielt, welche zuvor teilweise bereits angeführt worden sind.

In nicht-beschränkender Weise ist auch noch auf folgende Vorteile und Besonderheiten der vorliegenden Erfindung hinzuweisen, welche - zusätzlich zu den bereits oben beschriebenen Vorteilen herkömmlicher verzinkter Bauteile - eine signifikante Verbesserung gegenüber dem Stand der Technik darstellen:

Mit zunehmendem Al-Gehalt in der Zinkschmelze (und damit im Zinküberzug) verbleibt die Emissivität $\varepsilon$, welche ein Maß für das Verhältnis von absorbierter zu reflektierter Wärmestrahlung darstellt (mit $\varepsilon = 0$ = vollständige Reflektion und $\varepsilon = 1$ = vollständige Absorption), bis zu höheren Temperaturen auf niedrigem Niveau, wodurch die Aufwärmung des derart verzinkten Bauteils im Vergleich zu einem in einer Al-freien bzw. quasi Al-freien Zinkschmelze verzinkten Bauteil verlangsamt wird.

Das Niveau des Anstiegs der Emissivität bei Einsetzen von temperaturbedingten Diffusionsprozessen unter Brandlast liegt ebenfalls niedriger bei Verwendung von Al-legierten Zinkschmelzen (wiederum im Vergleich zu einem in einer Al-freien bzw. quasi Al-freien Zinkschmelze verzinkten Bauteil), wodurch ebenfalls die Aufwärmung des Bauteils verlangsamt wird.

Durch die erfindungsgemäß erzielte Reduzierung der Emissivität stellt sich somit im Vergleich zu einem in einer Al-freien bzw. quasi Al-freien Zinkschmelze verzinkten Bauteil nach einer definierten Branddauer eine geringere Bauteiltemperatur ein, was mit einer höheren Tragfähigkeit einhergeht. Alternativ kann bei Erzielung der gleichen Bauteiltemperatur, d. h. der gleichen Tragfähigkeit, der Querschnitt des Stahlprofils reduziert werden, was wiederum mit einer signifikanten Einsparung an notwendiger Stahlmasse einhergeht.

Die Verwendung von Al-legierten Zinkschmelzen führt zudem zu einer Reduzierung der Zinkschichtdicke, insbesondere ab Gehalten von 1.200 ppm Al in der Zinkschmelze, aber auch bereits unterhalb dieses Wertes. Hierdurch können für Anwendungen, bei welchen keine oder nur geringe Korrosionsanforderungen an die Stahlkonstruktionen gestellt werden, Wie z. B. bei einer Korrosivitätskategorie C1 oder C2 gemäß DIN EN ISO 12944, deutlich dünnere Zinkschichten appliziert werden, wodurch die Material- und Bauteileffizienz ebenfalls gesteigert wird.

Die Verwendung von Al-legierten Zinkschmelzen führt, insbesondere ab Gehalten > 1.200 ppm Al in der Zinkschmelze (aber auch bereits unterhalb dieses Wertes), auch dazu, dass die Optik des Zinküberzugs zunehmend unabhängig von der Stahlchemie wird. Ab einem Al-Gehalt von ca. 1.200 ppm können somit alle Stähle der Kategorie A bis D gemäß DIN EN ISO 14713-2 eingesetzt werden. Die bisher im Stand der Technik bestehende Beschränkung auf die Kategorien A und B, welche für die Erzielung einer reduzierten Emissivität bis 500 °C gemäß dem Stand der Technik erforderlich ist, besteht im Rahmen der vorliegenden Erfindung nicht mehr.

Die Verwendung von dünnschichtigen, insbesondere transparenten Nachbehandlungsbeschichtungen, z. B. einer Passivierung und/oder einer Versiegelung, vorzugsweise mit einer Schichtdicke im Bereich von einigen Nanometern bis weniger Mikrometer, ist im Rahmen der vorliegenden Erfindung in gleicher Weise möglich und ist in Bezug auf das zu erzielende Ergebnis sogar vorteilhaft.

Die vorliegenden Erfindung stellt somit - wie zuvor geschildert - ein Verfahren zur Erzeugung eines brand- und/oder feuerbeständigen Stahlbauteils, insbesondere eines gemäß DIN EN 13501-2: 2016-12 und/oder DIN 4102-2: 1977-09 brand- und/oder feuerbeständigen Stahlbauteils,

wobei das Stahlbauteil mit einer aluminiumhaltigen und/oder aluminiumlegierten Feuerverzinkungsschicht versehen wird und/oder wobei das Stahlbauteil einer Feuerverzinkung unter Verwendung einer aluminiumhaltigen und/oder aluminiumlegierten Zinkschmelze unterzogen wird,

wobei die aluminiumhaltige und/oder aluminiumlegierte Feuerverzinkungsschicht mit einer Schichtdicke im Bereich von 4 $\mu$m bis 25 $\mu$m auf das Stahlbauteil aufgebracht wird und

wobei die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, im Bereich von 4 Gew.-% bis 8 Gew.-% aufweist;

derart und/oder mit der Maßgabe, dass das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C eine Emissivität der Oberfläche $\varepsilon_m$ im Bereich von 0,05 bis 0,60, bestimmt gemäß DIN EN 1993-1-2: 2006-10, aufweist;

wobei die aluminiumhaltige und/oder aluminiumlegierte Feuerverzinkungsschicht die folgende Zusammensetzung aufweist, wobei alle nachfolgend genannten Mengenangaben auf die aluminiumhaltige und/oder aluminiumlegierte Feuerverzinkungsschicht bezogen sind und derart auszuwählen sind, dass insgesamt 100 Gew.-% resultieren:

(i) Zink (Zn) in Mengen von 92 Gew.-% bis 96 Gew.-%,

(ii) Aluminium (Al) in Mengen von 4 Gew.-% bis 8 Gew.-%,

(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%;

mit der Maßgabe, dass der Magnesiumanteil weniger als 0,2 Gew.-%, insbesondere weniger als 0,15 Gew.-%, beträgt.

Die Begriffe der Brandbeständigkeit und Feuerwiderstand, wie sie im Rahmen der vorliegenden Erfindung verwendet werden, sind insbesondere als Synonyme zu verstehen und werden in Übereinstimmung mit den einschlägigen Standardvorschriften und Normen verwendet, insbesondere DIN EN 13501-2: 2016-12 und DIN 4102-2: 1977-09 (aber auch anderen einschlägigen Normen und Standardvorschriften, wie z. B. DIN EN 1993-1-2: 2006-10 und DIN EN 1991-1-2/NA: 2015-09).

Als Maß für die Erwärmung des Stahlbauteils im Brand- bzw. Feuerfall kann somit die sogenannte Emissivität (Emissionsgrad) der Oberfläche $\varepsilon_m$ herangezogen werden.

Die Emissivität (Emissionsgrad) der Oberfläche $\varepsilon_m$ bezeichnet im Rahmen der vorliegenden Erfindung die Emissivität der Oberfläche $\varepsilon_m$ gemäß DIN EN 1993-1-2: 2006-10.

Der Emissionsgrad (synonym auch als Emissivität bezeichnet) eines Körpers gibt an, wie viel Strahlung der Körper im Vergleich zu einem idealen Wärmestrahler (d. h. einem schwarzen Körper) abgibt; folglich liegt der Wert für die Emissivität stets zwischen Null (keine Absorption) und eins (100 % Absorption). Die Emissivität ist also ein Maß dafür, wie stark ein Material oder ein Körper (z. B. ein Stahlbauteil im Fall der vorliegenden Erfindung) Wärmestrahlung mit seiner Umgebung austauscht.

Die Emissivität bzw. der Emissionsgrad $\varepsilon$ ist eine dimensionslose physikalische Größe, welche also einen Maßstab dafür liefert, wie stark ein Material bzw. dessen Oberfläche Wärmestrahlung an seine Umgebung abgibt; denn den einschlägigen Eurocodes liegt das Kirchhoffsche Gesetz zugrunde, welches besagt, dass ein guter Strahler auch ein guter Absorber ist, und welchem damit die Näherung zugrundeliegt, dass der Absorptionsgrad $\alpha$ dem Emissionsgrad $\varepsilon$ eines Körpers entspricht. Der Emissionsgrad realer Objekte und im Speziellen von metallischen Oberflächen, wie im Fall der vorliegenden Erfindung von Stahlbauteilen, ist von vielen verschiedenen Parametern abhängig, wie der Oberflächenbeschaffenheit, der Bauteiltemperatur, dem Wellenlängenbereich und dem Abstrahlwinkel und ist folglich eine stark variable physikalische Größe. Da der Parameter der Emissivität $\varepsilon$ diese Einflussgrößen in einem einzigen Parameter vereint, ist dieser Parameter im Fall der vorliegenden Erfindung besonders geeignet, um die Brandbeständigkeit bzw. den Feuerwiderstand der erfindungsgemäß konzipierten Stahlbauteile zu charakterisieren.

Der Parameter der Emissivität (Emissionsgrad) der Oberfläche $\varepsilon_m$, wie er erfindungsgemäß verwendet wird, wird in Übereinstimmung mit der vorgenannten einschlägigen Norm DIN EN 1993-1-2: 2006-10 verwendet.

Gemäß DIN EN 1993-1-2: 2006-10 ist die Emissivität einer unverzinkten Baustahloberfläche mit 0,70 anzusetzen. Im Vergleich hierzu ist für herkömmlich verzinkten Baustahl (d. h. Baustahl, welcher mit einer Feuerverzinkungsschicht aus Reinzink versehen ist) bei Temperaturen von bis zu 500 °C eine Emissivität (Emissionsgrad) der Oberfläche $\varepsilon_m$ von etwa 0,35 anzusetzen, aber bei Temperaturen ab 500 °C eine Emissivität (Emissionsgrad) der Oberfläche $\varepsilon_m$ von 0,70 und mehr (d. h. wie von unverzinktem Baustahl) (vgl. hierzu auch zweiter Entwurf des Projektteams SC3.T6 des Normungsgremiums CEN/TC 250/SC 3/WG 2 N 82 zur Aktualisierung der EN 1993-1-2 aus dem Jahr 2019).

In vollkommen überraschender Weise wurde im Rahmen der vorliegenden Erfindung gefunden, dass infolge der Inkorporierung von Aluminium in die Feuerverzinkungsschicht bzw. infolge der Legierung mit Aluminium in Bezug auf die Feuerverzinkungsschicht die Emissivität (Emissionsgrad) der Oberfläche $\varepsilon_m$ auch bei Temperaturen oberhalb von 500 °C signifikant unterhalb von 0,70 abgesenkt werden kann (was bedeutet, dass im Brand- bzw. Feuerfall das betreffende Stahlbauteil eine signifikant verringerte und verzögerte Erwärmung zeigt; vgl. hierzu auch vorstehende Ausführungen).

Erfindungsgemäß bedeutet die Formulierung, wonach eine Emissivität (Emissionsgrad) der Oberfläche $\varepsilon_m$ unterhalb von 0,7 vorliegt, also $\varepsilon_m < 0,7$, wobei also der Wert von 0,7 selbst ausgenommen ist (daher die Formulierung "unterhalb").

Der temperaturabhängige Parameter der Emissivität (Emissionsgrad) $\varepsilon_m$ von Stahloberflächen kann experimentell durch dem Fachmann an sich bekannte routinemäßige Methoden und Messverfahren bestimmt werden (insbesondere unter Verwendung von Wärmesensoren, insbesondere Infrarot-Sensoren, und/oder Thermoelementen). Im Rahmen der Erfindung besonders bewährt hat sich in diesem Zusammenhang insbesondere die Bestimmung nach dem sogenannten Emissivity-Performance-Test, wie er im Detail beschrieben ist in: C. Gaigl und M. Mensinger, Technical Report "Thermal impact on HDG construction", Technische Universität München, Februar 2018, sowie M. Mensinger und C. Gaigl, Aufsatz "Feuerwiderstand verzinkter Stahlkonstruktionen", Stahlbau, Vol. 88, Seiten 3 bis 10, Januar 2019. Dieses Bestimmungsverfahren für die Emissivität (Emissionsgrad) der Oberfläche $\varepsilon_m$ wird auch im Rahmen der vorliegenden Erfindung, insbesondere auch im Rahmen der erfindungsgemäßen Ausführungsbeispielen, verwendet. Diesem Bestimmungsverfahren liegt insbesondere die experimentelle Erfassung des Temperaturverlaufs des Stahlbauteils im Brand- bzw. Feuerfall zugrunde (z. B. gemäß DIN EN 1993-1-2: 2006-10), wobei das betreffende Stahlbauteil bzw. der betreffende Probekörper kontinuierlich bzw. zunehmend thermisch belastet wird. Hieraus kann dann unter Anwendung des Planckschen Strahlungsgesetzes der Emissionsgrad ermittelt bzw. errechnet werden.

Zur Beurteilung von innenliegenden Stahlkonstruktionen steht im Allgemeinen die sogenannte Einheitstemperaturzeitkurve (ETK) als thermische Einwirkung zur Verfügung. Je nach vorliegender Bauordnung können aber auch Naturbrandmodelle verwendet werden. Nach DIN EN 1991-1-2 ist die ETK als thermische Beanspruchung bzw. Belastung wie folgt definiert:

$$T = 345 \log_{10} (8t + 1) + 20 \ [°C]$$

mit:

$T$ = Brandraumtemperatur [°C]; $t$ = Zeit [min]

Unabhängig von der thermischen Einwirkung erfolgt der Wärmetransport im Brandfall durch Energieaustausch zwischen mehreren Systemen. Dabei wird die thermische Energie immer vom höheren zum niedrigeren Energieniveau transportiert. Haben Bauteile keinen direkten Kontakt, kann dies durch zwei unterschiedliche Mechanismen erfolgen, nämlich durch Konvektion und/oder durch elektromagnetische Strahlung. Die Temperaturerhöhung $\Delta\theta_{a,t}$ eines ungeschützten Stahlbauteils lässt sich dabei während eines Zeitintervalls $\Delta t < 5$ [sek] nach folgender Gleichung aus (1) berechnen:

$$\Delta\theta_{a,t} = k_{sh} \cdot \frac{A_m/V}{c_a \cdot p_a} \cdot \dot{h}_{net} \cdot \Delta t \qquad (1)$$

Neben Faktoren, wie dem Korrekturfaktor für Abschattungseffekte $k_{sh}$ dem Profilfaktor $A_m/V$ sowie der spezifischen Wärmekapazität $c_a$ und der Rohdichte von Stahl $p_a$ findet sich in der Bauteilerwärmung der Nettowärmestrom $\dot{h}_{net}$ wieder. Letzterer setzt sich aus den angesprochenen beiden Teilen der Konvektion $\dot{h}_{net,c}$ sowie der Strahlung $\dot{h}_{net,r}$ zusammen, vgl. nachfolgende Gleichungen (2) bis (4):

$$\dot{h}_{net} = \dot{h}_{net,c} + \dot{h}_{net,r} \qquad (2)$$

$$\dot{h}_{net,c} = \alpha_c \cdot (\theta_g - \theta_a) \qquad (3)$$

$$\dot{h}_{net,r} = \phi \cdot \varepsilon_m \cdot \varepsilon_f \cdot \sigma \cdot \left[ (\theta_g + 273)^4 - (\theta_a + 273)^4 \right] \qquad (4)$$

Wie den Formeln (2) bis (4) zu entnehmen ist, trägt die Wärmestrahlung gerade im Bereich von großen Temperaturdifferenzen zwischen dem Bauteil und der Umgebung einen deutlich größeren Anteil zur Erwärmung der Bauteile bei. Die Wärmeübertragung aus Strahlung wird dabei maßgeblich durch die Oberfläche der Bauteile beeinflusst, so dass gerade hier ein Effekt aufgrund einer Feuerverzinkung eintritt.

Beide Emissionsgrade, d. h. sowohl der Emissionsgrad der Bauteiloberfläche $\varepsilon_m$ als auch der Emissionsgrad des Brandraums $\varepsilon_f$, beeinflussen den Strahlungsanteil des Wärmestroms. Gemäß der Annahme $\varepsilon_f = 1,0$ der relevanten Eurocodes (d. h. DIN EN 1993-1-2, Eurocode 3: Bemessung und Konstruktion von Stahlbauten, Teil 1-2: Allgemeine Regeln, Tragwerksbemessung für den Brandfall, sowie DIN EN 1994-1-2, Eurocode 4: Bemessung und Konstruktion von Verbundtragwerken aus Stahl und Beton, Teil 1-2: Allgemeine Regeln, Tragwerksbemessung für den Brandfall) werden dem Emissionsgrad der Umgebung die Eigenschaften eines idealen schwarzen Körpers zugewiesen. Für Baustahl wird hingegen, unabhängig dessen tatsächlicher Oberflächenbeschaffenheit, ein Emissionsgrad von $\varepsilon_m = 0,70$ angenommen; dies entspricht einer Wärmeaufnahme von 70 % der eingebrachten Strahlungsenergie.

Die erfindungsgemäße Verwendung einer aluminiumhaltigen bzw. aluminiumlegierten Feuerverzinkungsschicht auf Stahlbauteilen führt also -wie zuvor geschildert - im Brand- bzw. Feuerfall zu einer signifikanten Absenkung des Emissionsgrads (Emissivität) an der Oberfläche $\varepsilon_m$, insbesondere im Vergleich zu entsprechenden unverzinkten Stahlbauteilen, aber auch im Vergleich zu herkömmlich verzinkten (d. h. mit einer Feuerverzinkungsschicht aus Reinzink versehenen) Stahlbauteilen. Auf diese Weise können im Rahmen der vorliegenden Erfindung Brandschutzanforderungen der einschlägigen Normen und Standardvorschriften, insbesondere DIN EN 13501-2: 2016-12 bzw. DIN 4102-2: 1977-09, auch ohne zusätzliche bzw. weitere konstruktive Brandschutzmaßnahmen erreicht werden.

Die im Rahmen der vorliegenden Erfindung zum Einsatz kommenden aluminiumhaltigen bzw. aluminiumlegierten Feuerverzinkungsschichten und ihre Erzeugung bzw. Herstellung sind dem Fachmann aus dem Stand der Technik als solche hinlänglich bekannt, so dass es diesbezüglich keiner weiterführenden Ausführungen bedarf. Bislang sind im Stand der Technik derartige aluminiumhaltigen bzw. aluminiumlegierten Feuerverzinkungsschicht jedoch nur für den Korrosionsschutz vorgesehen worden, d. h. eine Einflussnahme in Bezug auf die Verbesserung der Brandbeständigkeit bzw. des Feuerwiderstands ist bislang im Stand der Technik nicht erkannt und folglich auch nicht realisiert worden. Diese Erkenntnis und technische Lehre geht - in vollkommen überraschender Weise - erst auf die Anmelderin der vorliegenden Erfindung zurück.

Im Ergebnis beruht daher die vorliegende Erfindung auf der überraschenden Erkenntnis der Anmelderin, wonach Brandbeständigkeit und/oder Feuerwiderstand, insbesondere Brandbeständigkeit und/oder Feuerwiderstand gemäß DIN EN 13501-2: 2016-12 und/oder DIN 4102-2: 1977-09, an einem Stahlbauteil erzeugt werden kann bzw. ein Stahlbauteil mit Brandbeständigkeit und/oder Feuerwiderstand, insbesondere mit Brandbeständigkeit und/oder Feuerwiderstand gemäß DIN EN 13501-2: 2016-12 und/oder DIN 4102-2: 1977-09, ausgerüstet werden kann, indem das Stahlbauteil mit einer aluminiumhaltigen und/oder aluminiumlegierten Feuerverzinkungsschicht versehen wird und/oder indem das Stahlbauteil einer Feuerverzinkung (Schmelztauchverzinkung) unter Verwendung einer aluminiumhaltigen und/oder aluminiumlegierten Zinkschmelze unterzogen wird, derart und/oder mit der Maßgabe, dass das mit der aluminiumhaltigen und/oder aluminiumlegierten Feuerverzinkungsschicht versehene Stahlbauteil bzw. das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C, bevorzugt bei Temperaturen im Bereich von 500 °C bis 800 °C, eine Emissivität (Emissionsgrad) der Oberfläche $\varepsilon_m$ im Bereich von 0,05 bis 0,60, ganz besonders bevorzugt im Bereich von 0,05 bis 0,55, aufweist.

Um den erfindungsgemäß gewünschten Effekt der Brandbeständigkeit bzw. des Feuerwiderstands zu erzielen, sollten gewisse Mindestdicken der aluminiumhaltigen bzw. aluminiumlegierten Feuerverzinkungsschicht vorgesehen sein; andererseits sollten aus Gründen der Nachhaltigkeit, der Materialersparnis und insbesondere des Stahlbauteilgewichts die Schichtdicke eine gewisse Obergrenze nicht überschreiten.

In der vorliegenden Erfindung wird die aluminiumhaltige bzw. aluminiumlegierte Feuerverzinkungsschicht mit einer Schichtdicke im Bereich von 4 $\mu$m bis 25 $\mu$m auf das Stahlbauteil aufgebracht.

Insbesondere ist es erfindungsgemäß vorgesehen, dass die aluminiumhaltige und/oder aluminiumlegierte Feuerverzinkungsschicht mit einer Schichtdicke von mindestens 4 $\mu$m auf das Stahlbauteil aufgebracht wird.

Gleichermaßen ist es erfindungsgemäß vorgesehen, dass die aluminiumhaltige und/oder aluminiumlegierte Feuerverzinkungsschicht mit einer Schichtdicke von bis zu 25 $\mu$m auf das Stahlbauteil aufgebracht wird.

Mit den vorgenannten Schichtdicken lassen sich erfindungsgemäß besonders gute Ergebnisse erzielen.

In gleicher Weise sollte der Aluminiumanteil bzw. Aluminiumgehalt der erfindungsgemäß eingesetzten aluminiumhaltigen bzw. aluminiumlegierten Feuerverzinkungsschicht in gewissen Bereichen variieren, um einerseits eine ausreichende Brandbeständigkeit bzw. einen ausreichenden Feuerwiderstand zu gewährleisten und andererseits Aspekte des Materialgewichts, der Materialökonomie und der Nachhaltigkeit zu berücksichtigen bzw. einzuhalten.

In diesem Zusammenhang weist die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, bzw. die (zur Erzeugung der aluminiumhaltigen und/oder aluminiumlegierten Feuerverzinkungsschicht eingesetzte) aluminiumhaltige und/oder aluminiumlegierte Zinkschmelze einen Aluminiumanteil, bezogen auf die aluminiumhaltige und/oder aluminiumlegierte Zinkschmelze, im Bereich von 4 Gew.-% bis 8 Gew.-%, auf.

In diesem Zusammenhang ist es erfindungsgemäß insbesondere vorgesehen, dass die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, bzw. die (zur Erzeugung der aluminiumhaltigen und/oder aluminiumlegierten Feuerverzinkungsschicht eingesetzte) aluminiumhaltige und/oder aluminiumlegierte Zinkschmelze einen Aluminiumanteil, bezogen auf die aluminiumhaltige und/oder aluminiumlegierte Zinkschmelze, von mindestens 4 Gew.-% aufweist.

Weiterhin hat es sich in diesem Zusammenhang im Rahmen der vorliegenden Erfindung insbesondere vorgesehen, dass die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, bzw. die (zur Erzeugung der aluminiumhaltigen und/oder aluminiumlegierten Feuerverzinkungsschicht eingesetzte) aluminiumhaltige und/oder aluminiumlegierte Zinkschmelze einen Aluminiumanteil, bezogen auf die aluminiumhaltige und/oder aluminiumlegierte Zinkschmelze, von bis zu 8 Gew.-% aufweist.

Was die Zusammensetzung der erfindungsgemäß auf dem brandbeständigem bzw. feuerbeständigem Stahlbauteil aufgebrachten bzw. angebrachten aluminiumhaltigen und/oder aluminiumlegierten Feuerverzinkungsschicht bzw. der (zur Erzeugung der aluminiumhaltigen und/oder aluminiumlegierten Feuerverzinkungsschicht eingesetzten) aluminiumhaltigen und/oder aluminiumlegierten Zinkschmelze anbelangt, so kann diese Zusammensetzung in gewissen Bereichen variieren, wobei durch den zuvor aufgeführten Aluminiumanteil gewisse Vorgaben in Bezug auf die Gesamtzusammensetzung der aluminiumlegierten bzw. aluminiumhaltigen Feuerverzinkungsschicht bzw. der aluminiumlegierten bzw. aluminiumhaltigen Zinkschmelze gegeben sind.

Im Rahmen der vorliegenden Erfindung weist die aluminiumhaltige und/oder aluminiumlegierte Feuerverzinkungsschicht bzw. die (zur Erzeugung der aluminiumhaltigen und/oder aluminiumlegierten Feuerverzinkungsschicht eingesetzte) aluminiumhaltige und/oder aluminiumlegierte Zinkschmelze die folgende Zusammensetzung auf, wobei alle nachfolgend genannten Mengenangaben im Fall der aluminiumhaltigen und/oder aluminiumlegierten Feuerverzinkungsschicht auf die aluminiumhaltige und/oder aluminiumlegierte Feuerverzinkungsschicht bezogen sind bzw. im Fall der (zur Erzeugung der aluminiumhaltigen und/oder aluminiumlegierten Feuerverzinkungsschicht eingesetzten) aluminiumhaltigen und/oder aluminiumlegierten Zinkschmelze auf die aluminiumhaltige und/oder aluminiumlegierte Zinkschmelze bezogen sind und derart auszuwählen sind, dass insgesamt 100 Gew.-% resultieren:

(i) Zink (Zn) in Mengen im Bereich von 92 Gew.-% bis 96 Gew.-%,

(ii) Aluminium (Al) in Mengen im Bereich von 4 Gew.-% bis 8 Gew.-%,

(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%, insbesondere im Bereich von 0,001 Gew.-% bis 9 Gew.-%, vorzugsweise im Bereich von 0,01 Gew.-% bis 8 Gew.-%, bevorzugt im Bereich von 0,02 Gew.-% bis 6 Gew.-%, besonders bevorzugt im Bereich von 0,05 Gew.-% bis 5 Gew.-%, ganz besonders bevorzugt im Bereich von 0,1 Gew.-% bis 4 Gew.-%, noch mehr bevorzugt im Bereich von 0,2 Gew.-% bis 3,5 Gew.-%, weiter bevorzugt im Bereich von 0,3 Gew.-% bis 3 Gew.-%, noch weiter bevorzugt im Bereich von 0,4 Gew.-% bis 2 Gew.-%, am meisten bevorzugt im Bereich von 0,5 Gew.-% bis 1 Gew.-%;
mit der Maßgabe, dass der Magnesiumanteil weniger als 0,2 Gew.-%, insbesondere weniger als 0,15 Gew.-%, beträgt.

Die zuvor beschriebene Zusammensetzung und/oder Ausbildung der aluminiumhaltigen und/oder aluminiumlegierten Feuerverzinkungsschicht, insbesondere der Aluminiumgehalt der aluminiumhaltigen und/oder aluminiumlegierten Feuerverzinkungsschicht, kann im Rahmen der vorliegenden Erfindung mittels der bei der Feuerverzinkung eingesetzten aluminiumhaltigen und/oder aluminiumlegierten Zinkschmelze eingestellt und/oder gesteuert werden. Dies ist dem Fachmann als solches bekannt, so dass es keiner weiterführender Ausführungen zu diesem Aspekt bedarf.

Im Rahmen der vorliegenden Erfindung kann es insbesondere vorgesehen sein, dass die Brandbeständigkeit und/oder der Feuerwiderstand mittels der Dicke und Zusammensetzung und/oder Ausbildung der aluminiumhaltigen und/oder aluminiumlegierten Feuerverzinkungsschicht, insbesondere mittels des Aluminiumgehalts der aluminiumhaltigen und/oder aluminiumlegierten Feuerverzinkungsschicht, eingestellt und/oder gesteuert wird.

Insbesondere kann in diesem Zusammenhang mit Erhöhung des Aluminiumgehalts der aluminiumhaltigen und/oder aluminiumlegierten Feuerverzinkungsschicht die Brandbeständigkeit und/oder der Feuerwiderstand erhöht werden und/oder kann mit Erhöhung der Schichtdicke der aluminiumhaltigen und/oder aluminiumlegierten Feuerverzinkungsschicht die Brandbeständigkeit und/oder der Feuerwiderstand erhöht werden.

Gemäß der vorliegenden Erfindung wird die aluminiumhaltige und/oder aluminiumlegierte Feuerverzinkungsschicht mit einer Schichtdicke im Bereich von 4 $\mu$m bis 25 $\mu$m auf das Stahlbauteil aufgebracht.

In diesem Zusammenhang ist es vorgesehen, dass die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, im Bereich von 4 Gew.-% bis 8 Gew.-% aufweist bzw. dass die (zur Erzeugung der aluminiumhaltigen und/oder aluminiumlegierten Feuerverzinkungsschicht eingesetzte) aluminiumhaltige und/oder aluminiumlegierte Zinkschmelze einen Aluminiumanteil, bezogen auf die aluminiumhaltige und/oder aluminiumlegierte Zinkschmelze, im Bereich von 4 Gew.-% bis 8 Gew.-% aufweist.

Ebenfalls ist es erfindungsgemäß vorgesehen, dass die aluminiumhaltige und/oder aluminiumlegierte Feuerverzinkungsschicht bzw. die (zur Erzeugung der aluminiumhaltigen und/oder aluminiumlegierten Feuerverzinkungsschicht eingesetzte) aluminiumhaltige und/oder aluminiumlegierte Zinkschmelze die folgende Zusammensetzung aufweist, wobei alle nachfolgend genannten Mengenangaben im Fall der aluminiumhaltigen und/oder aluminiumlegierten Feuerverzinkungsschicht auf die aluminiumhaltige und/oder aluminiumlegierte Feuerverzinkungsschicht bezogen sind bzw. im Fall der (zur Erzeugung der aluminiumhaltigen und/oder aluminiumlegierten Feuerverzinkungsschicht eingesetzten) aluminiumhaltigen und/oder aluminiumlegierten Zinkschmelze auf die aluminiumhaltige und/oder aluminiumlegierte Zinkschmelze bezogen sind und derart auszuwählen sind, dass insgesamt 100 Gew.-% resultieren:

(i) Zink (Zn) in Mengen von 92 Gew.-% bis 96 Gew.-%,
(ii) Aluminium (Al) in Mengen von 4 Gew.-% bis 8 Gew.-%,
(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%.

Gemäß dem erfindungsgemäßen Verfahren betrifft die vorliegende Erfindung ein Verfahren zur Erzeugung von Brandbeständigkeit und/oder Feuerwiderstand, insbesondere Brandbeständigkeit und/oder Feuerwiderstand gemäß DIN EN 13501-2: 2016-12 und/oder DIN 4102-2: 1977-09, an einem Stahlbauteil und/oder zur Ausrüstung eines Stahlbauteils mit Brandbeständigkeit und/oder Feuerwiderstand, insbesondere mit Brandbeständigkeit und/oder Feuerwiderstand gemäß DIN EN 13501-2: 2016-12 und/oder DIN 4102-2: 1977-09, insbesondere Verfahren zur Erzeugung eines brand- und/oder feuerbeständigen Stahlbauteils, insbesondere eines gemäß DIN EN 13501-2: 2016-12 und/oder DIN 4102-2: 1977-09 brand- und/oder feuerbeständigen Stahlbauteils, insbesondere ein wie zuvor beschriebenes Verfahren,

wobei das Stahlbauteil mit einer aluminiumhaltigen und/oder aluminiumlegierten Feuerverzinkungsschicht versehen wird und/oder wobei das Stahlbauteil einer Feuerverzinkung (Schmelztauchverzinkung) unter Verwendung einer aluminiumhaltigen und/oder aluminiumlegierten Zinkschmelze unterzogen wird,

wobei die aluminiumhaltige und/oder aluminiumlegierte Feuerverzinkungsschicht mit einer Schichtdicke im Bereich von 4 $\mu$m bis 25 $\mu$m auf das Stahlbauteil aufgebracht wird und

wobei die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, im Bereich von 4 Gew.-% bis 8 Gew.-% aufweist;

derart und/oder mit der Maßgabe, dass das mit der aluminiumhaltigen und/oder aluminiumlegierten Feuerverzinkungsschicht versehene Stahlbauteil bzw. das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C eine Emissivität (Emissionsgrad) der Oberfläche $\varepsilon_m$ im Bereich von 0,05 bis 0,60 aufweist.

Dabei weist die aluminiumhaltige und/oder aluminiumlegierte Feuerverzinkungsschicht die folgende Zusammensetzung auf, wobei alle nachfolgend genannten Mengenangaben auf die aluminiumhaltige und/oder aluminiumlegierte Feuerverzinkungsschicht bezogen sind und derart auszuwählen sind, dass insgesamt 100 Gew.-% resultieren:

(i) Zink (Zn) in Mengen von 92 Gew.-% bis 96 Gew.-%,
(ii) Aluminium (Al) in Mengen von 4 Gew.-% bis 8 Gew.-%,
(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%; mit der Maßgabe, dass der Magnesiumanteil weniger als 0,2 Gew.-%, insbesondere weniger als 0,15 Gew.-%, beträgt.

Dabei ist es weiterhin vorgesehen, dass die aluminiumhaltige und/oder aluminiumlegierte Feuerverzinkungsschicht, bezogen auf die aluminiumhaltige und/oder aluminiumlegierte Feuerverzinkungsschicht, einen Anteil von gegebenenfalls vorhandenem Magnesium von weniger als 0,2 Gew.-%, insbesondere weniger als 0,15 Gew.-%, aufweist.

Gemäß dem erfindungsgemäßen Verfahren betrifft die vorliegende Erfindung ein Verfahren zur Erzeugung von Brandbeständigkeit und/oder Feuerwiderstand, insbesondere Brandbeständigkeit und/oder Feuerwiderstand gemäß DIN EN 13501-2: 2016-12 und/oder DIN 4102-2: 1977-09, an einem Stahlbauteil und/oder zur Ausrüstung eines Stahlbauteils mit Brandbeständigkeit und/oder Feuerwiderstand, insbesondere mit Brandbeständigkeit und/oder Feuerwiderstand gemäß DIN EN 13501-2: 2016-12 und/oder DIN 4102-2: 1977-09, insbesondere Verfahren zur Erzeugung eines brand- und/oder feuerbeständigen Stahlbauteils, insbesondere eines gemäß DIN EN 13501-2: 2016-12 und/oder DIN 4102-2: 1977-09 brand- und/oder feuerbeständigen Stahlbauteils, insbesondere ein wie zuvor beschriebenes Verfahren,

wobei das Stahlbauteil mit einer aluminiumhaltigen und/oder aluminiumlegierten Feuerverzinkungsschicht versehen wird und/oder wobei das Stahlbauteil einer Feuerverzinkung (Schmelztauchverzinkung) unter Verwendung einer aluminiumhaltigen und/oder aluminiumlegierten Zinkschmelze unterzogen wird,

wobei die aluminiumhaltige und/oder aluminiumlegierte Feuerverzinkungsschicht mit einer Schichtdicke im Bereich von 4 $\mu$m bis 25 $\mu$m auf das Stahlbauteil aufgebracht wird und

wobei die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, im Bereich von 4 Gew.-% bis 8 Gew.-% aufweist;

derart und/oder mit der Maßgabe, dass das mit der aluminiumhaltigen und/oder aluminiumlegierten Feuerverzinkungsschicht versehene Stahlbauteil bzw. das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C eine Emissivität (Emissionsgrad) der Oberfläche $\varepsilon_m$ im Bereich von 0,05 bis 0,60 aufweist;

wobei die aluminiumhaltige und/oder aluminiumlegierte Feuerverzinkungsschicht die folgende Zusammensetzung aufweist, wobei alle nachfolgend genannten Mengenangaben auf die aluminiumhaltige und/oder aluminiumlegierte Feuerverzinkungsschicht bezogen sind und derart auszuwählen sind, dass insgesamt 100 Gew.-% resultieren:

(i) Zink (Zn) in Mengen von 92 Gew.-% bis 96 Gew.-%,
(ii) Aluminium (Al) in Mengen von 4 Gew.-% bis 8 Gew.-%,
(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%; mit der Maßgabe, dass der Magnesiumanteil weniger als 0,2 Gew.-%, insbesondere weniger als 0,15 Gew.-%, beträgt.

Zur Erzielung besonders guter Ergebnisse im Hinblick auf Brandbeständigkeit und/oder Feuerwiderstand hat es sich erfindungsgemäß als vorteilhaft herausgestellt, dass das mit der aluminiumhaltigen und/oder aluminiumlegierten Feuerverzinkungsschicht versehene Stahlbauteil bzw. das der Feuerverzinkung unter Verwendung eines aluminiumhaltigen und/oder aluminiumlegierten Verzinkungsbads unterzogene Stahlbauteil im Temperaturbereich von 500 °C bis 850 °C, ganz besonders bevorzugt im Temperaturbereich von 500 °C bis 800 °C, eine Emissivität (Emissionsgrad) der Oberfläche $\varepsilon_m$ von höchstens 0,60, besonders bevorzugt von höchstens 0,55, ganz besonders bevorzugt von höchstens 0,50, aufweist. Auf diese Weise werden erfindungsgemäß besonders gute Ergebnisse erhalten.

Im Rahmen der vorliegenden Erfindung ist es vorgesehen, dass das mit der aluminiumhaltigen und/oder aluminiumlegierten Feuerverzinkungsschicht versehene Stahlbauteil bzw. das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C, insbesondere bei Temperaturen im Bereich von 500 °C bis 800 °C, eine Emissivität (Emissionsgrad) der Oberfläche $\varepsilon_m$ im Bereich von 0,05 bis 0,60, ganz besonders bevorzugt im Bereich von 0,05 bis 0,55, aufweist. Auch auf diese Weise werden erfindungsgemäß besonders gute Ergebnisse erhalten.

Gemäß einer besonders bevorzugten Ausführungsform der vorliegenden Erfindung ist es vorgesehen, dass das mit der aluminiumhaltigen und/oder aluminiumlegierten Feuerverzinkungsschicht versehene Stahlbauteil bzw. das der Feuerverzinkung unter Verwendung eines aluminiumhaltigen und/oder aluminiumlegierten Verzinkungsbads unterzogene Stahlbauteil bei Temperaturen im Bereich von 500 °C bis 650 °C eine Emissivität (Emissionsgrad) der Oberfläche $\varepsilon_m$ von höchstens 0,40, insbesondere von höchstens 0,35, vorzugsweise von höchstens 0,30, besonders bevorzugt von höchstens 0,25, aufweist und dass das mit der aluminiumhaltigen und/oder aluminiumlegierten Feuerverzinkungsschicht versehene Stahlbauteil bzw. das der Feuerverzinkung unter Verwendung eines aluminiumhaltigen und/oder aluminiumlegierten Verzinkungsbads unterzogene Stahlbauteil bei Temperaturen im Bereich von 650 °C bis 850 °C eine Emissivität (Emissionsgrad) der Oberfläche $\varepsilon_m$ von höchstens 0,60, vorzugsweise von höchstens 0,55, aufweist.

Diese besonders bevorzugte Ausführungsform ist insbesondere dann in Betracht zu ziehen,

- wenn die aluminiumhaltige und/oder aluminiumlegierte Feuerverzinkungsschicht mit einer Schichtdicke im Bereich

von 4 $\mu$m bis 25 $\mu$m auf das Stahlbauteil aufgebracht wird; und/oder

- wenn die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, im Bereich von 4 Gew.-% bis 8 Gew.-% aufweist bzw. wenn die (zur Erzeugung der aluminiumhaltigen und/oder aluminiumlegierten Feuerverzinkungsschicht eingesetzte) aluminiumhaltige und/oder aluminiumlegierte Zinkschmelze einen Aluminiumanteil, bezogen auf die aluminiumhaltige und/oder aluminiumlegierte Zinkschmelze, im Bereich von 4 Gew.-% bis 8 Gew.-% aufweist; und/oder

- wenn die aluminiumhaltige und/oder aluminiumlegierte Feuerverzinkungsschicht die folgende Zusammensetzung aufweist, wobei alle nachfolgend genannten Mengenangaben auf die aluminiumhaltige und/oder aluminiumlegierte Feuerverzinkungsschicht bezogen sind und derart auszuwählen sind, dass insgesamt 100 Gew.-% resultieren, bzw. wenn die (zur Erzeugung der aluminiumhaltigen und/oder aluminiumlegierten Feuerverzinkungsschicht eingesetzte) aluminiumhaltige und/oder aluminiumlegierte Zinkschmelze die folgende Zusammensetzung aufweist, wobei alle nachfolgend genannten Mengenangaben auf die aluminiumhaltige und/oder aluminiumlegierte Zinkschmelze bezogen sind und derart auszuwählen sind, dass insgesamt 100 Gew.-% resultieren:

(i) Zink (Zn) in Mengen von 92 Gew.-% bis 96 Gew.-%,
(ii) Aluminium (Al) in Mengen von 4 Gew.-% bis 8 Gew.-%,
(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%;
mit der Maßgabe, dass der Magnesiumanteil weniger als 0,2 Gew.-%, insbesondere weniger als 0,15 Gew.-%, beträgt.

Gemäß der vorliegenden Erfindung ist es vorgesehen, dass das mit der aluminiumhaltigen und/oder aluminiumlegierten Feuerverzinkungsschicht versehene Stahlbauteil bzw. das der Feuerverzinkung unter Verwendung eines aluminiumhaltigen und/oder aluminiumlegierten Verzinkungsbads unterzogene Stahlbauteil bei Temperaturen im Temperaturbereich von 500 °C bis 850 °C eine Emissivität (Emissionsgrad) der Oberfläche $\varepsilon_m$ von höchstens 0,60, aufweist und/oder dass das mit der aluminiumhaltigen und/oder aluminiumlegierten Feuerverzinkungsschicht versehene Stahlbauteil bzw. das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C eine Emissivität (Emissionsgrad) der Oberfläche $\varepsilon_m$ im Bereich von 0,05 bis 0,60 aufweist.

Im Gegensatz hierzu weist das erfindungsgemäß eingesetzte Stahlbauteil vor Aufbringung der aluminiumhaltigen und/oder aluminiumlegierten Feuerverzinkungsschicht bei Temperaturen oberhalb von 500 °C, insbesondere bei Temperaturen im Bereich von 500 °C bis 850 °C, eine Emissivität (Emissionsgrad) der Oberfläche $\varepsilon_m \geq 0,7$ auf.

Der Begriff der Emissivität (Emissionsgrad) der Oberfläche $\varepsilon_m$ des mit der aluminiumhaltigen und/oder aluminiumlegierten Feuerverzinkungsschicht versehenen Stahlbauteils, wie er im Rahmen der vorliegenden Erfindung durchgehend verwendet wird, entspricht insbesondere der Definition und/oder Bestimmung gemäß DIN EN 1993-1-2: 2006-10 (= Emissivität (Emissionsgrad) der Oberfläche $\varepsilon_m$ gemäß DIN EN 1993-1-2: 2006-10).

Die Emissivität (Emissionsgrad) der Oberfläche $\varepsilon_m$ des mit der aluminiumhaltigen und/oder aluminiumlegierten Feuerverzinkungsschicht versehenen Stahlbauteils kann mit dem Fachmann an sich bekannten Methoden bzw. Verfahren bestimmt werden. Insbesondere ist es in diesem Zusammenhang vorgesehen, dass die Emissivität (Emissionsgrad) der Oberfläche $\varepsilon_m$, insbesondere gemäß DIN EN 1993-1-2: 2006-10, des mit der aluminiumhaltigen und/oder aluminiumlegierten Feuerverzinkungsschicht versehenen Stahlbauteils aus dem Temperaturverlauf bei kontinuierlicher und/oder zunehmender thermischer Belastung, insbesondere im Brand- und/oder Feuerfall (insbesondere gemäß DIN EN 1993-1-2: 2006-10), bestimmt und/oder ermittelt wird. Insbesondere kann dabei die Emissivität (Emissionsgrad) der Oberfläche $\varepsilon_m$, insbesondere gemäß DIN EN 1993-1-2: 2006-10, durch einen Emissivity-Performance-Test gemäß C. Gaigl und M. Mensinger, Technical Report "Thermal impact on HDG construction", Technische Universität München, Februar 2018, und/oder gemäß M. Mensinger und C. Gaigl, Aufsatz "Feuerwiderstand verzinkter Stahlkonstruktionen", Stahlbau, Vol. 88, Seiten 3 bis 10, Januar 2019, bestimmt und/oder ermittelt werden.

Wie zuvor ausgeführt, ist das mit der aluminiumhaltigen und/oder aluminiumlegierten Feuerverzinkungsschicht versehene Stahlbauteil bzw. das der Feuerverzinkung unter Verwendung eines aluminiumhaltigen und/oder aluminiumlegierten Verzinkungsbads unterzogene Stahlbauteil brandbeständig bzw. feuerbeständig.

Im Rahmen der vorliegenden Erfindung ist es insbesondere bevorzugt, dass das mit der aluminiumhaltigen und/oder aluminiumlegierten Feuerverzinkungsschicht versehene Stahlbauteil bzw. das der Feuerverzinkung unter Verwendung eines aluminiumhaltigen und/oder aluminiumlegierten Verzinkungsbads unterzogene Stahlbauteil eine Feuerwiderstandsklasse nach DIN 4102-2: 1977-09 von mindestens F30, insbesondere von mindestens F60, vorzugsweise von mindestens F90, besonders bevorzugt von mindestens F120, aufweist.

Weiterhin ist es im Rahmen der vorliegenden Erfindung gleichermaßen bevorzugt, dass das mit der aluminiumhaltigen und/oder aluminiumlegierten Feuerverzinkungsschicht versehene Stahlbauteil bzw. das der Feuerverzinkung unter Verwendung eines aluminiumhaltigen und/oder aluminiumlegierten Verzinkungsbads unterzogene Stahlbauteil eine Feuerwiderstandsklasse nach DIN EN 13501-2: 2016-12 von mindestens R30, insbesondere von mindestens R60, vorzugsweise von mindestens R90, besonders bevorzugt von mindestens R120, aufweist.

Was das erfindungsgemäß eingesetzte Stahlbauteil anbelangt, so können grundsätzlich beliebige Stahlbauteile zum Einsatz kommen.

Im Rahmen der vorliegenden Erfindung ist es insbesondere vorteilhaft, dass der Stahl des Stahlbauteils ausgewählt ist aus (i) Niedrigsiliziumstahl, insbesondere mit einem Gehalt an Silizium $\leq$ 0,03 Gew.-% und mit einem Gehalt an Phosphor < 0,02 Gew.-%, bezogen auf den Stahl; (ii) Sandelin-Stahl, insbesondere mit einem Gehalt an Silizium zwischen 0,03 Gew.-% und 0,14 Gew.-%, bezogen auf den Stahl; (iii) Sebisty-Stahl, insbesondere mit einem Gehalt an Silizium zwischen 0,14 Gew.-% und 0,25 Gew.-%; (iv) Hochsiliziumstahl, insbesondere mit einem Gehalt an Silizium > 0,25 Gew.-%, bezogen auf den Stahl; und deren Kombinationen.

Im Rahmen der vorliegenden Erfindung ist es insbesondere gleichermaßen vorteilhaft, dass der Stahl des Stahlbauteils ausgewählt ist aus Stahl der Kategorien A, B, C und/oder D gemäß DIN EN ISO 14713-2: 2020-05 und deren Kombinationen.

Ebenfalls im Rahmen der vorliegenden Erfindung vorteilhaft ist es, dass das Stahlbauteil ein Stahlkonstruktionselement, ein Stahlträger, ein Stahlprofil, ein Profilstahl, ein Stahlblech, ein Stahlrohr oder dergleichen ist.

Insbesondere kann es erfindungsgemäß vorgesehen sein, dass das Stahlbauteil ein für das Bauwesen bestimmtes Stahlbauteil ist und/oder wobei das Stahlbauteil ein für das Bauwesen bestimmtes Stahlkonstruktionselement oder -bauteil ist.

Weiterhin kann es erfindungsgemäß insbesondere vorgesehen sein, dass das Stahlbauteil ein für das Bauwesen oder für den Fahrzeugbau bzw. die Automobilherstellung bestimmtes oder ausgebildetes Stahlbauteil ist.

Was die aluminiumhaltige und/oder aluminiumlegierte Feuerverzinkungsschicht anbelangt, welche auf das Stahlbauteil aufgebracht ist, so kann diese mit an sich bekannten Methoden der Feuerverzinkung (synonym auch als Schmelztauchverzinkung) aufgebracht werden, so dass es diesbezüglich keiner weiterführenden Ausführungen bedarf.

Die Feuerverzinkung (Schmelztauchverzinkung) ist das wohl wichtigste Verfahren zum Korrosionsschutz von Stahl durch metallische Überzüge; allerdings ist dieses Verfahren bislang noch nicht im Zusammenhang mit dem Brandschutz bzw. Feuerschutz in Verbindung gebracht worden. Bei der Feuerverzinkung wird Stahl kontinuierlich (z. B. Band und Draht) oder stückweise (z. B. Bauteile) bei Temperaturen von etwa 450 °C bis 600 °C in einen beheizten Kessel mit flüssigem Zink getaucht (Schmelzpunkt von Zink: 419,5 °C), so dass sich auf der Stahloberfläche eine widerstandsfähige Legierungsschicht aus Eisen und Zink und darüber eine sehr fest haftende reine Zinkschicht ausbildet.

Bei der Feuerverzinkung wird zwischen diskontinuierlicher Stückverzinkung (vgl. z. B. DIN EN ISO 1461) und kontinuierlicher Bandverzinkung (vgl. z. B. DIN EN 10143 und DIN EN 10346) unterschieden. Sowohl das Stückverzinken als auch das Bandverzinken sind genormte bzw. standardisierte Verfahren. Bandverzinkter Stahl ist ein Vor- bzw. Zwischenprodukt (Halbzeug), welches nach dem Verzinken, insbesondere durch Umformen, Stanzen, Zuschneiden etc., weiterverarbeitet wird, wohingegen durch Stückverzinken zu schützende Bauteile zuerst vollständig gefertigt und erst danach feuerverzinkt werden (wodurch die Bauteile rundum vor Korrosion geschützt werden). Stückverzinken und Bandverzinken unterscheiden sich zudem hinsichtlich der Zinkschichtdicke, wodurch sich unterschiedliche Schutzdauern ergeben. Die Zinkschichtdicke von bandverzinkten Blechen liegt zumeist bei höchstens 20 bis 25 Mikrometern, wohingegen die Zinkschichtdicken von stückverzinkten Stahlteilen üblicherweise im Bereich von 50 bis 200 Mikrometern und sogar mehr liegen.

Die Feuerverzinkung liefert sowohl einen aktiven als auch passiven Korrosionsschutz. Der passive Schutz erfolgt durch die Barrierewirkung des Zinküberzuges. Der aktive Korrosionsschutz entsteht aufgrund der kathodischen Wirkung des Zinküberzuges. Gegenüber edleren Metallen der elektrochemischen Spannungsreihe, wie z. B. Eisen, dient Zink als Opferanode, die das darunter liegende Eisen solange vor Korrosion schützt, bis sie selbst vollständig korrodiert ist.

Bei der sogenannten Stückverzinkung nach DIN EN ISO 1461 erfolgt das Feuerverzinken von meist größeren Stahlbauteilen und -konstruktionen. Dabei werden stahlbasierte Rohlinge oder fertige Werkstücke (Bauteile) nach einer Vorbehandlung in das Zinkschmelzbad eingetaucht. Durch das Tauchen können insbesondere auch Innenflächen, Schweißnähte und schwer zugängliche Stellen der zu verzinkenden Werkstücke bzw. Bauteile gut erreicht werden.

Die konventionelle Feuerverzinkung basiert insbesondere auf dem Tauchen von Eisen- bzw. Stahlbauteilen in eine Zinkschmelze unter Ausbildung einer Zinkbeschichtung bzw. eines Zinküberzugs auf der Oberfläche der Bauteile. Zur Sicherstellung des Haftvermögens, der Geschlossenheit und der Einheitlichkeit des Zinküberzuges ist vorab im Allgemeinen eine sorgfältige Oberflächenvorbereitung der zu verzinkenden Bauteile erforderlich, welche üblicherweise eine Entfettung mit nachfolgendem Spülvorgang, eine sich anschließende saure Beizung mit nachfolgendem Spülvorgang und schließlich eine Flussmittelbehandlung (d. h. ein sogenanntes Fluxen) mit nachfolgendem Trocknungsvorgang umfasst.

Typischerweise kann im Rahmen der vorliegenden Erfindung die Feuerverzinkung (Schmelztauchverzinkung) bei einer Temperatur im Bereich von 375 °C bis 750 °C, insbesondere Temperatur im Bereich von 380 °C bis 700 °C, vorzugsweise Temperatur im Bereich von 390 °C bis 680 °C, noch mehr bevorzugt im Bereich von 395 °C bis 675 °C, durchgeführt werden.

Weiterhin wird im Rahmen der vorliegenden Erfindung die Feuerverzinkung (Schmelztauchverzinkung) für eine Zeitdauer durchgeführt, welche ausreichend ist, um eine wirksame Feuerverzinkung (Schmelztauchverzinkung) zu gewährleisten, insbesondere für eine Zeitdauer im Bereich von 0,0001 bis 60 Minuten, vorzugsweise im Bereich von 0,001 bis 45 Minuten, bevorzugt im Bereich von 0,01 bis 30 Minuten, noch mehr bevorzugt im Bereich von 0,1 bis 15 Minuten, durchgeführt.

Der typische Verfahrensablauf bei der erfindungsgemäß durchgeführten Feuerverzinkung gestaltet sich üblicherweise wie folgt.

Im Rahmen der vorliegenden Erfindung wird bei der Feuerverzinkung insbesondere derart vorgegangen, dass die Feuerverzinkung (Schmelztauchverzinkung) einschließlich der Vorbehandlungs- und/oder Nachbehandlungsvorgänge die folgenden Verfahrensschritte, insbesondere in der nachfolgend aufgeführten Reihenfolge, umfasst (wobei erforderlichenfalls noch weitere Schritte hinzukommen können, welche aber optional sind):

(a) Entfettungsbehandlung, vorzugsweise alkalische Entfettungsbehandlung, des Stahlbauteils, insbesondere in mindestens einem Entfettungsbad;

(b) gegebenenfalls Spülen des in Verfahrensschritt (a) entfetteten Stahlbauteils, insbesondere in mindestens einem Spülbad;

(c) Beizbehandlung, vorzugsweise saure Beizbehandlung, des in Verfahrensschritt (a) entfetteten und gegebenenfalls in Verfahrensschritt (b) gespülten Stahlbauteils, insbesondere in mindestens einem Beizbad;

(d) gegebenenfalls Spülen des in Verfahrensschritt (c) gebeizten Stahlbauteils, insbesondere in mindestens einem Spülbad;

(e) Flussmittelbehandlung des in Verfahrensschritt (c) gebeizten und gegebenenfalls in Verfahrensschritt (d) gespülten Stahlbauteils mittels einer Flussmittelzusammensetzung in einem Flussmittelbad;

(f) gegebenenfalls Trocknungsbehandlung des in Verfahrensschritt (e) der Flussmittelbehandlung unterzogenen Stahlbauteils;

(g) Feuerverzinkung (Schmelztauchverzinkung) des in Verfahrensschritt (e) der Flussmittelbehandlung unterzogenen und gegebenenfalls in Verfahrensschritt (f) getrockneten Stahlbauteils in einer aluminiumhaltigen und/oder aluminiumlegierten Zinkschmelze, vorzugsweise durch Tauchen des Stahlbauteils in die aluminiumhaltige und/oder aluminiumlegierte Zinkschmelze.

Gegebenenfalls kann sich im Rahmen der vorliegenden Erfindung der in Verfahrensschritt (g) durchgeführten Feuerverzinkung (Schmelztauchverzinkung) ein Abkühlungsschritt (h) anschließen und/oder kann das in Verfahrensschritt (g) feuerverzinkte (schmelztauchverzinkte) Stahlbauteil einer Abkühlungsbehandlung (h) unterzogen werden, gegebenenfalls gefolgt von einem weiteren Nachbearbeitungs- und/oder Nachbehandlungsschritt (i). Insbesondere kann bzw. können dabei der Abkühlungsschritt (h) und/oder die Abkühlungsbehandlung (h) mittels Luft und/oder in Gegenwart von Luft erfolgen, vorzugsweise bis auf Umgebungstemperatur.

Im Rahmen der vorliegenden Erfindung ist es zudem bevorzugt, dass die Feuerverzinkung (Schmelztauchverzinkung) als Stückverzinkung, insbesondere diskontinuierliche Stückverzinkung, durchgeführt wird, vorzugsweise gemäß DIN 50997: 2020-08 (d. h. durch Dünnschichtverzinken auf Stahl aufgebrachte Zink/Aluminium-Überzüge).

Im Rahmen der vorliegenden Erfindung ist es weiterhin möglich, dass das mit der aluminiumhaltigen und/oder aluminiumlegierten Feuerverzinkungsschicht versehene Stahlbauteil bzw. das der Feuerverzinkung unter Verwendung eines aluminiumhaltigen und/oder aluminiumlegierten Verzinkungsbads unterzogene Stahlbauteil und/oder die aluminiumhaltigen und/oder aluminiumlegierten Feuerverzinkungsschicht einer zusätzlichen Nachbehandlung und/oder Oberflächenbehandlung unterzogen wird, insbesondere mittels Passivierung und/oder mittels Versiegelung, vorzugsweise Silikatbeschichtung oder Silikatisierung. Derartige Nachbehandlungs- bzw. Oberflächenbehandlungsprozesse sind dem Fachmann als solches bekannt, so dass dieser Aspekt nicht weiterführend erläutert zu werden braucht. Im Rahmen der vorliegenden Erfindung kann die zusätzliche Nachbehandlung bzw. Oberflächenbehandlung einen weiterführenden positiven Einfluss in Bezug auf die Brandbeständigkeit bzw. den Feuerwiderstand des Stahlbauteils ausüben.

Ein erfindungsgemäß besonders geeignetes Feuerverzinkungsverfahren unter Verwendung einer Zink/Aluminium-Schmelze ist beispielsweise in der WO 2002/042512 A1 und den betreffenden Druckschriftäquivalenten zu dieser Patentfamilie (z. B. EP 1 352 100 B1, DE 601 24 767 T2 und US 2003/0219543 A1) offenbart. Mit dem dort offenbarten Verfahren lassen sich Korrosionsschutzüberzüge mit sehr geringen Schichtdicken (im Allgemeinen deutlich unterhalb von 50 Mikrometern und typischerweise im Bereich von 2 bis 20 Mikrometern) und mit sehr geringem Gewicht bei hoher Kosteneffizienz erzeugen, weshalb das dort beschriebene Verfahren kommerziell unter der Bezeichnung micro-ZINQ®-Verfahren angewendet wird.

Im Ergebnis wird im Rahmen der vorliegenden Erfindung also ein effizientes wie ökonomisches Verfahren bereitgestellt, um Stahlbauteile mit Brandbeständigkeit und/oder Feuerwiderstand, insbesondere Brandbeständigkeit und/oder Feuerwiderstand gemäß DIN EN 13501-2: 2016-12 und/oder DIN 4102-2: 1977-09, auszurüsten bzw. auszustatten.

Weiterhin betrifft die vorliegende Erfindung - gemäß einem **zweiten** Aspekt der vorliegenden Erfindung - die Verwendung einer aluminiumhaltigen und/oder aluminiumlegierten Feuerverzinkungsschicht (insbesondere einer wie zuvor definierten aluminiumhaltigen und/oder aluminiumlegierten Feuerverzinkungsschicht bzw. insbesondere einer nach dem zuvor beschriebenen Verfahren gemäß dem ersten Erfindungsaspekt erhältlichen aluminiumhaltigen und/oder aluminiumlegierten Feuerverzinkungsschicht) zur Erzeugung von Brandbeständigkeit und/oder Feuerwiderstand und/oder zur Ausrüstung eines Stahlbauteils mit Brandbeständigkeit und/oder Feuerwiderstand gemäß dem diesbezüglichen unabhängigen Verwendungsanspruch (Anspruch 8); weitere, insbesondere besondere und/oder vorteilhafte Ausgestaltungen der erfindungsgemäßen Verwendung sind Gegenstand des diesbezüglichen Verwendungsunteranspruchs (Anspruch 11) und werden nachfolgend im Detail vertiefend erläutert.

Gegenstand der vorliegenden Erfindung gemäß dem zweiten Erfindungsaspekt ist somit die Verwendung einer aluminiumhaltigen und/oder aluminiumlegierten Feuerverzinkungsschicht zur Erzeugung von Brandbeständigkeit und/oder Feuerwiderstand, insbesondere Brandbeständigkeit und/oder Feuerwiderstand gemäß DIN EN 13501-2: 2016-12 und/oder DIN 4102-2: 1977-09, an einem Stahlbauteil und/oder zur Ausrüstung eines Stahlbauteils mit Brandbeständigkeit und/oder Feuerwiderstand, insbesondere mit Brandbeständigkeit und/oder Feuerwiderstand gemäß DIN EN 13501-2: 2016-12 und/oder DIN 4102-2: 1977-09, vorzugsweise zur Erzeugung eines brand- und/oder feuerbeständigen Stahlbauteils, insbesondere eines gemäß DIN EN 13501-2: 2016-12 und/oder DIN 4102-2: 1977-09 brand- und/oder feuerbeständigen Stahlbauteils, wobei das Stahlbauteil mit einer aluminiumhaltigen und/oder aluminiumlegierten Feuerverzinkungsschicht versehen wird und/oder wobei das Stahlbauteil einer Feuerverzinkung unter Verwendung einer aluminiumhaltigen und/oder aluminiumlegierten Zinkschmelze unterzogen wird,

wobei die aluminiumhaltige und/oder aluminiumlegierte Feuerverzinkungsschicht mit einer Schichtdicke im Bereich von 4 $\mu$m bis 25 $\mu$m auf das Stahlbauteil aufgebracht wird und

wobei die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, im Bereich von 4 Gew.-% bis 8 Gew.-% aufweist;

derart und/oder mit der Maßgabe, dass das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C, eine Emissivität der Oberfläche $\varepsilon_m$ im Bereich von 0,05 bis 0,60, bestimmt gemäß DIN EN 1993-1-2: 2006-10, aufweist;

wobei die aluminiumhaltige und/oder aluminiumlegierte Feuerverzinkungsschicht die folgende Zusammensetzung aufweist, wobei alle nachfolgend genannten Mengenangaben auf die aluminiumhaltige und/oder aluminiumlegierte Feuerverzinkungsschicht bezogen sind und derart auszuwählen sind, dass insgesamt 100 Gew.-% resultieren:

(i) Zink (Zn) in Mengen von 92 Gew.-% bis 96 Gew.-%,
(ii) Aluminium (Al) in Mengen von 4 Gew.-% bis 8 Gew.-%,
(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%;

mit der Maßgabe, dass der Magnesiumanteil weniger als 0,2 Gew.-%, insbesondere weniger als 0,15 Gew.-%, beträgt.

Im Rahmen der erfindungsgemäßen Verwendung gemäß dem zweiten Erfindungsaspekt ist es dabei vorgesehen, dass das Stahlbauteil mit einer aluminiumhaltigen und/oder aluminiumlegierten Feuerverzinkungsschicht versehen wird und/oder wobei das Stahlbauteil einer Feuerverzinkung (Schmelztauchverzinkung) unter Verwendung einer aluminiumhaltigen und/oder aluminiumlegierten Zinkschmelze unterzogen wird, derart und/oder mit der Maßgabe, dass das mit der aluminiumhaltigen und/oder aluminiumlegierten Feuerverzinkungsschicht versehene Stahlbauteil bzw. das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C, bevorzugt bei Temperaturen im Bereich von 500 °C bis 800 °C, eine Emissivität (Emissionsgrad) der Oberfläche $\varepsilon_m$ im Bereich von 0,05 bis 0,60, ganz besonders bevorzugt im Bereich von 0,05 bis 0,55, aufweist.

Für weitergehende Einzelheiten zu der erfindungsgemäßen Verwendung gemäß dem zweiten Erfindungsaspekt kann auf die obigen Ausführungen in Bezug auf den ersten Erfindungsaspekt verwiesen werden, welche in entsprechender Weise auch für die erfindungsgemäße Verwendung gemäß dem zweiten Erfindungsaspekt gelten.

Des Weiteren betrifft die vorliegende Erfindung - gemäß einem <u>dritten</u> Aspekt der vorliegenden Erfindung - die Verwendung einer Feuerverzinkung (Schmelztauchverzinkung) bzw. eines Feuerverzinkungsverfahrens (insbesondere wie zuvor im Rahmen des ersten Erfindungsaspekts beschrieben) zur Erzeugung von Brandbeständigkeit und/oder Feuerwiderstand an einem Stahlbauteil und/oder zur Ausrüstung eines Stahlbauteils mit Brandbeständigkeit und/oder Feuerwiderstand gemäß dem diesbezüglichen unabhängigen Verwendungsanspruch (Anspruch 9); weitere, insbesondere besondere und/oder vorteilhafte Ausgestaltungen der erfindungsgemäßen Verwendung sind Gegenstand des diesbezüglichen Verwendungsunteranspruchs (Anspruch 11) und werden nachfolgend im Detail vertiefend erläutert.

Gegenstand der vorliegenden Erfindung gemäß dem dritten Erfindungsaspekt ist somit die Verwendung einer Feuerverzinkung und/oder eines Feuerverzinkungsverfahrens zur Erzeugung von Brandbeständigkeit und/oder Feuerwiderstand, insbesondere Brandbeständigkeit und/oder Feuerwiderstand gemäß DIN EN 13501-2: 2016-12 und/oder DIN 4102-2: 1977-09, an einem Stahlbauteil und/oder zur Ausrüstung eines Stahlbauteils mit Brandbeständigkeit und/oder Feuerwiderstand, insbesondere mit Brandbeständigkeit und/oder Feuerwiderstand gemäß DIN EN 13501-2: 2016-12 und/oder DIN 4102-2: 1977-09, insbesondere zur Erzeugung eines brand- und/oder feuerbeständigen Stahlbauteils, vorzugsweise eines gemäß DIN EN 13501-2: 2016-12 und/oder DIN 4102-2: 1977-09 brand- und/oder feuerbeständigen Stahlbauteils,

wobei das Stahlbauteil mit einer aluminiumhaltigen und/oder aluminiumlegierten Feuerverzinkungsschicht versehen wird und/oder wobei das Stahlbauteil einer Feuerverzinkung unter Verwendung einer aluminiumhaltigen und/oder aluminiumlegierten Zinkschmelze unterzogen wird,

wobei die aluminiumhaltige und/oder aluminiumlegierte Feuerverzinkungsschicht mit einer Schichtdicke im Bereich von 4 $\mu$m bis 25 $\mu$m auf das Stahlbauteil aufgebracht wird und

wobei die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, im Bereich von 4 Gew.-% bis 8 Gew.-% aufweist;

derart und/oder mit der Maßgabe, dass das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C eine Emissivität der Oberfläche $\varepsilon_m$ unterhalb von 0,7, insbesondere im Bereich von 0,05 bis < 0,7, vorzugsweise im Bereich von 0,05 bis 0,65, besonders bevorzugt im Bereich von 0,05 bis 0,60, bestimmt gemäß DIN EN 1993-1-2: 2006-10, aufweist;

wobei die aluminiumhaltige und/oder aluminiumlegierte Feuerverzinkungsschicht die folgende Zusammensetzung aufweist, wobei alle nachfolgend genannten Mengenangaben auf die aluminiumhaltige und/oder aluminiumlegierte Feuerverzinkungsschicht bezogen sind und derart auszuwählen sind, dass insgesamt 100 Gew.-% resultieren:

(i) Zink (Zn) in Mengen von 92 Gew.-% bis 96 Gew.-%,
(ii) Aluminium (Al) in Mengen von 4 Gew.-% bis 8 Gew.-%,
(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%;

mit der Maßgabe, dass der Magnesiumanteil weniger als 0,2 Gew.-%, insbesondere weniger als 0,15 Gew.-%, beträgt.

Für weitergehende Einzelheiten zu der erfindungsgemäßen Verwendung gemäß dem dritten Erfindungsaspekt kann auf die obigen Ausführungen in Bezug auf den ersten und zweiten Erfindungsaspekt verwiesen werden, welche in entsprechender Weise auch für die erfindungsgemäße Verwendung gemäß dem dritten Erfindungsaspekt gelten.

Darüber hinaus betrifft die vorliegende Erfindung - gemäß einem <u>vierten</u> Aspekt der vorliegenden Erfindung - die Verwendung von Aluminium zur Erhöhung und/oder Verbesserung der Brandbeständigkeit und/oder des Feuerwiderstands, eines feuerverzinkten und/oder mit einer Feuerverzinkungsschicht versehenen Stahlbauteils gemäß dem diesbezüglichen unabhängigen Verwendungsanspruch (Anspruch 10); weitere, insbesondere besondere und/oder vorteilhafte Ausgestaltungen der erfindungsgemäßen Verwendung sind Gegenstand des diesbezüglichen Verwendungsunteranspruchs (Anspruch 11) und werden nachfolgend im Detail vertiefend erläutert.

Gegenstand der vorliegenden Erfindung gemäß dem vierten Erfindungsaspekt ist somit die Verwendung von Aluminium zur Erhöhung und/oder Verbesserung der Brandbeständigkeit und/oder des Feuerwiderstands, insbesondere der Brandbeständigkeit und/oder des Feuerwiderstands gemäß DIN EN 13501-2: 2016-12 und/oder DIN 4102-2: 1977-09, eines feuerverzinkten und/oder mit einer Feuerverzinkungsschicht versehenen Stahlbauteils, wobei Aluminium in die Feuerverzinkungsschicht inkorporiert und/oder legiert wird, insbesondere in die Weise und/oder mit der Maßgabe, dass eine aluminiumhaltige und/oder aluminiumlegierte Feuerverzinkungsschicht resultiert und/oder dass das Stahlbauteil mit einer aluminiumhaltigen und/oder aluminiumlegierten Feuerverzinkungsschicht versehen wird,

wobei das Stahlbauteil mit einer aluminiumhaltigen und/oder aluminiumlegierten Feuerverzinkungsschicht versehen wird und/oder wobei das Stahlbauteil einer Feuerverzinkung unter Verwendung einer aluminiumhaltigen und/oder aluminiumlegierten Zinkschmelze unterzogen wird,

wobei die aluminiumhaltige und/oder aluminiumlegierte Feuerverzinkungsschicht mit einer Schichtdicke im Bereich von 4 $\mu$m bis 25 $\mu$m auf das Stahlbauteil aufgebracht wird und

wobei die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, im Bereich von 4 Gew.-% bis 8 Gew.-% aufweist;

derart und/oder mit der Maßgabe, dass das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C eine Emissivität der Oberfläche $\varepsilon_m$ im Bereich von 0,05 bis 0,60, bestimmt gemäß DIN EN 1993-1-2: 2006-10, aufweist;

wobei die aluminiumhaltige und/oder aluminiumlegierte Feuerverzinkungsschicht die folgende Zusammensetzung aufweist, wobei alle nachfolgend genannten Mengenangaben auf die aluminiumhaltige und/oder aluminiumlegierte Feuerverzinkungsschicht bezogen sind und derart auszuwählen sind, dass insgesamt 100-Gew.-% resultieren:

(i) Zink (Zn) in Mengen von 92 Gew.-% bis 96 Gew.-%,
(ii) Aluminium (Al) in Mengen von 4 Gew.-% bis 8 Gew.-%,
(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%;

mit der Maßgabe, dass der Magnesiumanteil weniger als 0,2 Gew.-%, insbesondere weniger als 0,15 Gew.-%, beträgt.

Im Rahmen der erfindungsgemäßen Verwendung gemäß dem vierten Erfindungsaspekt ist es dabei vorgesehen, dass das Stahlbauteil mit einer aluminiumhaltigen und/oder aluminiumlegierten Feuerverzinkungsschicht versehen wird und/oder wobei das Stahlbauteil einer Feuerverzinkung (Schmelztauchverzinkung) unter Verwendung einer aluminiumhaltigen und/oder aluminiumlegierten Zinkschmelze unterzogen wird, derart und/oder mit der Maßgabe, dass das mit der aluminiumhaltigen und/oder aluminiumlegierten Feuerverzinkungsschicht versehene Stahlbauteil bzw. das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C, bevorzugt bei Temperaturen im Bereich von 500 °C bis 800 °C, eine Emissivität (Emissionsgrad) der Oberfläche $\varepsilon_m$ im Bereich von 0,05 bis 0,60, ganz besonders bevorzugt im Bereich von 0,05 bis 0,55, aufweist.

Für weitergehende Einzelheiten zu der erfindungsgemäßen Verwendung gemäß dem vierten Erfindungsaspekt kann auf die obigen Ausführungen in Bezug auf den ersten bis dritten Erfindungsaspekt verwiesen werden, welche in entsprechender Weise auch für die erfindungsgemäße Verwendung gemäß dem vierten Erfindungsaspekt gelten.

Für die erfindungsgemäße Verwendungen gemäß dem zweiten, dritten und vierten Erfindungsaspekt sind weitere, insbesondere besondere und/oder vorteilhafte gemeinsame Ausgestaltungen dieser erfindungsgemäßen Verwendungen Gegenstand des diesbezüglichen Verwendungsunteranspruchs (Anspruch 11). Die Besonderheiten dieser Ausgestaltungen sind vorstehend bereits im Zusammenhang mit dem ersten Erfindungsaspekt beschrieben und erläutert worden und gelten somit für die erfindungsgemäße Verwendungen entsprechend.

Gleichermaßen betrifft die vorliegende Erfindung - gemäß einem **fünften** Aspekt der vorliegenden Erfindung - die Verwendung eines mit einer aluminiumhaltigen und/oder aluminiumlegierten Feuerverzinkungsschicht versehenen Stahlbauteils (insbesondere eines nach dem zuvor beschriebenen Verfahren gemäß dem ersten Erfindungsaspekt erhältlichen, mit einer aluminiumhaltigen und/oder aluminiumlegierten Feuerverzinkungsschicht versehenen Stahlbauteils) als baulicher Konstruktionsbestandteil zur Einhaltung der Erfordernisse von Brandbeständigkeit und/oder Feuerwiderstand gemäß dem diesbezüglichen unabhängigen Verwendungsanspruch (Anspruch 12).

Gegenstand der vorliegenden Erfindung gemäß dem fünften Erfindungsaspekt ist somit die Verwendung eines mit einer aluminiumhaltigen und/oder aluminiumlegierten Feuerverzinkungsschicht versehenen Stahlbauteils als baulicher Konstruktionsbestandteil zur Einhaltung der Erfordernisse von Brandbeständigkeit und/oder Feuerwiderstand, insbesondere Brandbeständigkeit und/oder Feuerwiderstand gemäß DIN EN 13501-2: 2016-12 und/oder DIN 4102-2: 1977-09

wobei das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C eine Emissivität der Oberfläche $\varepsilon_m$ im Bereich von 0,05 bis 0,60, bestimmt gemäß DIN EN 1993-1-2: 2006-10, aufweist; und

wobei das mit der aluminiumhaltigen und/oder aluminiumlegierten Feuerverzinkungsschicht versehene Stahlbauteil in Abwesenheit von und/oder ohne zusätzliche konstruktive Brandschutzmaßnahmen und -vorrichtungen eingesetzt wird,

wobei die aluminiumhaltige und/oder aluminiumlegierte Feuerverzinkungsschicht die folgende Zusammensetzung aufweist, wobei alle nachfolgend genannten Mengenangaben auf die aluminiumhaltige und/oder aluminiumlegierte Feuerverzinkungsschicht bezogen sind und derart auszuwählen sind, dass insgesamt 100-Gew.-% resultieren:

(i) Zink (Zn) in Mengen von 92 Gew.-% bis 96 Gew.-%,
(ii) Aluminium (Al) in Mengen von 4 Gew.-% bis 8 Gew.-%,
(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%;

mit der Maßgabe, dass der Magnesiumanteil weniger als 0,2 Gew.-%, insbesondere weniger als 0,15 Gew.-%, beträgt.

Im Rahmen der erfindungsgemäßen Verwendung gemäß dem fünften Erfindungsaspekt ist es dabei vorgesehen, dass das mit der aluminiumhaltigen und/oder aluminiumlegierten Feuerverzinkungsschicht versehene Stahlbauteil bzw. das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C, bevorzugt bei Temperaturen im Bereich von 500 °C bis 800 °C, eine Emissivität (Emissionsgrad) der Oberfläche $\varepsilon_m$ im Bereich von 0,05 bis 0,60, ganz besonders bevorzugt im Bereich von 0,05 bis 0,55, aufweist.

Gemäß dem fünften Erfindungsaspekt ist es weiterhin vorgesehen, dass das mit der aluminiumhaltigen und/oder aluminiumlegierten Feuerverzinkungsschicht versehene Stahlbauteil in Abwesenheit von bzw. ohne zusätzliche konstruktive Brandschutzmaßnahmen und -vorrichtungen eingesetzt wird.

Für weitergehende Einzelheiten zu der erfindungsgemäßen Verwendung gemäß dem fünften Erfindungsaspekt kann auf die obigen Ausführungen in Bezug auf den ersten bis vierten Erfindungsaspekt verwiesen werden, welche in entsprechender Weise auch für die erfindungsgemäße Verwendung gemäß dem fünften Erfindungsaspekt gelten.

Überdies ist Gegenstand der vorliegenden Erfindung - gemäß einem **sechsten** Aspekt der vorliegenden Erfindung - die Verwendung eines mit einer aluminiumhaltigen und/oder aluminiumlegierten Feuerverzinkungsschicht versehenen Stahlbauteils (insbesondere eines nach dem zuvor beschriebenen Verfahren gemäß dem ersten Erfindungsaspekt erhältlichen, mit einer aluminiumhaltigen und/oder aluminiumlegierten Feuerverzinkungsschicht versehenen Stahlbauteils) als Konstruktionsbestandteil von Aufnahmevorrichtungen, insbesondere Einhausungen oder Behältnisse, für Energiespeicher oder Energiewandler, wie Brennstoffzellen, Akkumulatoren, Batterien, galvanische Elemente oder dergleichen, insbesondere für den Automobilbereich, vorzugsweise zur Einhaltung der Erfordernisse von Brandbeständigkeit und/oder Feuerwiderstand, gemäß dem diesbezüglichen unabhängigen Verwendungsanspruch (Anspruch 13).

Gegenstand der vorliegenden Erfindung gemäß dem sechsten Erfindungsaspekt ist somit die Verwendung eines mit einer aluminiumhaltigen und/oder aluminiumlegierten Feuerverzinkungsschicht versehenen Stahlbauteils als Konstruktionsbestandteil von Aufnahmevorrichtungen, insbesondere Einhausungen oder Behältnisse, für Energiespeicher oder Energiewandler, wie Brennstoffzellen, Akkumulatoren, Batterien, galvanische Elemente oder dergleichen, insbesondere für den Automobilbereich, vorzugsweise zur Einhaltung der Erfordernisse von Brandbeständigkeit und/oder Feuerwiderstand

wobei das Stahlbauteil mit einer aluminiumhaltigen und/oder aluminiumlegierten Feuerverzinkungsschicht versehen wird und/oder wobei das Stahlbauteil einer Feuerverzinkung unter Verwendung einer aluminiumhaltigen und/oder aluminiumlegierten Zinkschmelze unterzogen wird,

wobei die aluminiumhaltige und/oder aluminiumlegierte Feuerverzinkungsschicht mit einer Schichtdicke im Bereich von 4 $\mu$m bis 25 $\mu$m auf das Stahlbauteil aufgebracht wird und

wobei die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, im Bereich von 4 Gew.-% bis 8 Gew.-% aufweist;

derart und/oder mit der Maßgabe, dass das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C, eine Emissivität der Oberfläche $\varepsilon_m$ im Bereich von 0,05 bis 0,60, bestimmt gemäß DIN EN 1993-1-2: 2006-10, aufweist;

wobei die aluminiumhaltige und/oder aluminiumlegierte Feuerverzinkungsschicht die folgende Zusammensetzung aufweist, wobei alle nachfolgend genannten Mengenangaben auf die aluminiumhaltige und/oder aluminiumlegierte Feuerverzinkungsschicht bezogen sind und derart auszuwählen sind, dass insgesamt 100 Gew.-% resultieren:

(i) Zink (Zn) in Mengen von 92 Gew.-% bis 96 Gew.-%,
(ii) Aluminium (Al) in Mengen von 4 Gew.-% bis 8 Gew.-%,
(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%;

mit der Maßgabe, dass der Magnesiumanteil weniger als 0,2 Gew.-%, insbesondere weniger als 0,15 Gew.-%, beträgt.

Im Rahmen der erfindungsgemäßen Verwendung gemäß dem sechsten Erfindungsaspekt ist es dabei vorgesehen, dass das mit der aluminiumhaltigen und/oder aluminiumlegierten Feuerverzinkungsschicht versehene Stahlbauteil bzw. das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C bevorzugt bei Temperaturen im Bereich von 500 °C bis 800 °C, eine Emissivität (Emissionsgrad) der Oberfläche $\varepsilon_m$ im Bereich von 0,05 bis 0,60, ganz besonders bevorzugt im Bereich von 0,05 bis 0,55, aufweist.

Für weitergehende Einzelheiten zu der erfindungsgemäßen Verwendung gemäß dem sechsten Erfindungsaspekt kann auf die obigen Ausführungen in Bezug auf den ersten bis fünften Erfindungsaspekt verwiesen werden, welche in entsprechender Weise auch für die erfindungsgemäße Verwendung gemäß dem sechsten Erfindungsaspekt gelten.

Gleichermaßen betrifft die vorliegende Erfindung - gemäß einem **siebten** Aspekt der vorliegenden Erfindung - ein Tragwerk, insbesondere Stahlbautragwerk, für ein Bauwerk, insbesondere für ein Gebäude oder Gebäudeteil, gemäß dem diesbezüglichen unabhängigen Anspruch (Anspruch 14).

Gegenstand der vorliegenden Erfindung gemäß dem siebten Erfindungsaspekt ist somit ein Tragwerk, insbesondere Stahlbautragwerk, für ein Bauwerk, insbesondere für ein Gebäude oder Gebäudeteil, wobei das Tragwerk als bauliche Konstruktionsbestandteile zur Einhaltung der Erfordernisse von Brandbeständigkeit und/oder Feuerwiderstand, insbesondere Brandbeständigkeit und/oder Feuerwiderstand gemäß DIN EN 13501-2: 2016-12 und/oder DIN 4102-2: 1977-09, eine Vielzahl von mit einer aluminiumhaltigen und/oder aluminiumlegierten Feuerverzinkungsschicht versehenen Stahlbauteilen umfasst, wobei das Tragwerk frei ist von zusätzlichen konstruktiven Brandschutzmaßnahmen und -vorrichtungen und/oder das Tragwerk keine zusätzlichen konstruktiven Brandschutzelemente aufweist,

wobei das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 500 °C bis 850 ° eine Emissivität der Oberfläche $\varepsilon_m$ im Bereich von 0,05 bis 0,60, bestimmt gemäß DIN EN 1993-1-2: 2006-10, aufweist,

wobei die aluminiumhaltige und/oder aluminiumlegierte Feuerverzinkungsschicht die folgende Zusammensetzung aufweist, wobei alle nachfolgend genannten Mengenangaben auf die aluminiumhaltige und/oder aluminiumlegierte Feuerverzinkungsschicht bezogen sind und derart auszuwählen sind, dass insgesamt 100 Gew.-% resultieren:

(i) Zink (Zn) in Mengen von 92 Gew.-% bis 96 Gew.-%,

(ii) Aluminium (Al) in Mengen von 4 Gew.-% bis 8 Gew.-%,

(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%;

mit der Maßgabe, dass der Magnesiumanteil weniger als 0,2 Gew.-%, insbesondere weniger als 0,15 Gew.-%, beträgt.

Im Rahmen des erfindungsgemäßen siebten Erfindungsaspekts ist es dabei vorgesehen, dass das mit der aluminiumhaltigen und/oder aluminiumlegierten Feuerverzinkungsschicht versehene Stahlbauteil bzw. das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C, bevorzugt bei Temperaturen im Bereich von 500 °C bis 800 °C, eine Emissivität (Emissionsgrad) der Oberfläche $\varepsilon_m$ im Bereich von 0,05 bis 0,60, ganz besonders bevorzugt im Bereich von 0,05 bis 0,55, aufweist.

Für weitergehende Einzelheiten zu dem siebten Erfindungsaspekt kann auf die obigen Ausführungen in Bezug auf den ersten bis sechsten Erfindungsaspekt verwiesen werden, welche in entsprechender Weise auch für den siebten Erfindungsaspekt gelten.

Darüber hinaus betrifft die vorliegende Erfindung - gemäß einem **achten** Aspekt der vorliegenden Erfindung - ein das erfindungsgemäße Tragwerk ausweisendes Bauwerk, insbesondere Gebäude oder Gebäudeteil, gemäß dem diesbezüglichen unabhängigen Anspruch (Anspruch 15).

Gegenstand der vorliegenden Erfindung gemäß dem achten Erfindungsaspekt ist somit ein Bauwerk, insbesondere Gebäude oder Gebäudeteil, welches ein wie zuvor beschriebenes erfindungsgemäßes Tragwerk gemäß dem siebten Erfindungsaspekt aufweist.

Im Rahmen des erfindungsgemäßen siebten Erfindungsaspekts kann es dabei insbesondere vorgesehen sein, dass das Bauwerk frei ist von zusätzlichen konstruktiven Brandschutzmaßnahmen und -vorrichtungen und/oder das Bauwerk keine zusätzlichen konstruktiven Brandschutzelemente aufweist.

Für weitergehende Einzelheiten zu dem achten Erfindungsaspekt kann auf die obigen Ausführungen in Bezug auf den ersten bis siebten Erfindungsaspekt verwiesen werden, welche in entsprechender Weise auch für den siebten Erfindungsaspekt gelten.

Schließlich ist Gegenstand der vorliegenden Erfindung - gemäß einem **neunten** Aspekt der vorliegenden Erfindung - die Verwendung einer aluminiumhaltigen und/oder aluminiumlegierten Feuerverzinkungsschicht (insbesondere einer wie zuvor beschrieben oder definierten aluminiumhaltigen und/ oder aluminiumlegierten Feuerverzinkungsschicht bzw. insbesondere einer gemäß dem erfindungsgemäßen Verfahren oder Verwendung erhältlichen aluminiumhaltigen und/oder aluminiumlegierten Feuerverzinkungsschicht) zur Erzeugung von Brandbeständigkeit und/oder Feuerwiderstand an eisenbasierten oder eisenhaltigen, insbesondere stahlbasierten oder stahlhaltigen, Gegenständen und/oder zur Ausrüstung eisenbasierten oder eisenhaltigen, insbesondere stahlbasierten oder stahlhaltigen, Gegenständen mit Brandbeständigkeit und/oder Feuerwiderstand gemäß dem diesbezüglichen unabhängigen Anspruch (Anspruch 16).

Gegenstand der vorliegenden Erfindung gemäß dem neunten Erfindungsaspekt ist somit die Verwendung einer aluminiumhaltigen und/oder aluminiumlegierten Feuerverzinkungsschicht zur Erzeugung von Brandbeständigkeit und/oder Feuerwiderstand an eisenbasierten oder eisenhaltigen, insbesondere stahlbasierten oder stahlhaltigen, Gegenständen und/oder zur Ausrüstung eisenbasierten oder eisenhaltigen, insbesondere stahlbasierten oder stahlhaltigen, Gegenständen mit Brandbeständigkeit und/oder Feuerwiderstand,

wobei das Stahlbauteil mit einer aluminiumhaltigen und/oder aluminiumlegierten Feuerverzinkungsschicht versehen wird und/oder wobei das Stahlbauteil einer Feuerverzinkung unter Verwendung einer aluminiumhaltigen und/oder aluminiumlegierten Zinkschmelze unterzogen wird,

wobei die aluminiumhaltige und/oder aluminiumlegierte Feuerverzinkungsschicht mit einer Schichtdicke im Bereich von 4 μm bis 25 μm auf das Stahlbauteil aufgebracht wird und

wobei die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, im Bereich von 4 Gew.-% bis 8 Gew.-% aufweist;

derart und/oder mit der Maßgabe, dass das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C, eine Emissivität der Oberfläche $\varepsilon_m$ im Bereich von 0,05 bis 0,60, bestimmt gemäß DIN EN 1993-1-2: 2006-10, aufweist;

wobei die aluminiumhaltige und/oder aluminiumlegierte Feuerverzinkungsschicht die folgende Zusammensetzung aufweist, wobei alle nachfolgend genannten Mengenangaben auf die aluminiumhaltige und/oder aluminiumlegierte Feuerverzinkungsschicht bezogen sind und derart auszuwählen sind, dass insgesamt 100 Gew.-% resultieren:

(i) Zink (Zn) in Mengen von 92 Gew.-% bis 96 Gew.-%,
(ii) Aluminium (Al) in Mengen von 4 Gew.-% bis 8 Gew.-%,
(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%;

mit der Maßgabe, dass der Magnesiumanteil weniger als 0,2 Gew.-%, insbesondere weniger als 0,15 Gew.-%, beträgt.

Für weitergehende Einzelheiten zu dem neunten Erfindungsaspekt kann auf die obigen Ausführungen in Bezug auf den ersten bis achten Erfindungsaspekt verwiesen werden, welche in entsprechender Weise auch für den neunten Erfindungsaspekt gelten.

Die vorliegende Erfindung wird auch anhand von weiterführenden Zeichnungen bzw. Figurendarstellungen beschrieben, wobei die diesbezüglichen Ausführungen für sämtliche erfindungsgemäße Aspekte gelten und wobei die diesbezüglichen Ausführungen keinesfalls beschränkend sind; zu den Zeichnungen bzw. Figurendarstellungen kann auch auf die nachfolgenden Ausführungen gemäß den Ausführungsbeispielen verwiesen werden.

In den Figurendarstellungen zeigt:

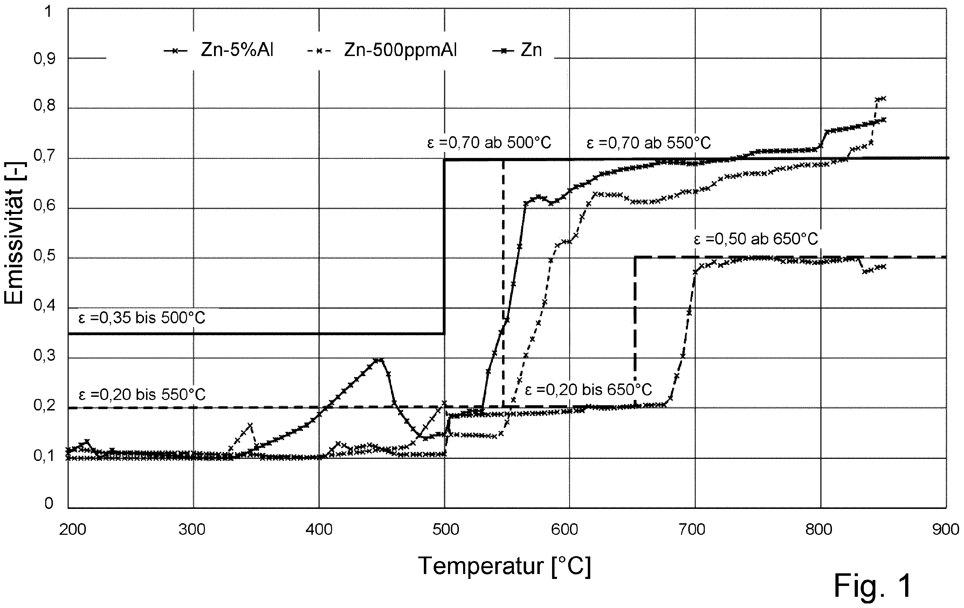

Fig. 1   in Kleinbrandversuchen ermittelte Diagrammdarstellung des Verhaltens der Emissivität (Emissionsgrad) $\varepsilon_m$ der Oberfläche verschiedener Stahlbauteile (jeweils Niedrig-Silizium-Stahl, Si-Gehalt < 0,03 %) bei zunehmender Temperatur in Abhängigkeit vom Aluminiumgehalt im Überzug (Reinzink-Feuerverzinkungsschicht mit 0 % Al als Vergleich bzw. Referenz, Al-legierte Feuerverzinkungsschicht mit 500 ppm Al (nicht erfindungsgemäß) und erfindungsgemäß Al-legierte Feuerverzinkungsschicht mit 5 Gew.-% Al), wobei mit zunehmenden Al-Gehalt der Emissivitätswert signifikant abgesenkt wird;

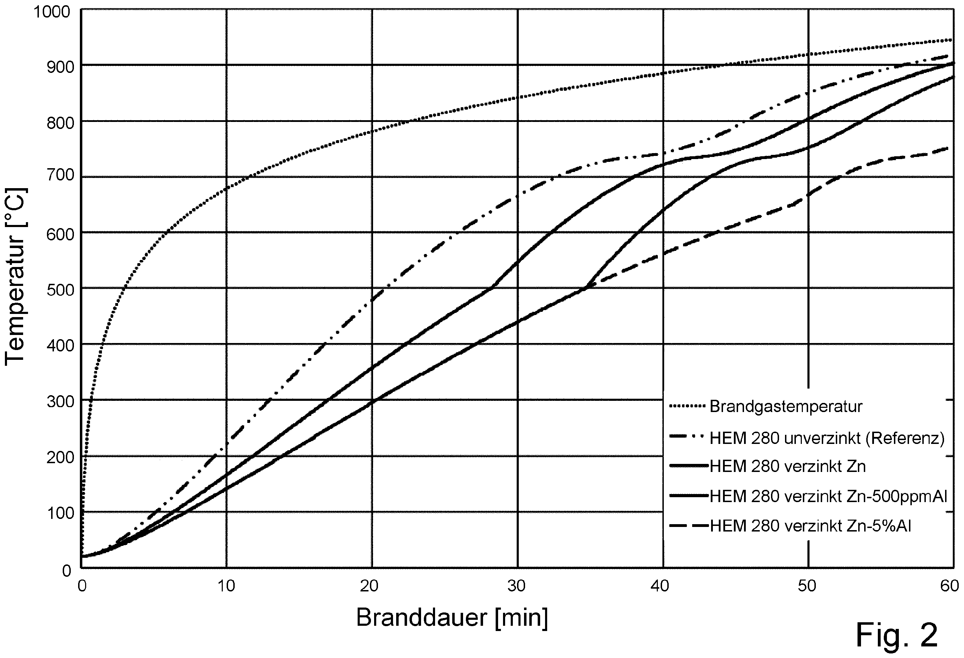

Fig. 2   in Kleinbrandversuchen beobachtete Entwicklung der Bauteiltemperatur verschiedener Stahlbauteile (jeweils Niedrig-Silizium-Stahl, Si-Gehalt < 0,03 %; unverzinktes Stahlbauteil als Vergleich bzw. Referenz, Reinzink-Feuerverzinkungsschicht mit 0 % Al als Vergleich bzw. Referenz, Al-legierte Feuerverzinkungsschicht mit 500 ppm Al (nicht erfindungsgemäß) und erfindungsgemäß Al-legierte Feuerverzinkungsschicht mit 5 Gew.-% Al) in Abhängigkeit von der Brandgastemperatur, wobei das Ausmaß der Bauteilerwärmung mit zunehmendem Aluminiumgehalt signifikant verringert wird;

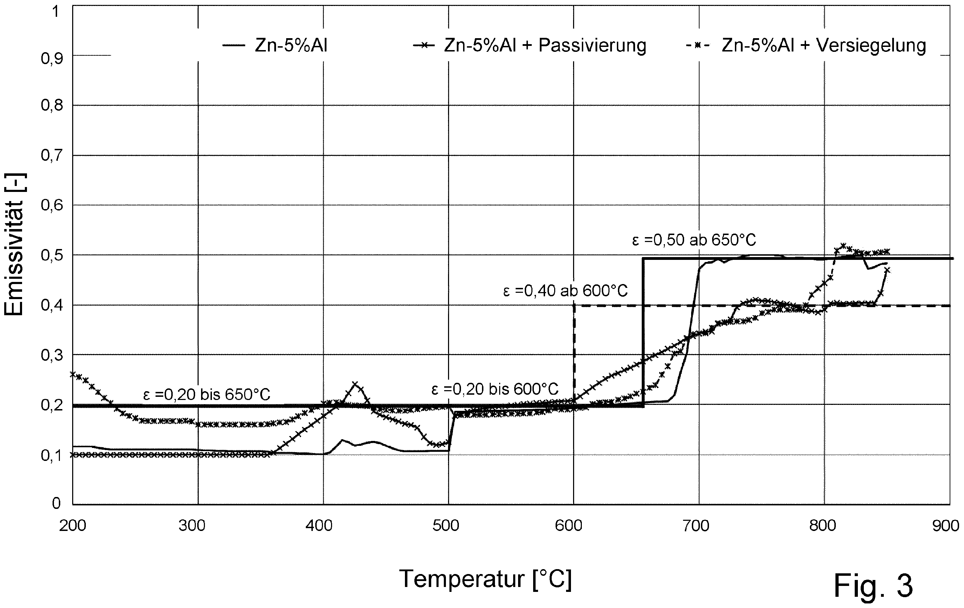

Fig. 3   in Kleinbrandversuchen ermittelte Diagrammdarstellung des Verhaltens der Emissivität (Emissionsgrad) $\varepsilon_m$ der Oberfläche verschiedener Stahlbauteile (jeweils Niedrig-Silizium-Stahl, Si-Gehalt < 0,03 %) bei zunehmender Temperatur in Abhängigkeit von einer zusätzlichen Passivierung oder Versiegelung bei konstantem Aluminiumgehalt im Überzug von 5 Gew.-% (jeweils Al-legierte Feuerverzinkungsschicht mit 5 Gew.-% Al), wobei durch die zusätzliche Passivierung oder Versiegelung der Emissivitätswert weiterführend abgesenkt wird

Weitere Ausgestaltungen, Abwandlungen und Variationen der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen, sondern lediglich beispielhafte und nicht limitierende Durchführungsweisen und Ausgestaltungen erläutern sollen.

**AUSFÜHRUNGSBEISPIELE**

**Allgemeiner Versuchsaufbau und Durchführung**

Der Versuchsaufbau und die Versuchsdurchführung, insbesondere die Durchführung der Kleinbrandversuche, einschließlich Messung des Temperaturverhaltens im Brandfall, Erfassung der ETK-Kurven und Ermittlung der Emis-

sivität (Emissionsgrad) $\varepsilon_m$ der Stahloberflächen erfolgt nach dem im allgemeinen Beschreibungsteil genannten Emissivity-Performance-Test, wie er im Detail beschrieben ist in: C. Gaigl und M. Mensinger, Technical Report "Thermal impact on HDG construction", Technische Universität München, Februar 2018, sowie M. Mensinger und C. Gaigl, Aufsatz "Feuerwiderstand verzinkter Stahlkonstruktionen", Stahlbau, Vol. 88, Seiten 3 bis 10, Januar 2019. Das Bestimmungsverfahren für die Emissivität (Emissionsgrad) der Oberfläche $\varepsilon_m$ verwendet einen sogenannten Emissivity-Performance-Test, wobei die Emissivität (Emissionsgrad) der Oberfläche $\varepsilon_m$ (d. h. gemäß DIN EN 1993-1-2: 2006-10) aus dem Temperaturverlauf bei kontinuierlicher bzw. zunehmender thermischer Belastung bestimmt und ermittelt wird (vgl. obige Ausführungen in der Beschreibung).

Die Temperaturmessung im Kleinversuch erfolgte mittels zwei Infrarot (IR)-Sensoren der Firma Optris. Das erste Modell "LT" misst in einem Spektralbereich von 8 bis 14 μm, das zweite Pyrometer vom Modell "3MH1" misst im Bereich um die Wellenlänge von 2,3 μm.

Je nach Spektralbereich wird nur ein bestimmter Temperaturbereich abgedeckt. Bei gewissen Wellenlängen kann nur gemessen werden, sofern die Temperaturen ausreichend hoch sind.

Je höher die Strahlungsintensität ist, desto höher ist auch die Temperatur. Die Strahlungsintensität wird dann in den kurzwelligen Spektralbereich verschoben. Bei niedrigen Temperaturen wird wenig bis keine Strahlung im Bereich des 2,3 μm-Sensors detektiert. Bei Temperaturen über 400 °C erfährt der 2,3 μm-Sensor eine deutlich höhere Strahlungsintensität als ein Sensor, welcher im langwelligeren Spektrum misst. Je höher die Strahlungsintensität ist, desto geringer ist die Anfälligkeit für Abweichungen bei Messungen. Für den 3MH1-Sensor sind nur Ergebnisse ab Temperaturen von ca. 200 °C von Bedeutung.

Für die Temperaturmessung in den Stahlproben während des Versuchs werden vier Thermoelemente verwendet, welche in die dafür vorgesehenen 5 mm tiefe Bohrungen der Probekörper eingebracht werden. Es werden jeweils drei Probekörper für die Kleinbrandversuche vorgesehen.

Der Emissionsgrad wird derart angepasst, dass die Temperatur der Pyrometer mit der Temperatur der Thermoelemente übereinstimmt. Durch die Messdatenerfassung kann so ein temperaturabhängiger Emissionsgrad ermittelt werden.

Die Auswertung der Ergebnisse beginnt ab Temperaturen von 200 °C, da unterhalb dieser Temperatur die Ergebnisse der IR-Sensoren noch nicht genug Strahlungsenergie empfangen

## Versuchsdurchführungen und Ergebnisse

Es werden 10mm dicke Versuchsbleche in verschiedenen Varianten verzinkt. Anschließend wird die Emissivität der verschiedenen Oberflächen in Kleinbrandversuchen bestimmt.

Oberflächen- und Stahlvarianten:

| Legierung der Feuerverzinkungsschicht | Nachbehandlung | Interne Bezeichnung | Stahl |
|---|---|---|---|
| Rein-Zn (Al << 50 ppm)* | - | duroZINQ | Niedrig-Si(< 0,03%) |
| Zn - 500 ppm Al* | - | duroZINQ Al | Niedrig-Si(< 0,03%) |
| Zn - 0,5 % Al* | - | | Sebisty (Si > 0,12%) |
| Zn - 1 % Al* | - | | Sebisty (Si > 0,12%) |
| Zn - 5 % Al | - | microZINQ | Niedrig-Si(< 0,03%) |
| Zn - 5 % Al | Passivierung (Cr III - basiert) | microZINQ + duropass | Niedrig-Si(< 0,03%) |
| Zn - 5 % Al | Versiegelung (Silikatisierung) | microZINQ + duroseal | Niedrig-Si(< 0,03%) |

(fortgesetzt)

| Legierung der Feuerverzinkungsschicht | Nachbehandlung | Interne Bezeichnung | Stahl |
|---|---|---|---|
| Zn - 5 % Al | Versiegelung | microZINQ + duroseal | Sebisty (Si > 0,12%) |
| * nicht erfindungsgemäß | | | |

Verhalten bei Niedrig-Si-Stahl

In den Kleinbrandversuchen zeigt sich das in Fig. 1 dargestellte Verhalten der Emissivität bei zunehmender Temperatur in Abhängigkeit des Al-Gehalts in der Zinkschmelze bzw. im Überzug. Fig. 1 zeigt somit den Einfluss des Al-Gehalts in Bezug auf das Verhalten der Emissivität bei zunehmender Temperatur (hier speziell für Stahl mit niedrigem Si-Gehalt). Bei dem herkömmlich verzinkten Stahlbauteil (Reinzink-Feuerverzinkungsschicht) zeigt sich, dass es oberhalb von 500 °C, spätestens ab 530 °C zu einem schnellen Anstieg des Emissivitätswertes bis 0,6 bei 565 °C und dann, mit verlangsamter Geschwindigkeit weiter, ab 735 °C bis über 0,7 kommt (nicht erfindungsgemäß, obere Kurve). Dahingegen bewirkt bereits ein geringer Al-Gehalt in der Feuerverzinkungsschicht von nur 500 ppm zum einen eine signifikante Verschiebung des Anstiegs des Emissivitätswertes zu einer höheren Temperatur hin, nämlich auf 550 °C, und zum anderen eine signifikante Absenkung der Emissivität bei höheren Temperaturen (mittlere Kurve); die Emissivität von 0,6 wird dabei erst bei einer Temperatur von 615 °C (anstatt 565 °C) erreicht. Bei einem Al-Gehalt von 5 Gew.-% in der der Zinkschichtausbildung zugrundeliegenden Zinkschmelze werden diese positiven Entwicklungen des Emissivitätswert nochmals signifikant verbessert (untere Kurve).

Fig. 1, welche den Einfluss des Al-Gehalts in der Feuerverzinkungsschicht bei niedrig Si-haltigem Stahl (Si < 0,03 %) betrifft, zeigt somit, dass sich mit zunehmendem Al-Gehalt der Anstieg der Emissivität zu höheren Temperaturen hin verschiebt, wobei der Anstieg zusätzlich geringer ausfällt.

Zur Durchführung der Heißbemessung gemäß DIN EN 1993-1-2 können aus den Versuchskurven abschnittsweise konstante Emissivitäten abgeleitet und hiermit die Entwicklung der Bauteiltemperatur unter der genormten Einheitsbrandbelastung berechnet werden. Hierbei zeigt sich, dass sich eine reduzierte Emissivität derart auswirkt, dass sich das Stahlprofil im Brandfall langsamer erwärmt.

In Fig. 2 (welche die Entwicklung der Bauteiltemperatur bei verschiedenen Zinküberzügen bei niedrig Si-Stahl betrifft) ist die Temperaturentwicklung für ein Stahlprofil HEM 280 im unverzinkten Zustand (nicht erfindungsgemäß = Referenz) sowie mit drei Zinküberzügen (Reinzink = nicht erfindungsgemäß; Zn - 500 ppm Al = nicht erfindungsgemäß und Zn - 5 % Al = erfindungsgemäß) vergleichend gegenübergestellt. Wie in Fig. 2 zu erkennen ist, erwärmt sich das gleiche Bauteil bei Verzinkung mit einer Al-haltigen Zinkschmelze umso langsamer, je höher der Al-Gehalt ist. Das als Referenz aufgeführte, ungeschützte (also nicht-verzinkte) Profil erwärmt sich im Vergleich zu allen Verzinkungsvarianten am schnellsten.

Für die typischen Brandfallklassen R30 und R60 gemäß DIN EN 13501-2: 2016-12, für welche ein Feuerwiderstand der Tragkonstruktion von 30 Minuten bzw. 60 Minuten gefordert wird, ergeben sich aus der Berechnung folgende Temperaturen nach den entsprechenden Branddauern:

| Si < 0,03 % | Emissivität $\varepsilon_m$ | | | Temperatur nach 30 min | Temperatur nach 60 min |
|---|---|---|---|---|---|
| unverzinkt* | 0,7 | | durchgehend | 665,5 | 917,1 |
| Rein-Zn* | 0,35 | 0,7 | bis / ab 500 °C | 546,7 | 902,9 |
| Zn - 500 ppm Al* | 0,2 | 0,7 | bis / ab 500 °C | 439,7 | 878,6 |
| Zn - 5 % Al | 0,2 | 0,5 | bis / ab 650 °C | 439,7 | 754,8 |
| * nicht erfindungsgemäß | | | | | |

Eine geringere Bauteiltemperatur zu den Bemessungszeitpunkten (30 Minuten bzw. 60 Minuten) bedeutet im Hinblick auf die Tragwerkstatik, dass das betrachtete Stahlbauteil eine höhere Traglast ertragen kann und somit vorteilhaft ist. Alternativ kann bei Beibehaltung der Bauteiltemperatur die Größe der betrachteten Komponente reduziert werden, wodurch sich Masseneinsparungen auf der Stahlseite ergeben.

Für das oben genannt Beispiel stellt sich der Einspareffekt wie folgt dar:

| Zustand | Profil | Profilgewicht [kg/m] | Temperatur nach 30 Minuten |
|---|---|---|---|
| Zn-verzinkt* | HEM 280 | 189 | 546 |
| Zn - 5 % Al | HEB 360 | 142 | 547 |
| nicht erfindungsgemäß | | | |

Das zur Erzielung der gleichen Bauteiltemperatur nach 30 Minuten Brandbelastung erforderliche Stahlprofil kann von einem Stahlprofil des Typs HEM280 auf ein Stahlprofil des Typs HEB360 reduziert werden, was zu einer Gewichtsersparnis von 47 kg/m führt.

Verhalten bei Si-haltigem Stahl

Bei Stahl mit einem Si-Gehalt im Sebisty-Bereich (Si-Gehalt > 0,12 %) ergeben sich aus den Kleinbrandversuchen mit in Al-haltigen Zinkschmelzen erzeugten Überzügen wiederum Emissivitäts-/Temperatur-Kurven, welche deutlich von dem als Referenz dienenden Verlauf mit einem Al-freien Zinküberzug abweichen. Es zeigt sich, dass mit zunehmendem Al-Gehalt der Anstieg der Kurven zu höheren Temperaturen verschoben wird. Auch liegen die Maximalwerte der Emissivität wieder deutlich unterhalb von 0,7.

Wie schon zuvor für niedrig Si-haltigen Stahl beschrieben, lassen sich auch für diese Verläufe abschnittsweise konstante Emissivitäten zur Berechnung der Temperaturentwicklung unter Brandlast ableiten. Die resultierenden Ergebnisse werden wiederum für ein Stahlprofil HEM280 bestimmt.

Der erfindungsgemäße Effekt der Brand- bzw. Feuerbeständigkeit wird somit unabhängig von der Stahllegierung des Stahlbauteils erzielt.

Einfluss von Nachbehandlungen

In den Kleinbrandversuchen zeigt sich im Hinblick auf den Einfluss einer nachträglich auf den Zn/Al-Überzug aufgebrachten Passivierung oder Versiegelung, dass diese zu sehr ähnlichen Emissivitäten wie bei dem unbehandelten System führen. Entsprechend zeigt sich eine bestehende positive, wenn auch tendenziell geringfügige Wirkung in Bezug auf die Temperaturentwicklung (vgl. Abbildung gemäß Fig. 3).

**Patentansprüche**

1. Verfahren zur Erzeugung eines brand- und/oder feuerbeständigen Stahlbauteils, insbesondere eines gemäß DIN EN 13501-2: 2016-12 und/oder DIN 4102-2: 1977-09 brand- und/oder feuerbeständigen Stahlbauteils,

   wobei das Stahlbauteil mit einer aluminiumhaltigen und/oder aluminiumlegierten Feuerverzinkungsschicht versehen wird und/oder wobei das Stahlbauteil einer Feuerverzinkung unter Verwendung einer aluminiumhaltigen und/oder aluminiumlegierten Zinkschmelze unterzogen wird,
   wobei die aluminiumhaltige und/oder aluminiumlegierte Feuerverzinkungsschicht mit einer Schichtdicke im Bereich von 4 $\mu$m bis 25 $\mu$m auf das Stahlbauteil aufgebracht wird und
   wobei die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, im Bereich von 4 Gew.-% bis 8 Gew.-% aufweist;
   derart und/oder mit der Maßgabe, dass das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C eine Emissivität der Oberfläche $\varepsilon_m$ im Bereich von 0,05 bis 0,60, bestimmt gemäß DIN EN 1993-1-2: 2006-10, aufweist;
   wobei die aluminiumhaltige und/oder aluminiumlegierte Feuerverzinkungsschicht die folgende Zusammensetzung aufweist, wobei alle nachfolgend genannten Mengenangaben auf die aluminiumhaltige und/oder aluminiumlegierte Feuerverzinkungsschicht bezogen sind und derart auszuwählen sind, dass insgesamt 100 Gew.-% resultieren:

      (i) Zink (Zn) in Mengen von 92 Gew.-% bis 96 Gew.-%,

(ii) Aluminium (Al) in Mengen von 4 Gew.-% bis 8 Gew.-%,
(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%;

mit der Maßgabe, dass der Magnesiumanteil weniger als 0,2 Gew.-%, insbesondere weniger als 0,15 Gew.-%, beträgt.

2.  Verfahren nach Anspruch 1,

wobei die Brandbeständigkeit und/oder der Feuerwiderstand mittels der Dicke und Zusammensetzung und/oder Ausbildung der aluminiumhaltigen und/oder aluminiumlegierten Feuerverzinkungsschicht, insbesondere mittels des Aluminiumgehalts der aluminiumhaltigen und/oder aluminiumlegierten Feuerverzinkungsschicht, eingestellt und/oder gesteuert wird;
insbesondere wobei mit Erhöhung des Aluminiumgehalts der aluminiumhaltigen und/oder aluminiumlegierten Feuerverzinkungsschicht die Brandbeständigkeit und/oder der Feuerwiderstand erhöht wird/werden; und/oder insbesondere wobei mit Erhöhung der Schichtdicke der aluminiumhaltigen und/oder aluminiumlegierten Feuerverzinkungsschicht die Brandbeständigkeit und/oder der Feuerwiderstand erhöht wird/werden.

3.  Verfahren nach Anspruch 1 oder Anspruch 2,

wobei das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C, insbesondere bei Temperaturen im Bereich von 500 °C bis 800 °C, eine Emissivität (Emissionsgrad) der Oberfläche $\varepsilon_m$ im Bereich von 0,05 bis 0,55, aufweist;
insbesondere wobei das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 500 °C bis 650 °C eine Emissivität (Emissionsgrad) der Oberfläche $\varepsilon_m$ von höchstens 0,40, insbesondere von höchstens 0,35, vorzugsweise von höchstens 0,30, besonders bevorzugt von höchstens 0,25, aufweist und wobei das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 650 °C bis 850 °C eine Emissivität (Emissionsgrad) der Oberfläche $\varepsilon_m$ von höchstens 0,60, vorzugsweise von höchstens 0,55, aufweist.

4.  Verfahren nach einem der vorangehenden Ansprüche,

wobei das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil eine Feuerwiderstandsklasse nach DIN 4102-2: 1977-09 von mindestens F30, insbesondere von mindestens F60, vorzugsweise von mindestens F90, besonders bevorzugt von mindestens F120, aufweist; und/oder
wobei das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil eine Feuerwiderstandsklasse nach DIN EN 13501-2: 2016-12 von mindestens R30, insbesondere von mindestens R60, vorzugsweise von mindestens R90, besonders bevorzugt von mindestens R120, aufweist.

5.  Verfahren nach einem der vorangehenden Ansprüche,

wobei der Stahl des Stahlbauteils ausgewählt ist aus (i) Niedrigsiliziumstahl, insbesondere mit einem Gehalt an Silizium ≤ 0,03 Gew.-% und mit einem Gehalt an Phosphor < 0,02 Gew.-%, bezogen auf den Stahl; (ii) Sandelin-Stahl, insbesondere mit einem Gehalt an Silizium zwischen 0,03 Gew.-% und 0,14 Gew.-%, bezogen auf den Stahl; (iii) Sebisty-Stahl, insbesondere mit einem Gehalt an Silizium zwischen 0,14 Gew.- % und 0,25 Gew.-%; (iv) Hochsiliziumstahl, insbesondere mit einem Gehalt an Silizium > 0,25 Gew.-%, bezogen auf den Stahl; und deren Kombinationen; und/oder
wobei der Stahl des Stahlbauteils ausgewählt ist aus Stahl der Kategorien A, B, C und/oder D gemäß DIN EN ISO 14713-2: 2020-05 und deren Kombinationen; und/oder

wobei das Stahlbauteil ein Stahlkonstruktionselement, ein Stahlträger, ein Stahlprofil, ein Profilstahl, ein Stahlblech, ein Stahlrohr oder dergleichen ist; und/oder

wobei das Stahlbauteil ein für das Bauwesen bestimmtes Stahlbauteil ist und/oder wobei das Stahlbauteil ein für das Bauwesen bestimmtes Stahlkonstruktionselement oder - bauteil ist; und/oder

wobei das Stahlbauteil ein für das Bauwesen oder für den Fahrzeugbau und/oder die Automobilherstellung bestimmtes oder ausgebildetes Stahlbauteil ist.

6. Verfahren nach einem der vorangehenden Ansprüche,

wobei die Feuerverzinkung (Schmelztauchverzinkung) bei einer Temperatur im Bereich von 375 °C bis 750 °C, insbesondere Temperatur im Bereich von 380 °C bis 700 °C, vorzugsweise Temperatur im Bereich von 390 °C bis 680 °C, noch mehr bevorzugt im Bereich von 395 °C bis 675 °C, durchgeführt wird; und/oder

wobei die Feuerverzinkung (Schmelztauchverzinkung) für eine Zeitdauer durchgeführt, welche ausreichend ist, um eine wirksame Feuerverzinkung (Schmelztauchverzinkung), zu gewährleisten, insbesondere für eine Zeitdauer im Bereich von 0,0001 bis 60 Minuten, vorzugsweise im Bereich von 0,001 bis 45 Minuten, bevorzugt im Bereich von 0,01 bis 30 Minuten, noch mehr bevorzugt im Bereich von 0,1 bis 15 Minuten.

7. Verfahren nach einem der vorangehenden Ansprüche,

wobei die Feuerverzinkung (Schmelztauchverzinkung) einschließlich der Vorbehandlungs- und/oder Nachbehandlungsvorgänge die folgenden Verfahrensschritte, insbesondere in der nachfolgend aufgeführten Reihenfolge, umfasst:

(a) Entfettungsbehandlung, vorzugsweise alkalische Entfettungsbehandlung, des Stahlbauteils, insbesondere in mindestens einem Entfettungsbad;
(b) gegebenenfalls Spülen des in Verfahrensschritt (a) entfetteten Stahlbauteils, insbesondere in mindestens einem Spülbad;
(c) Beizbehandlung, vorzugsweise saure Beizbehandlung, des in Verfahrensschritt (a) entfetteten und gegebenenfalls in Verfahrensschritt (b) gespülten Stahlbauteils, insbesondere in mindestens einem Beizbad;
(d) gegebenenfalls Spülen des in Verfahrensschritt (c) gebeizten Stahlbauteils, insbesondere in mindestens einem Spülbad;
(e) Flussmittelbehandlung des in Verfahrensschritt (c) gebeizten und gegebenenfalls in Verfahrensschritt (d) gespülten Stahlbauteils mittels einer Flussmittelzusammensetzung in einem Flussmittelbad;
(f) gegebenenfalls Trocknungsbehandlung des in Verfahrensschritt (e) der Flussmittelbehandlung unterzogenen Stahlbauteils;
(g) Feuerverzinkung des in Verfahrensschritt (e) der Flussmittelbehandlung unterzogenen und gegebenenfalls in Verfahrensschritt (f) getrockneten Stahlbauteils in einer aluminiumhaltigen und/oder aluminiumlegierten Zinkschmelze, vorzugsweise durch Tauchen des Stahlbauteils in die aluminiumhaltige und/oder aluminiumlegierte Zinkschmelze;

insbesondere wobei sich der in Verfahrensschritt (g) durchgeführten Feuerverzinkung ein Abkühlungsschritt (h) anschließt und/oder wobei das in Verfahrensschritt (g) feuerverzinkte Stahlbauteil einer Abkühlungsbehandlung (h) unterzogen wird, gegebenenfalls gefolgt von einem weiteren Nachbearbeitungs- und/oder Nachbehandlungsschritt (i);
insbesondere wobei der Abkühlungsschritt (h) und/oder die Abkühlungsbehandlung (h) mittels Luft und/oder in Gegenwart von Luft erfolgt, vorzugsweise bis auf Umgebungstemperatur.

8. Verwendung einer aluminiumhaltigen und/oder aluminiumlegierten Feuerverzinkungsschicht zur Erzeugung von Brandbeständigkeit und/oder Feuerwiderstand, insbesondere Brandbeständigkeit und/oder Feuerwiderstand gemäß DIN EN 13501-2: 2016-12 und/oder DIN 4102-2: 1977-09, an einem Stahlbauteil und/oder zur Ausrüstung eines Stahlbauteils mit Brandbeständigkeit und/oder Feuerwiderstand, insbesondere mit Brandbeständigkeit und/oder Feuerwiderstand gemäß DIN EN 13501-2: 2016-12 und/oder DIN 4102-2: 1977-09, vorzugsweise zur Erzeugung eines brand- und/oder feuerbeständigen Stahlbauteils, insbesondere eines gemäß DIN EN 13501-2: 2016-12 und/oder DIN 4102-2: 1977-09 brand- und/oder feuerbeständigen Stahlbauteils,

wobei das Stahlbauteil mit einer aluminiumhaltigen und/oder aluminiumlegierten Feuerverzinkungsschicht versehen wird und/oder wobei das Stahlbauteil einer Feuerverzinkung unter Verwendung einer aluminiumhaltigen und/oder aluminiumlegierten Zinkschmelze unterzogen wird,

wobei die aluminiumhaltige und/oder aluminiumlegierte Feuerverzinkungsschicht mit einer Schichtdicke im Bereich von 4 $\mu$m bis 25 $\mu$m auf das Stahlbauteil aufgebracht wird und

wobei die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, im Bereich von 4 Gew.-% bis 8 Gew.-% aufweist;

derart und/oder mit der Maßgabe, dass das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C, eine Emissivität der Oberfläche $\varepsilon_m$ im Bereich von 0,05 bis 0,60, bestimmt gemäß DIN EN 1993-1-2: 2006-10, aufweist;

wobei die aluminiumhaltige und/oder aluminiumlegierte Feuerverzinkungsschicht die folgende Zusammensetzung aufweist, wobei alle nachfolgend genannten Mengenangaben auf die aluminiumhaltige und/oder aluminiumlegierte Feuerverzinkungsschicht bezogen sind und derart auszuwählen sind, dass insgesamt 100 Gew.-% resultieren:

(i) Zink (Zn) in Mengen von 92 Gew.-% bis 96 Gew.-%,
(ii) Aluminium (Al) in Mengen von 4 Gew.-% bis 8 Gew.-%,
(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%;

mit der Maßgabe, dass der Magnesiumanteil weniger als 0,2 Gew.-%, insbesondere weniger als 0,15 Gew.-%, beträgt.

9. Verwendung einer Feuerverzinkung und/oder eines Feuerverzinkungsverfahrens zur Erzeugung von Brandbeständigkeit und/oder Feuerwiderstand, insbesondere Brandbeständigkeit und/oder Feuerwiderstand gemäß DIN EN 13501-2: 2016-12 und/oder DIN 4102-2: 1977-09, an einem Stahlbauteil und/oder zur Ausrüstung eines Stahlbauteils mit Brandbeständigkeit und/oder Feuerwiderstand, insbesondere mit Brandbeständigkeit und/oder Feuerwiderstand gemäß DIN EN 13501-2: 2016-12 und/oder DIN 4102-2: 1977-09, insbesondere zur Erzeugung eines brand- und/oder feuerbeständigen Stahlbauteils, vorzugsweise eines gemäß DIN EN 13501-2: 2016-12 und/oder DIN 4102-2: 1977-09 brand- und/oder feuerbeständigen Stahlbauteils,

wobei das Stahlbauteil mit einer aluminiumhaltigen und/oder aluminiumlegierten Feuerverzinkungsschicht versehen wird und/oder wobei das Stahlbauteil einer Feuerverzinkung unter Verwendung einer aluminiumhaltigen und/oder aluminiumlegierten Zinkschmelze unterzogen wird,

wobei die aluminiumhaltige und/oder aluminiumlegierte Feuerverzinkungsschicht mit einer Schichtdicke im Bereich von 4 $\mu$m bis 25 $\mu$m auf das Stahlbauteil aufgebracht wird und

wobei die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, im Bereich von 4 Gew.-% bis 8 Gew.-% aufweist;

derart und/oder mit der Maßgabe, dass das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C eine Emissivität der Oberfläche $\varepsilon_m$ unterhalb von 0,7, insbesondere im Bereich von 0,05 bis < 0,7, vorzugsweise im Bereich von 0,05 bis 0,65, besonders bevorzugt im Bereich von 0,05 bis 0,60, bestimmt gemäß DIN EN 1993-1-2: 2006-10, aufweist;

wobei die aluminiumhaltige und/oder aluminiumlegierte Feuerverzinkungsschicht die folgende Zusammensetzung aufweist, wobei alle nachfolgend genannten Mengenangaben auf die aluminiumhaltige und/oder aluminiumlegierte Feuerverzinkungsschicht bezogen sind und derart auszuwählen sind, dass insgesamt 100 Gew.-% resultieren:

(i) Zink (Zn) in Mengen von 92 Gew.-% bis 96 Gew.-%,
(ii) Aluminium (Al) in Mengen von 4 Gew.-% bis 8 Gew.-%,
(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%;

mit der Maßgabe, dass der Magnesiumanteil weniger als 0,2 Gew.-%, insbesondere weniger als 0,15 Gew.-%, beträgt.

10. Verwendung von Aluminium zur Erhöhung und/oder Verbesserung der Brandbeständigkeit und/oder des Feuerwiderstands, insbesondere der Brandbeständigkeit und/oder des Feuerwiderstands gemäß DIN EN 13501-2: 2016-12 und/oder DIN 4102-2: 1977-09, eines feuerverzinkten und/oder mit einer Feuerverzinkungsschicht versehenen Stahlbauteils,

wobei Aluminium in die Feuerverzinkungsschicht inkorporiert und/oder legiert wird, insbesondere in der Weise und/oder mit der Maßgabe, dass eine aluminiumhaltige und/oder aluminiumlegierte Feuerverzinkungsschicht resultiert und/oder dass das Stahlbauteil mit einer aluminiumhaltigen und/oder aluminiumlegierten Feuerverzinkungsschicht versehen wird,
wobei das Stahlbauteil mit einer aluminiumhaltigen und/oder aluminiumlegierten Feuerverzinkungsschicht versehen wird und/oder wobei das Stahlbauteil einer Feuerverzinkung unter Verwendung einer aluminiumhaltigen und/oder aluminiumlegierten Zinkschmelze unterzogen wird,
wobei die aluminiumhaltige und/oder aluminiumlegierte Feuerverzinkungsschicht mit einer Schichtdicke im Bereich von 4 $\mu$m bis 25 $\mu$m auf das Stahlbauteil aufgebracht wird und
wobei die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, im Bereich von 4 Gew.-% bis 8 Gew.-% aufweist;
derart und/oder mit der Maßgabe, dass das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C eine Emissivität der Oberfläche $\varepsilon_m$ im Bereich von 0,05 bis 0,60, bestimmt gemäß DIN EN 1993-1-2: 2006-10, aufweist;
wobei die aluminiumhaltige und/oder aluminiumlegierte Feuerverzinkungsschicht die folgende Zusammensetzung aufweist, wobei alle nachfolgend genannten Mengenangaben auf die aluminiumhaltige und/oder aluminiumlegierte Feuerverzinkungsschicht bezogen sind und derart auszuwählen sind, dass insgesamt 100-Gew.-% resultieren:

(i) Zink (Zn) in Mengen von 92 Gew.-% bis 96 Gew.-%,
(ii) Aluminium (Al) in Mengen von 4 Gew.-% bis 8 Gew.-%,
(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%;

mit der Maßgabe, dass der Magnesiumanteil weniger als 0,2 Gew.-%, insbesondere weniger als 0,15 Gew.-%, beträgt.

11. Verwendung nach einem der Ansprüche 8 bis 10,

wobei das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil eine Feuerwiderstandsklasse nach DIN 4102-2: 1977-09 von mindestens F30, insbesondere von mindestens F60, vorzugsweise von mindestens F90, besonders bevorzugt von mindestens F120, aufweist; und/oder
wobei das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil eine Feuerwiderstandsklasse nach DIN EN 13501-2: 2016-12 von mindestens R30, insbesondere von mindestens R60, vorzugsweise von mindestens R90, besonders bevorzugt von mindestens R120, aufweist.

12. Verwendung eines mit einer aluminiumhaltigen und/oder aluminiumlegierten Feuerverzinkungsschicht versehenen Stahlbauteils als baulicher Konstruktionsbestandteil zur Einhaltung der Erfordernisse von Brandbeständigkeit und/oder Feuerwiderstand, insbesondere Brandbeständigkeit und/oder Feuerwiderstand gemäß DIN EN 13501-2: 2016-12 und/oder DIN 4102-2: 1977-09

wobei das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C eine Emissivität der Oberfläche $\varepsilon_m$ im Bereich von 0,05 bis 0,60, bestimmt gemäß DIN EN 1993-1-2: 2006-10, aufweist; und

wobei das mit der aluminiumhaltigen und/oder aluminiumlegierten Feuerverzinkungsschicht versehene Stahlbauteil in Abwesenheit von und/oder ohne zusätzliche konstruktive Brandschutzmaßnahmen und -vorrichtungen eingesetzt wird,

wobei die aluminiumhaltige und/oder aluminiumlegierte Feuerverzinkungsschicht die folgende Zusammensetzung aufweist, wobei alle nachfolgend genannten Mengenangaben auf die aluminiumhaltige und/oder aluminiumlegierte Feuerverzinkungsschicht bezogen sind und derart auszuwählen sind, dass insgesamt 100-Gew.-% resultieren:

(i) Zink (Zn) in Mengen von 92 Gew.-% bis 96 Gew.-%,
(ii) Aluminium (Al) in Mengen von 4 Gew.-% bis 8 Gew.-%,
(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%;

mit der Maßgabe, dass der Magnesiumanteil weniger als 0,2 Gew.-%, insbesondere weniger als 0,15 Gew.-%, beträgt.

13. Verwendung eines mit einer aluminiumhaltigen und/oder aluminiumlegierten Feuerverzinkungsschicht versehenen Stahlbauteils als Konstruktionsbestandteil von Aufnahmevorrichtungen, insbesondere Einhausungen oder Behältnisse, für Energiespeicher oder Energiewandler, wie Brennstoffzellen, Akkumulatoren, Batterien, galvanische Elemente oder dergleichen, insbesondere für den Automobilbereich, vorzugsweise zur Einhaltung der Erfordernisse von Brandbeständigkeit und/oder Feuerwiderstand

wobei das Stahlbauteil mit einer aluminiumhaltigen und/oder aluminiumlegierten Feuerverzinkungsschicht versehen wird und/oder wobei das Stahlbauteil einer Feuerverzinkung unter Verwendung einer aluminiumhaltigen und/oder aluminiumlegierten Zinkschmelze unterzogen wird,

wobei die aluminiumhaltige und/oder aluminiumlegierte Feuerverzinkungsschicht mit einer Schichtdicke im Bereich von 4 $\mu$m bis 25 $\mu$m auf das Stahlbauteil aufgebracht wird und

wobei die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, im Bereich von 4 Gew.-% bis 8 Gew.-% aufweist;

derart und/oder mit der Maßgabe, dass das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C, eine Emissivität der Oberfläche $\varepsilon_m$ im Bereich von 0,05 bis 0,60, bestimmt gemäß DIN EN 1993-1-2: 2006-10, aufweist;

wobei die aluminiumhaltige und/oder aluminiumlegierte Feuerverzinkungsschicht die folgende Zusammensetzung aufweist, wobei alle nachfolgend genannten Mengenangaben auf die aluminiumhaltige und/oder aluminiumlegierte Feuerverzinkungsschicht bezogen sind und derart auszuwählen sind, dass insgesamt 100 Gew.-% resultieren:

(i) Zink (Zn) in Mengen von 92 Gew.-% bis 96 Gew.-%,
(ii) Aluminium (Al) in Mengen von 4 Gew.-% bis 8 Gew.-%,
(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%;

mit der Maßgabe, dass der Magnesiumanteil weniger als 0,2 Gew.-%, insbesondere weniger als 0,15 Gew.-%, beträgt.

14. Tragwerk, insbesondere Stahlbautragwerk, für ein Bauwerk, insbesondere für ein Gebäude oder Gebäudeteil, wobei das Tragwerk als bauliche Konstruktionsbestandteile zur Einhaltung der Erfordernisse von Brandbeständigkeit und/oder Feuerwiderstand, insbesondere Brandbeständigkeit und/oder Feuerwiderstand gemäß DIN EN 13501-2: 2016-12 und/oder DIN 4102-2: 1977-09, eine Vielzahl von mit einer aluminiumhaltigen und/oder aluminiumlegierten Feuerverzinkungsschicht versehenen Stahlbauteilen umfasst, wobei das Tragwerk frei ist von zusätzlichen konstruktiven Brandschutzmaßnahmen und -vorrichtungen und/oder das Tragwerk keine zusätzlichen konstruktiven Brandschutzelemente aufweist,

wobei das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 500 °C bis 850 ° eine Emissivität der Oberfläche $\varepsilon_m$ im Bereich von 0,05 bis 0,60, bestimmt gemäß DIN EN 1993-1-2: 2006-10, aufweist,

wobei die aluminiumhaltige und/oder aluminiumlegierte Feuerverzinkungsschicht die folgende Zusammensetzung aufweist, wobei alle nachfolgend genannten Mengenangaben auf die aluminiumhaltige und/oder aluminiumlegierte Feuerverzinkungsschicht bezogen sind und derart auszuwählen sind, dass insgesamt 100 Gew.-% resultieren:

(i) Zink (Zn) in Mengen von 92 Gew.-% bis 96 Gew.-%,
(ii) Aluminium (Al) in Mengen von 4 Gew.-% bis 8 Gew.-%,
(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%;

mit der Maßgabe, dass der Magnesiumanteil weniger als 0,2 Gew.-%, insbesondere weniger als 0,15 Gew.-%, beträgt.

15. Bauwerk, insbesondere Gebäude oder Gebäudeteil, aufweisend ein Tragwerk nach Anspruch 14.

16. Verwendung einer aluminiumhaltigen und/oder aluminiumlegierten Feuerverzinkungsschicht zur Erzeugung von Brandbeständigkeit und/oder Feuerwiderstand an eisenbasierten oder eisenhaltigen, insbesondere stahlbasierten oder stahlhaltigen, Gegenständen und/oder zur Ausrüstung eisenbasierten oder eisenhaltigen, insbesondere stahlbasierten oder stahlhaltigen, Gegenständen mit Brandbeständigkeit und/oder Feuerwiderstand,

wobei das Stahlbauteil mit einer aluminiumhaltigen und/oder aluminiumlegierten Feuerverzinkungsschicht versehen wird und/oder wobei das Stahlbauteil einer Feuerverzinkung unter Verwendung einer aluminiumhaltigen und/oder aluminiumlegierten Zinkschmelze unterzogen wird,

wobei die aluminiumhaltige und/oder aluminiumlegierte Feuerverzinkungsschicht mit einer Schichtdicke im Bereich von 4 $\mu$m bis 25 $\mu$m auf das Stahlbauteil aufgebracht wird und

wobei die aluminiumhaltige und/oder aluminiumlegierte Feuerverzinkungsschicht einen Aluminiumanteil, bezogen auf die aluminiumhaltige und/oder aluminiumlegierte Feuerverzinkungsschicht, im Bereich von 4 Gew.-% bis 8 Gew.-% aufweist;

derart und/oder mit der Maßgabe, dass das mit der aluminiumhaltigen und/oder aluminiumlegierten Feuerverzinkungsschicht versehene Stahlbauteil und/oder das der Feuerverzinkung unter Verwendung eines aluminiumhaltigen und/oder aluminiumlegierten Verzinkungsbads unterzogene Stahlbauteil bei Temperaturen im Bereich von 500 °C bis 850 °C, eine Emissivität der Oberfläche $\varepsilon_m$ im Bereich von 0,05 bis 0,60, bestimmt gemäß DIN EN 1993-1-2: 2006-10, aufweist;

wobei die aluminiumhaltige und/oder aluminiumlegierte Feuerverzinkungsschicht die folgende Zusammensetzung aufweist, wobei alle nachfolgend genannten Mengenangaben auf die aluminiumhaltige und/oder aluminiumlegierte Feuerverzinkungsschicht bezogen sind und derart auszuwählen sind, dass insgesamt 100 Gew.-% resultieren:

(i) Zink (Zn) in Mengen von 92 Gew.-% bis 96 Gew.-%,
(ii) Aluminium (Al) in Mengen von 4 Gew.-% bis 8 Gew.-%,
(iii) gegebenenfalls ein oder mehrere weitere Metalle, ausgewählt aus der Gruppe von Bismut (Bi), Blei (Pb), Zinn (Sn), Nickel (Ni), Silizium (Si), Magnesium (Mg) sowie deren Kombinationen, insbesondere in Mengen von 0,001 Gew.-% bis 10 Gew.-%;

mit der Maßgabe, dass der Magnesiumanteil weniger als 0,2 Gew.-%, insbesondere weniger als 0,15 Gew.-%, beträgt.

**Claims**

1. Method for producing a fire-resistant and/or fire-resistant steel component, in particular a fire-resistant and/or fire-resistant steel component in accordance with DIN EN 13501-2: 201612 and/or DIN 4102-2: 1977-09,

    wherein the steel component is provided with an aluminum-containing and/or aluminum-alloyed hot-dip galvanizing layer and/or wherein the steel component is subjected to hot-dip galvanizing using an aluminum-containing and/or aluminum-alloyed molten zinc,

    wherein the aluminum-containing and/or aluminum-alloyed hot-dip galvanizing layer is applied to the steel component with a layer thickness in the range from 4$\mu$m to 25$\mu$m and wherein the aluminum-containing and/or aluminum-alloyed hot-dip galvanizing layer has an aluminum content, relative to the aluminum-containing and/or aluminum-alloyed hot-dip galvanizing layer, in the range from 4 wt.% to 8 wt.%;

    in such a way and/or with the proviso that the steel component provided with the aluminum-containing and/or aluminum-alloyed hot-dip galvanizing layer and/or the steel component subjected to hot-dip galvanizing using an aluminum-containing and/or aluminum-alloyed galvanizing bath has a surface emissivity $\varepsilon_m$ in the range from 0.05 to 0.60 at temperatures in the range from 500 °C to 850 °C, determined in accordance with DIN EN 1993-1-2: 2006-10;

    wherein the aluminum-containing and/or aluminum-alloyed hot-dip galvanizing layer has the following composition, wherein all the quantities stated below are based on the aluminum-containing and/or aluminum-alloyed hot-dip galvanizing layer and are to be selected such that a total of 100 % by weight results:

    (i) Zinc (Zn) in quantities of 92 % to 96 % by weight,
    (ii) aluminum (Al) in quantities of 4 % to 8 % by weight,
    (iii) optionally one or more further metals selected from the group consisting of bismuth (Bi), lead (Pb), tin (Sn), nickel (Ni), silicon (Si), magnesium (Mg) and combinations thereof, in particular in quantities of 0.001% to 10% by weight;

    with the proviso that the magnesium content is less than 0.2 % by weight, in particular less than 0.15 % by weight.

2. Process according to claim 1,

    wherein the fire resistance and/or the fire resistance is adjusted and/or controlled by means of the thickness and composition and/or formation of the aluminum-containing and/or aluminum-alloyed hot-dip galvanizing layer, in particular by means of the aluminum content of the aluminum-containing and/or aluminum-alloyed hot-dip galvanizing layer;

    in particular wherein the fire resistance and/or the fire resistance is/are increased by increasing the aluminum content of the aluminum-containing and/or aluminum-alloyed hot-dip galvanizing layer; and/or

    in particular wherein the fire resistance and/or the fire resistance is/are increased by increasing the layer thickness of the aluminum-containing and/or aluminum-alloyed hot-dip galvanizing layer.

3. Method according to claim 1 or claim 2,

    wherein the steel component provided with the aluminum-containing and/or aluminum-alloyed hot-dip galvanizing layer and/or the steel component subjected to hot-dip galvanizing using an aluminum-containing and/or aluminum-alloyed galvanizing bath at temperatures in the range from 500 °C to 850 °C, in particular at temperatures in the range from 500 °C to 800 °C, has an emissivity (degree of emission) of the surface $\varepsilon_m$ in the range from 0.05 to 0.55;

    in particular wherein the steel component provided with the aluminum-containing and/or aluminum-alloyed hot-dip galvanizing layer and/or the steel component subjected to hot-dip galvanizing using an aluminum-containing and/or aluminum-alloyed galvanizing bath has an emissivity of the surface $\varepsilon_m$ at temperatures in the range from 500 °C to 650 °C of at most 0.40, in particular of at most 0.35, preferably of at most 0.30, particularly preferably of at most 0.25, and wherein the steel component provided with the aluminum-containing and/or aluminum-alloyed hot-dip galvanizing layer and/or the steel component subjected to hot-dip galvanizing using an aluminum-containing and/or aluminum-alloyed galvanizing bath has an emissivity (emissivity) of the surface $\varepsilon_m$ of at most 0.60, preferably of at most 0.55, at temperatures in the range from 650 °C to 850 °C.

4. Method according to any of the preceding claims,

wherein the steel component provided with the aluminum-containing and/or aluminum-alloyed hot-dip galvanizing layer and/or the steel component subjected to hot-dip galvanizing using an aluminum-containing and/or aluminum-alloyed galvanizing bath has a fire resistance class according to DIN 4102-2: 1977-09 of at least F30, in particular of at least F60, preferably of at least F90, particularly preferably of at least F120; and/or

wherein the steel component provided with the aluminum-containing and/or aluminum-alloyed hot-dip galvanizing layer and/or the steel component subjected to hot-dip galvanizing using an aluminum-containing and/or aluminum-alloyed galvanizing bath has a fire resistance class according to DIN EN 13501-2: 2016-12 of at least R30, in particular of at least R60, preferably of at least R90, particularly preferably of at least R120.

5. Method according to any of the preceding claims,

wherein the steel of the steel component is selected from (i) low silicon steel, in particular with a content of silicon $\leq 0.03$ % by weight and with a content of phosphorus < 0.02 % by weight, based on the steel; (ii) Sandelin steel, in particular with a content of silicon between 0.03% and 0.14 % by weight, based on the steel; (iii) Sebisty steel, in particular with a silicon content of between 0.14 % and 0.25 % by weight; (iv) high silicon steel, in particular with a silicon content > 0.25 % by weight, based on the steel; and combinations thereof; and/or

wherein the steel of the steel component is selected from steel of categories A, B, C and/or D in accordance with DIN EN ISO 14713-2: 2020-05 and combinations thereof; and/or

wherein the steel component is a steel structural element, a steel beam, a steel profile, a steel section, a steel sheet, a steel tube or the like; and/or

wherein the steel component is a steel component intended for the building industry and/or wherein the steel component is a steel structural element or component intended for the building industry; and/or

wherein the steel component is a steel component intended or designed for the construction industry or for vehicle construction and/or automobile manufacture.

6. Method according to any of the preceding claims,

wherein the hot-dip galvanizing (hot-dip galvanizing) is carried out at a temperature in the range from 375 °C to 750 °C, in particular temperature in the range from 380 °C to 700 °C, preferably temperature in the range from 390 °C to 680 °C, even more preferably in the range from 395 °C to 675 °C; and/or

wherein the hot-dip galvanizing is carried out for a period of time which is sufficient to ensure effective hot-dip galvanizing, in particular for a period of time in the range from 0.0001 to 60 minutes, preferably in the range from 0.001 to 45 minutes, preferably in the range from 0.01 to 30 minutes, even more preferably in the range from 0.1 to 15 minutes.

7. Method according to any one of the preceding claims,

wherein the hot-dip galvanizing (hot-dip galvanizing), including the pretreatment and/or post-treatment processes, comprises the following process steps, in particular in the order listed below:

(a) degreasing treatment, preferably alkaline degreasing treatment, of the steel component, in particular in at least one degreasing bath;

(b) optionally, rinsing the steel component degreased in process step (a), in particular in at least one rinsing bath;

(c) pickling treatment, preferably acid pickling treatment, of the steel component degreased in process step (a) and, optionally, rinsed in process step (b), in particular in at least one pickling bath;

(d) optionally, rinsing the steel component pickled in process step (c), in particular in at least one rinsing bath;

(e) flux treatment of the steel component pickled in process step (c) and optionally rinsed in process step (d) by means of a flux composition in a flux bath;

(f) optionally, drying treatment of the steel component subjected to flux treatment in process step (e);

(g) hot-dip galvanizing of the steel component subjected to the flux treatment in process step (e) and, optionally, dried in process step (f) in an aluminum-containing and/or aluminum-alloyed molten zinc, preferably by dipping the steel component into the aluminum-containing and/or aluminum-alloyed molten zinc;

in particular wherein the hot-dip galvanizing carried out in process step (g) is followed by a cooling step (h) and/or wherein the steel component hot-dip galvanized in process step (g) is subjected to a cooling treatment (h), optionally followed by a further post-processing and/or post-treatment step (i);

in particular wherein the cooling step (h) and/or the cooling treatment (h) is carried out by means of air and/or in the presence of air, preferably down to ambient temperature.

8. Use of an aluminum-containing and/or aluminum-alloyed hot-dip galvanizing layer for producing fire resistance and/or fire resistance, in particular fire resistance and/or fire resistance according to DIN EN 13501-2: 2016-12 and/or DIN 4102-2: 1977-09, on a steel component and/or for equipping a steel component with fire resistance and/or fire resistance, in particular with fire resistance and/or fire resistance in accordance with DIN EN 13501-2: 2016-12 and/or DIN 4102-2: 1977-09, preferably for producing a fire-resistant and/or fire-resistant steel component, in particular a fire-resistant and/or fire-resistant steel component in accordance with DIN EN 13501-2: 2016-12 and/or DIN 4102-2: 1977-09,

   wherein the steel component is provided with an aluminum-containing and/or aluminum-alloyed hot-dip galvanizing layer and/or wherein the steel component is subjected to hot-dip galvanizing using an aluminum-containing and/or aluminum-alloyed molten zinc,
   wherein the aluminum-containing and/or aluminum-alloyed hot-dip galvanizing layer is applied to the steel component with a layer thickness in the range from $4\mu$m to $25\mu$m and wherein the aluminum-containing and/or aluminum-alloyed hot-dip galvanizing layer has an aluminum content, relative to the aluminum-containing and/or aluminum-alloyed hot-dip galvanizing layer, in the range from 4 wt.% to 8 wt.%;
   in such a way and/or with the proviso that the steel component provided with the aluminum-containing and/or aluminum-alloyed hot-dip galvanizing layer and/or the steel component subjected to hot-dip galvanizing using an aluminum-containing and/or aluminum-alloyed galvanizing bath at temperatures in the range from 500 °C to 850 °C has a surface emissivity $\varepsilon_m$ in the range from 0.05 to 0.60, determined in accordance with DIN EN 1993-1-2: 2006-10;
   wherein the aluminum-containing and/or aluminum-alloyed hot-dip galvanizing layer has the following composition, wherein all the quantities stated below are based on the aluminum-containing and/or aluminum-alloyed hot-dip galvanizing layer and are to be selected such that a total of 100 % by weight results:

   (i) Zinc (Zn) in quantities of 92 % to 96 % by weight,
   (ii) aluminum (Al) in quantities of 4 % to 8 % by weight,
   (iii) optionally one or more further metals selected from the group consisting of bismuth (Bi), lead (Pb), tin (Sn), nickel (Ni), silicon (Si), magnesium (Mg) and combinations thereof, in particular in quantities of 0.001% to 10% by weight;

   with the proviso that the magnesium content is less than 0.2 % by weight, in particular less than 0.15 % by weight.

9. Use of a hot-dip galvanizing and/or a hot-dip galvanizing process for producing fire resistance and/or fire resistance, in particular fire resistance and/or fire resistance in accordance with DIN EN 13501-2: 2016-12 and/or DIN 4102-2: 1977-09, on a steel component and/or for equipping a steel component with fire resistance and/or fire resistance, in particular with fire resistance and/or fire resistance in accordance with DIN EN 13501-2: 2016-12 and/or DIN 4102-2: 1977-09, in particular for producing a fire-resistant and/or fire-resistant steel component, preferably a fire-resistant and/or fire-resistant steel component in accordance with DIN EN 13501-2: 2016-12 and/or DIN 4102-2: 1977-09,

   wherein the steel component is provided with an aluminum-containing and/or aluminum-alloyed hot-dip galvanizing layer and/or wherein the steel component is subjected to hot-dip galvanizing using an aluminum-containing and/or aluminum-alloyed molten zinc,
   wherein the aluminum-containing and/or aluminum-alloyed hot-dip galvanizing layer is applied to the steel component with a layer thickness in the range from $4\mu$m to $25\mu$m and
   wherein the aluminum-containing and/or aluminum-alloyed hot-dip galvanizing layer has an aluminum content, relative to the aluminum-containing and/or aluminum-alloyed hot-dip galvanizing layer, in the range from 4 wt.% to 8 wt.%;
   in such a way and/or with the proviso that the steel component provided with the aluminum-containing and/or aluminum-alloyed hot-dip galvanizing layer and/or the steel component subjected to hot-dip galvanizing using an aluminum-containing and/or aluminum alloyed galvanizing bath at temperatures in the range from 500 °C to 850 °C has a surface emissivity $\varepsilon_m$ below 0.7, in particular in the range from 0.05 to < 0.7, preferably in the range from 0.05 to 0.65, particularly preferably in the range from 0.05 to 0.60, determined in accordance with DIN EN 1993-12-: 2006-10;
   wherein the aluminum-containing and/or aluminum-alloyed hot-dip galvanizing layer has the following composition, wherein all the quantities stated below are based on the aluminum-containing and/or aluminum-alloyed hot-dip galvanizing layer and are to be selected such that a total of 100 % by weight results:

(i) Zinc (Zn) in quantities of 92 % to 96 % by weight,
(ii) aluminum (Al) in quantities of 4 % to 8 % by weight,
(iii) optionally one or more further metals selected from the group consisting of bismuth (Bi), lead (Pb), tin (Sn), nickel (Ni), silicon (Si), magnesium (Mg) and combinations thereof, in particular in quantities of 0.001 % to 10 % by weight;

with the proviso that the magnesium content is less than 0.2 % by weight, in particular less than 0.15 % by weight.

10. Use of aluminum to increase and/or improve the fire resistance and/or fire resistance, in particular the fire resistance and/or fire resistance according to DIN EN 13501-2: 2016-12 and/or DIN 4102-2: 1977-09, of a hot-dip galvanized and/or hot-dip galvanized steel component-,

wherein aluminum is incorporated and/or alloyed into the hot-dip galvanizing layer, in particular in such a way and/or with the proviso that an aluminum-containing and/or aluminum-alloyed hot-dip galvanizing layer results and/or that the steel component is provided with an aluminum-containing and/or aluminum-alloyed hot-dip galvanizing layer,
wherein the steel component is provided with an aluminum-containing and/or aluminum-alloyed hot-dip galvanizing layer and/or wherein the steel component is subjected to hot-dip galvanizing using an aluminum-containing and/or aluminum-alloyed molten zinc,
wherein the aluminum-containing and/or aluminum-alloyed hot-dip galvanizing layer is applied to the steel component with a layer thickness in the range from $4\mu m$ to $25\mu m$ and
wherein the aluminum-containing and/or aluminum-alloyed hot-dip galvanizing layer has an aluminum content, relative to the aluminum-containing and/or aluminum-alloyed hot-dip galvanizing layer, in the range from 4 wt.% to 8 wt.%;
in such a way and/or with the proviso that the steel component provided with the aluminum-containing and/or aluminum-alloyed hot-dip galvanizing layer and/or the steel component subjected to hot-dip galvanizing using an aluminum-containing and/or aluminum-alloyed galvanizing bath has a surface emissivity $\varepsilon_m$ in the range from 0.05 to 0.60 at temperatures in the range from 500 °C to 850 °C, determined in accordance with DIN EN 1993-1-2: 2006-10;
wherein the aluminum-containing and/or aluminum-alloyed hot-dip galvanizing layer has the following composition, wherein all the quantities stated below are based on the aluminum-containing and/or aluminum-alloyed hot-dip galvanizing layer and are to be selected such that a total of 100 wt.-% results:

(i) Zinc (Zn) in quantities of 92 % to 96 % by weight,
(ii) aluminum (Al) in quantities of 4 % to 8 % by weight,
(iii) optionally one or more further metals selected from the group consisting of bismuth (Bi), lead (Pb), tin (Sn), nickel (Ni), silicon (Si), magnesium (Mg) and combinations thereof, in particular in quantities of 0.001% to 10% by weight;

with the proviso that the magnesium content is less than 0.2 % by weight, in particular less than 0.15 % by weight.

11. Use according to any one of claims 8 to 10,

wherein the steel component provided with the aluminum-containing and/or aluminum-alloyed hot-dip galvanizing layer and/or the steel component subjected to hot-dip galvanizing using an aluminum-containing and/or aluminum-alloyed galvanizing bath has a fire resistance class according to DIN 4102-2: 1977-09 of at least F30, in particular of at least F60, preferably of at least F90, particularly preferably of at least F120; and/or
wherein the steel component provided with the aluminum-containing and/or aluminum-alloyed hot-dip galvanizing layer and/or the steel component subjected to hot-dip galvanizing using an aluminum-containing and/or aluminum-alloyed galvanizing bath has a fire resistance class according to DIN EN 13501-2: 2016-12 of at least R30, in particular of at least R60, preferably of at least R90, particularly preferably of at least R120.

12. Use of a steel component provided with an aluminum-containing and/or aluminum-alloyed hot-dip galvanized layer as a structural component to meet the requirements of fire resistance and/or fire resistance, in particular fire resistance and/or fire resistance in accordance with DIN EN 13501-2: 2016-12 and/or DIN 41022-: 1977-09

wherein the steel component provided with the aluminum-containing and/or aluminum-alloyed hot-dip galvanizing layer and/or the steel component subjected to hot-dip galvanizing using an aluminum-containing and/or aluminum-alloyed galvanizing bath has a surface emissivity $\varepsilon_m$ in the range from 0.05 to 0.60 at temperatures in the range from 500 °C to 850 °C, determined in accordance with DIN EN 1993-1-2: 2006-10; and

wherein the steel component provided with the aluminum-containing and/or aluminum-alloyed hot-dip galvanizing layer is used in the absence of and/or without additional structural fire protection measures and devices, wherein the aluminum-containing and/or aluminum-alloyed hot-dip galvanizing layer has the following composition, wherein all the quantities stated below are based on the aluminum-containing and/or aluminum-alloyed hot-dip galvanizing layer and are to be selected such that a total of 100 wt.-% results:

(i) Zinc (Zn) in quantities of 92 % to 96 % by weight,
(ii) aluminum (Al) in quantities of 4 % to 8 % by weight,
(iii) optionally one or more further metals selected from the group consisting of bismuth (Bi), lead (Pb), tin (Sn), nickel (Ni), silicon (Si), magnesium (Mg) and combinations thereof, in particular in quantities of 0.001% to 10% by weight;

with the proviso that the magnesium content is less than 0.2 % by weight, in particular less than 0.15 % by weight.

13. Use of a steel component provided with an aluminum-containing and/or aluminum-alloyed hot-dip galvanized layer as a structural component of receiving devices, in particular enclosures or containers, for energy storage devices or energy converters, such as fuel cells, accumulators, batteries, galvanic elements or the like, in particular for the automotive sector, preferably to meet the requirements of fire resistance and/or fire resistance

wherein the steel component is provided with an aluminum-containing and/or aluminum-alloyed hot-dip galvanizing layer and/or wherein the steel component is subjected to hot-dip galvanizing using an aluminum-containing and/or aluminum-alloyed molten zinc,

wherein the aluminum-containing and/or aluminum-alloyed hot-dip galvanizing layer is applied to the steel component with a layer thickness in the range from 4 $\mu$m to 25 $\mu$m and

wherein the aluminum-containing and/or aluminum-alloyed hot-dip galvanizing layer has an aluminum content, relative to the aluminum-containing and/or aluminum-alloyed hot-dip galvanizing layer, in the range from 4 wt.% to 8 wt.%;

in such a way and/or with the proviso that the steel component provided with the aluminum-containing and/or aluminum-alloyed hot-dip galvanizing layer and/or the steel component subjected to hot-dip galvanizing using an aluminum-containing and/or aluminum-alloyed galvanizing bath at temperatures in the range from 500 °C to 850 °C has a surface emissivity $\varepsilon_m$ in the range from 0.05 to 0.60, determined in accordance with DIN EN 1993-1-2: 2006-10;

wherein the aluminum-containing and/or aluminum-alloyed hot-dip galvanizing layer has the following composition, wherein all the quantities stated below are based on the aluminum-containing and/or aluminum-alloyed hot-dip galvanizing layer and are to be selected such that a total of 100 % by weight results:

(i) Zinc (Zn) in quantities of 92 % to 96 % by weight,
(ii) aluminum (Al) in quantities of 4 % to 8 % by weight,
(iii) optionally one or more further metals selected from the group consisting of bismuth (Bi), lead (Pb), tin (Sn), nickel (Ni), silicon (Si), magnesium (Mg) and combinations thereof, in particular in quantities of 0.001% to 10% by weight;

with the proviso that the magnesium content is less than 0.2 % by weight, in particular less than 0.15 % by weight.

14. Supporting structure, in particular a steel structure, for a building, in particular for a building or part of a building, wherein the supporting structure comprises, as structural components for compliance with the requirements of fire resistance and/or fire resistance, in particular fire resistance and/or fire resistance in accordance with DIN EN 13501-2: 2016-12 and/or DIN 41022: 1977-09, a plurality of steel components provided with an aluminum-containing and/or aluminum-alloyed hot-dip galvanized layer, wherein the supporting structure is free from additional structural fire protection measures and devices and/or the supporting structure has no additional structural fire protection elements,

wherein the steel component provided with the aluminum-containing and/or aluminum-alloyed hot-dip galvanizing layer and/or the steel component subjected to hot-dip galvanizing using an aluminum-containing and/or aluminum-alloyed galvanizing bath has a surface emissivity $\varepsilon_m$ in the range from 0.05 to 0.60 at temperatures in the range from 500 °C to 850 °, determined in accordance with DIN EN 1993-1-2: 2006-10,

wherein the aluminum-containing and/or aluminum-alloyed hot-dip galvanizing layer has the following composition, wherein all the quantities stated below are based on the aluminum-containing and/or aluminum-alloyed hot-dip galvanizing layer and are to be selected such that a total of 100 % by weight results:

(i) Zinc (Zn) in quantities of 92 % to 96 % by weight,
(ii) aluminum (Al) in quantities of 4 % to 8 % by weight,
(iii) optionally one or more further metals selected from the group consisting of bismuth (Bi), lead (Pb), tin (Sn), nickel (Ni), silicon (Si), magnesium (Mg) and combinations thereof, in particular in amounts of 0.001% to 10% by weight;

with the proviso that the magnesium content is less than 0.2 % by weight, in particular less than 0.15 % by weight.

**15.** Structure, in particular a building or part of a building, comprising a supporting structure according to claim 14.

**16.** Use of an aluminum-containing and/or aluminum-alloyed hot-dip galvanizing layer for producing fire resistance and/or fireproofing on iron-based or iron-containing, in particular steel-based or steel-containing, articles and/or for equipping iron-based or iron-containing, in particular steel-based or steel-containing, articles with fire resistance and/or fireproofing,

wherein the steel component is provided with an aluminum-containing and/or aluminum-alloyed hot-dip galvanizing layer and/or wherein the steel component is subjected to hot-dip galvanizing using an aluminum-containing and/or aluminum-alloyed molten zinc,

wherein the aluminum-containing and/or aluminum-alloyed hot-dip galvanizing layer is applied to the steel component with a layer thickness in the range from $4\mu m$ to $25\mu m$ and wherein the aluminum-containing and/or aluminum-alloyed hot-dip galvanizing layer has an aluminum content, relative to the aluminum-containing and/or aluminum-alloyed hot-dip galvanizing layer, in the range from 4 wt.% to 8 wt.%;

in such a way and/or with the proviso that the steel component provided with the aluminum-containing and/or aluminum-alloyed hot-dip galvanizing layer and/or the steel component subjected to hot-dip galvanizing using an aluminum-containing and/or aluminum-alloyed galvanizing bath at temperatures in the range from 500 °C to 850 °C has a surface emissivity $\varepsilon_m$ in the range from 0.05 to 0.60, determined in accordance with DIN EN 1993-1-2: 2006-10;

wherein the aluminum-containing and/or aluminum-alloyed hot-dip galvanizing layer has the following composition, wherein all the quantities stated below are based on the aluminum-containing and/or aluminum-alloyed hot-dip galvanizing layer and are to be selected such that a total of 100 % by weight results:

(i) Zinc (Zn) in quantities of 92 % to 96 % by weight,
(ii) aluminum (Al) in quantities of 4 % to 8 % by weight,
(iii) optionally one or more further metals selected from the group consisting of bismuth (Bi), lead (Pb), tin (Sn), nickel (Ni), silicon (Si), magnesium (Mg) and combinations thereof, in particular in quantities of 0.001% to 10% by weight;

with the proviso that the magnesium content is less than 0.2 % by weight, in particular less than 0.15 % by weight.

## Revendications

**1.** Procédé de fabrication d'un élément de construction en acier résistant au feu et/ou à l'incendie, en particulier d'un élément de construction en acier -résistant au feu et/ou à l'incendie selon DIN EN 13501-2: 201612 et/ou DIN 4102-2: 1977-09,

où l'élément de construction en acier est pourvu d'une couche de galvanisation à chaud contenant de l'aluminium et/ou allié à l'aluminium et/ou où l'élément de construction en acier est soumis à une galvanisation à chaud en utilisant une masse fondue de zinc contenant de l'aluminium et/ou allié à l'aluminium,

la couche de galvanisation à chaud contenant de l'aluminium et/ou alliée à l'aluminium étant appliquée sur l'élément de construction en acier avec une épaisseur de couche dans la plage de $4\mu m$ à $25\mu m$ et

la couche de galvanisation à chaud contenant de l'aluminium et/ou alliée à l'aluminium présentant une proportion d'aluminium, par rapport à la couche de galvanisation à chaud contenant de l'aluminium et/ou alliée à l'aluminium, dans la plage de 4 % en poids à 8 % en poids;

de telle sorte et/ou avec la condition que l'élément de construction en acier pourvu de la couche de galvanisation à chaud contenant de l'aluminium et/ou de l'alliage d'aluminium et/ou l'élément de construction en acier soumis à la galvanisation à chaud en utilisant un bain de galvanisation contenant de l'aluminium et/ou de l'alliage d'aluminium présente, à des températures dans la plage de 500 °C à 850 °C, une émissivité de la surface $\varepsilon_m$ dans la plage de 0,05 à 0,60, déterminée selon DIN EN 1993-1-2: 2006-10;

la couche de galvanisation à chaud contenant de l'aluminium et/ou alliée à l'aluminium présentant la composition suivante, toutes les indications de quantité mentionnées ci-après se rapportant à la couche de galvanisation à chaud contenant de l'aluminium et/ou alliée à l'aluminium et devant être choisies de telle sorte qu'il en résulte au total 100 % en poids:

(i) zinc (Zn) en quantités de 92 % à 96 % en poids,

(ii) aluminium (Al) en quantités de 4 % à 8 % en poids

(iii) éventuellement un ou plusieurs autres métaux choisis dans le groupe constitué par le bismuth (Bi), le plomb (Pb), l'étain (Sn), le nickel (Ni), le silicium (Si), le magnésium (Mg) ainsi que leurs combinaisons, en particulier en des quantités de 0,001 % à 10 % en poids;

étant entendu que la proportion de magnésium est inférieure à 0,2 % en poids, en particulier inférieure à 0,15 % en poids.

2. Procédé selon la revendication 1,

la résistance au feu et/ou la résistance au feu étant ajustées et/ou contrôlées au moyen de l'épaisseur et de la composition et/ou de la formation de la couche de galvanisation à chaud contenant de l'aluminium et/ou alliée à l'aluminium, en particulier au moyen de la teneur en aluminium de la couche de galvanisation à chaud contenant de l'aluminium et/ou alliée à l'aluminium;

en particulier où l'augmentation de la teneur en aluminium de la couche de galvanisation à chaud contenant de l'aluminium et/ou alliée à l'aluminium permet d'augmenter la résistance au feu et/ou la résistance au feu; et/ou

en particulier où la résistance au feu et/ou la résistance au feu est/sont augmentée(s) avec l'augmentation de l'épaisseur de la couche de galvanisation à chaud contenant de l'aluminium et/ou alliée à l'aluminium.

3. Procédé selon la revendication 1 ou la revendication 2,

la pièce en acier pourvue de la couche de galvanisation à chaud contenant de l'aluminium et/ou de l'alliage d'aluminium et/ou la pièce en acier soumise à la galvanisation à chaud en utilisant un bain de galvanisation contenant de l'aluminium et/ou de l'alliage d'aluminium présentant, à des températures de l'ordre de 500 °C à 850°C, en particulier à des températures de l'ordre de 500 °C à 800 °C, une émissivité (degré d'émission) de la surface $\varepsilon_m$ de l'ordre de 0,05 à 0,55;

en particulier où l'élément de construction en acier pourvu de la couche de galvanisation à chaud contenant de l'aluminium et/ou de l'alliage d'aluminium et/ou l'élément de construction en acier soumis à la galvanisation à chaud en utilisant un bain de galvanisation contenant de l'aluminium et/ou de l'alliage d'aluminium présente, à des températures dans la plage de 500 °C à 650 °C, une émissivité (degré d'émission) de la surface $\varepsilon_m$ d'au maximum 0,40, en particulier d'au maximum 0,35, de préférence d'au maximum 0,30, de préférence au maximum 0,25, et où l'élément de construction en acier pourvu de la couche de galvanisation à chaud contenant de l'aluminium et/ou allié à l'aluminium et/ou l'élément de construction en acier soumis à la galvanisation à chaud en utilisant un bain de galvanisation contenant de l'aluminium et/ou allié à l'aluminium présente, à des températures dans la plage de 650 °C à 850 °C, une émissivité (degré d'émission) de la surface $\varepsilon_m$ au maximum de 0,60, de préférence au maximum de 0,55.

4. Procédé selon l'une quelconque des revendications précédentes,

l'élément de construction en acier pourvu de la couche de galvanisation à chaud contenant de l'aluminium et/ou allié à l'aluminium et/ou l'élément de construction en acier soumis à la galvanisation à chaud en utilisant un bain de galvanisation contenant de l'aluminium et/ou allié à l'aluminium présentant une classe de résistance au feu selon DIN 4102-2: 1977-09 d'au moins F30, en particulier d'au moins F60, de préférence d'au moins F90, de manière particulièrement préférée d'au moins F120; et/ou

où l'élément de construction en acier pourvu de la couche de galvanisation à chaud contenant de l'aluminium et/ou de l'alliage d'aluminium et/ou l'élément de construction en acier soumis à la galvanisation à chaud en utilisant un bain de galvanisation contenant de l'aluminium et/ou de l'alliage d'aluminium présente une classe de résistance au feu selon DIN EN 13501-2: 2016-12 d'au moins R30, en particulier d'au moins R60, de préférence d'au moins R90, de manière particulièrement préférée d'au moins R120.

**5.** Procédé selon l'une quelconque des revendications précédentes,

l'acier de la pièce en acier étant choisi parmi (i) l'acier à faible teneur en silicium, en particulier avec une teneur en silicium ≤ 0,03 % en poids et avec une teneur en phosphore < 0,02 % en poids, par rapport à l'acier; (ii) l'acier Sandelin, en particulier avec une teneur en silicium comprise entre 0,03 % en poids et 0,25 % en poids.% et 0,14 % en poids, par rapport à l'acier; (iii) acier Sebisty, notamment avec une teneur en silicium comprise entre 0,14 % et 0,25 % en poids; (iv) acier au silicium à haute teneur, notamment avec une teneur en silicium > 0,25 % en poids, par rapport à l'acier; et leurs combinaisons; et/ou

l'acier de l'élément de construction en acier étant choisi parmi les aciers des catégories A, B, C et/ou D selon la norme DIN EN ISO 14713-2: 2020-05 et leurs combinaisons; et/ou

où l'élément de construction en acier est un élément de construction en acier, une poutre en acier, un profilé en acier, un acier profilé, une tôle en acier, un tube en acier ou similaire; et/ou

où l'élément de construction en acier est un élément de construction en acier destiné à la construction et/ou où l'élément de construction en acier est un élément ou un composant de construction en acier destiné à la construction; et/ou

l'élément de construction en acier étant un élément de construction en acier destiné ou formé pour le bâtiment ou pour la construction de véhicules et/ou la fabrication d'automobiles.

**6.** Procédé selon l'une quelconque des revendications précédentes,

la galvanisation à chaud (galvanisation par immersion à chaud) étant effectuée à une température comprise entre 375 °C et 750 °C, en particulier à une température comprise entre 380 °C et 700 °C, de préférence à une température comprise entre 390 °C et 680 °C, de manière encore plus préférée à une température comprise entre 395 °C et 675 °C; et/ou

la galvanisation à chaud (galvanisation par immersion à chaud) étant effectuée pendant une durée suffisante pour garantir une galvanisation à chaud (galvanisation par immersion à chaud) efficace, en particulier pendant une durée dans la plage de 0,0001 à 60 minutes, de préférence dans la plage de 0,001 à 45 minutes, de préférence dans la plage de 0,01 à 30 minutes, de manière encore plus préférée dans la plage de 0,1 à 15 minutes.

**7.** Procédé selon l'une quelconque des revendications précédentes,

la galvanisation à chaud (galvanisation par immersion à chaud), y compris les opérations de prétraitement et/ou de post-traitement, comprenant les étapes de procédé suivantes, en particulier dans l'ordre indiqué ci-après:

(a) un traitement de dégraissage, de préférence un traitement de dégraissage alcalin, de la pièce en acier, en particulier dans au moins un bain de dégraissage;

(b) le cas échéant, rinçage de l'élément de construction en acier dégraissé dans l'étape de procédé (a), en particulier dans au moins un bain de rinçage;

(c) traitement de décapage, de préférence un traitement de décapage acide, de l'élément de construction en acier dégraissé dans l'étape de procédé (a) et éventuellement rincé dans l'étape de procédé (b), en particulier dans au moins un bain de décapage;

(d) le cas échéant, rinçage de l'élément de construction en acier décapé dans l'étape de procédé (c), en particulier dans au moins un bain de rinçage;

(e) traitement par flux de la pièce en acier décapée dans l'étape de procédé (c) et éventuellement rincée dans l'étape de procédé (d) au moyen d'une composition de flux dans un bain de flux;

(f) éventuellement, traitement de séchage de la pièce en acier soumise au traitement par flux dans l'étape de procédé (e);

(g) galvanisation à chaud de la pièce en acier soumise au traitement par flux dans l'étape de procédé (e) et éventuellement séchée dans l'étape de procédé (f) dans un bain de zinc en fusion contenant de l'aluminium et/ou allié à l'aluminium, de préférence par immersion de la pièce en acier dans le bain de zinc en fusion contenant de l'aluminium et/ou allié à l'aluminium;

en particulier, la galvanisation à chaud réalisée dans l'étape de procédé (g) étant suivie d'une étape de refroidissement (h) et/ou la pièce de construction en acier galvanisée à chaud dans l'étape de procédé (g) étant soumise à un traitement de refroidissement (h), éventuellement suivi d'une autre étape de finition et/ou de traitement ultérieur (i);

en particulier où l'étape de refroidissement (h) et/ou le traitement de refroidissement (h) est effectué au moyen d'air et/ou en présence d'air, de préférence jusqu'à la température ambiante.

8. Utilisation d'une couche de galvanisation à chaud contenant de l'aluminium et/ou alliée à l'aluminium pour produire une résistance au feu et/ou une résistance au feu, en particulier une résistance au feu et/ou une résistance au feu selon DIN EN 13501-2: 2016-12 et/ou DIN 4102-2 : 1977-09, sur un élément de construction en acier et/ou pour équiper un élément de construction en acier d'une résistance au feu et/ou d'une résistance au feu, en particulier d'une résistance au feu et/ou d'une résistance au feu selon DIN EN 13501-2: 2016-12 et/ou DIN 4102-2: 1977-09, de préférence pour produire un élément de construction en acier résistant au feu et/ou au feu, en particulier un élément de construction en acier résistant au feu et/ou au feu selon DIN EN 13501-2: 2016-12 et/ou DIN 4102-2: 1977-09,

où l'élément de construction en acier est pourvu d'une couche de galvanisation à chaud contenant de l'aluminium et/ou allié à l'aluminium et/ou où l'élément de construction en acier est soumis à une galvanisation à chaud en utilisant une masse fondue de zinc contenant de l'aluminium et/ou allié à l'aluminium,

la couche de galvanisation à chaud contenant de l'aluminium et/ou alliée à l'aluminium étant appliquée sur l'élément de construction en acier avec une épaisseur de couche dans la plage de $4\,\mu m$ à $25\,\mu m$ et

la couche de galvanisation à chaud contenant de l'aluminium et/ou alliée à l'aluminium présentant une proportion d'aluminium, par rapport à la couche de galvanisation à chaud contenant de l'aluminium et/ou alliée à l'aluminium, dans la plage de 4 % en poids à 8 % en poids;

de telle sorte et/ou avec la condition que l'élément de construction en acier pourvu de la couche de galvanisation à chaud contenant de l'aluminium et/ou de l'alliage d'aluminium et/ou l'élément de construction en acier soumis à la galvanisation à chaud en utilisant un bain de galvanisation contenant de l'aluminium et/ou de l'alliage d'aluminium présente, à des températures de l'ordre de 500 °C à 850 °C, une émissivité de la surface $\varepsilon_m$ de l'ordre de 0,05 à 0,60, déterminée selon DIN EN 1993-1-2: 2006-10;

la couche de galvanisation à chaud contenant de l'aluminium et/ou alliée à l'aluminium présentant la composition suivante, toutes les indications de quantité mentionnées ci-après se rapportant à la couche de galvanisation à chaud contenant de l'aluminium et/ou alliée à l'aluminium et devant être choisies de telle sorte qu'il en résulte au total 100 % en poids:

(i) du zinc (Zn) en quantités de 92 % à 96 % en poids,
(ii) aluminium (Al) en quantités de 4 % à 8 % en poids
(iii) éventuellement un ou plusieurs autres métaux choisis dans le groupe constitué par le bismuth (Bi), le plomb (Pb), l'étain (Sn), le nickel (Ni), le silicium (Si), le magnésium (Mg) ainsi que leurs combinaisons, en particulier en des quantités de 0,001 % à 10 % en poids;

étant entendu que la proportion de magnésium est inférieure à 0,2 % en poids, en particulier inférieure à 0,15 % en poids.

9. Utilisation d'une galvanisation à chaud et/ou d'un procédé de galvanisation à chaud pour produire une résistance au feu et/ou une résistance au feu, en particulier une résistance au feu et/ou une résistance au feu selon DIN EN 13501-2: 2016-12 et/ou DIN 4102-2: 1977-09, sur un élément de construction en acier et/ou pour équiper un élément de construction en acier d'une résistance au feu et/ou d'une résistance au feu, en particulier d'une résistance au feu et/ou d'une résistance au feu selon DIN EN 13501-2: 2016-12 et/ou DIN 4102-2: 1977-09, en particulier pour produire un élément de construction en acier résistant au feu et/ou à l'incendie, de préférence un élément de construction en acier résistant au feu et/ou à l'incendie selon DIN EN 13501-2: 2016-12 et/ou DIN 4102-2 : 1977-09,

où l'élément de construction en acier est pourvu d'une couche de galvanisation à chaud contenant de l'aluminium et/ou allié à l'aluminium et/ou où l'élément de construction en acier est soumis à une galvanisation à chaud en utilisant une masse fondue de zinc contenant de l'aluminium et/ou allié à l'aluminium,

la couche de galvanisation à chaud contenant de l'aluminium et/ou alliée à l'aluminium étant appliquée sur l'élément de construction en acier avec une épaisseur de couche dans la plage de $4\,\mu m$ à $25\,\mu m$ et la couche de galvanisation à chaud contenant de l'aluminium et/ou alliée à l'aluminium présentant une proportion d'aluminium, par rapport à la couche de galvanisation à chaud contenant de l'aluminium et/ou alliée à l'aluminium, dans la plage de 4 % en poids à 8 % en poids;

de telle sorte et/ou avec la condition que l'élément de construction en acier pourvu de la couche de galvanisation à chaud contenant de l'aluminium et/ou alliée à l'aluminium et/ou l'élément de construction en acier soumis à la galvanisation à chaud en utilisant un bain de galvanisation contenant de l'aluminium et/ou allié à l'aluminium présente, à des températures dans la plage de 500 °C à 850 °C, une émissivité de la surface $\varepsilon_m$ inférieure à 0,7, en particulier dans la plage de 0,05 à < 0,5. 0,7, de préférence dans la plage de 0,05 à 0,65, de manière particulièrement préférée dans la plage de 0,05 à 0,60, déterminée selon DIN EN 1993-12: 2006-10;

la couche de galvanisation à chaud contenant de l'aluminium et/ou alliée à l'aluminium présentant la composition suivante, toutes les indications de quantité mentionnées ci-après se rapportant à la couche de galvanisation à chaud contenant de l'aluminium et/ou alliée à l'aluminium et devant être choisies de telle sorte qu'il en résulte au total 100 % en poids:

> (i) du zinc (Zn) en quantités de 92 % à 96 % en poids,
>
> (ii) aluminium (Al) en quantités de 4 % à 8 % en poids
>
> (iii) éventuellement un ou plusieurs autres métaux choisis dans le groupe constitué par le bismuth (Bi), le plomb (Pb), l'étain (Sn), le nickel (Ni), le silicium (Si), le magnésium (Mg) ainsi que leurs combinaisons, en particulier en des quantités de 0,001 % à 10 % en poids;

étant entendu que la proportion de magnésium est inférieure à 0,2 % en poids, en particulier inférieure à 0,15 % en poids.

10. Utilisation d'aluminium pour augmenter et/ou améliorer la résistance au feu et/ou la résistance au feu, en particulier la résistance au feu et/ou la résistance au feu selon DIN EN 13501-2: 2016-12 et/ou DIN 4102-2: 1977-09, d'un élément de construction en acier -galvanisé à chaud et/ou pourvu -d'une couche de galvanisation à chaud,

l'aluminium étant incorporé et/ou allié dans la couche de galvanisation à chaud, en particulier de la manière et/ou avec la condition qu'il en résulte une couche de galvanisation à chaud contenant de l'aluminium et/ou alliée à l'aluminium et/ou que l'élément de construction en acier soit pourvu d'une couche de galvanisation à chaud contenant de l'aluminium et/ou alliée à l'aluminium,

où l'élément de construction en acier est pourvu d'une couche de galvanisation à chaud contenant de l'aluminium et/ou allié à l'aluminium et/ou où l'élément de construction en acier est soumis à une galvanisation à chaud en utilisant une masse fondue de zinc contenant de l'aluminium et/ou allié à l'aluminium,

la couche de galvanisation à chaud contenant de l'aluminium et/ou alliée à l'aluminium étant appliquée sur l'élément de construction en acier avec une épaisseur de couche dans la plage de $4\mu$m à $25\mu$m et

la couche de galvanisation à chaud contenant de l'aluminium et/ou alliée à l'aluminium présentant une proportion d'aluminium, par rapport à la couche de galvanisation à chaud contenant de l'aluminium et/ou alliée à l'aluminium, dans la plage de 4 % en poids à 8 % en poids;

de telle sorte et/ou avec la condition que l'élément de construction en acier pourvu de la couche de galvanisation à chaud contenant de l'aluminium et/ou de l'alliage d'aluminium et/ou l'élément de construction en acier soumis à la galvanisation à chaud en utilisant un bain de galvanisation contenant de l'aluminium et/ou de l'alliage d'aluminium présente, à des températures dans la plage de 500 °C à 850 °C, une émissivité de la surface $\varepsilon_m$ dans la plage de 0,05 à 0,60, déterminée selon DIN EN 1993-1-2: 2006-10;

la couche de galvanisation à chaud contenant de l'aluminium et/ou alliée à l'aluminium présentant la composition suivante, toutes les indications de quantité mentionnées ci-après se rapportant à la couche de galvanisation à chaud contenant de l'aluminium et/ou alliée à l'aluminium et devant être choisies de telle sorte qu'-il en résulte au total 100 % en poids:

> (i) du zinc (Zn) en quantités de 92 % à 96 % en poids,
>
> (ii) aluminium (Al) en quantités de 4 % à 8 % en poids
>
> (iii) éventuellement un ou plusieurs autres métaux choisis dans le groupe constitué par le bismuth (Bi), le plomb (Pb), l'étain (Sn), le nickel (Ni), le silicium (Si), le magnésium (Mg) ainsi que leurs combinaisons, en particulier en des quantités de 0,001 % à 10 % en poids;

étant entendu que la proportion de magnésium est inférieure à 0,2 % en poids, en particulier inférieure à 0,15 % en poids.

11. Utilisation selon l'une quelconque des revendications 8 à 10,

l'élément de construction en acier pourvu de la couche de galvanisation à chaud contenant de l'aluminium et/ou allié à l'aluminium et/ou l'élément de construction en acier soumis à la galvanisation à chaud en utilisant un bain de galvanisation contenant de l'aluminium et/ou allié à l'aluminium présentant une classe de résistance au feu selon DIN 4102-2: 1977-09 d'au moins F30, en particulier d'au moins F60, de préférence d'au moins F90, de manière particulièrement préférée d'au moins F120; et/ou

où l'élément de construction en acier pourvu de la couche de galvanisation à chaud contenant de l'aluminium et/ou allié à l'aluminium et/ou l'élément de construction en acier soumis à la galvanisation à chaud en utilisant un bain de galvanisation contenant de l'aluminium et/ou allié à l'aluminium présente une classe de résistance au feu selon DIN EN 13501-2: 2016-12 d'au moins R30, en particulier d'au moins R60, de préférence d'au moins R90, de manière particulièrement préférée d'au moins R120.

12. Utilisation d'un élément de construction en acier pourvu d'une couche de galvanisation à chaud contenant de l'aluminium et/ou allié à l'aluminium comme élément de construction pour satisfaire aux exigences de résistance au feu et/ou de résistance au feu, en particulier de résistance au feu et/ou de résistance au feu selon DIN EN 13501-2: 2016-12 et/ou DIN 4102-2: 1977-09

où l'élément de construction en acier pourvu de la couche de galvanisation à chaud contenant de l'aluminium et/ou de l'alliage d'aluminium et/ou l'élément de construction en acier soumis à la galvanisation à chaud en utilisant un bain de galvanisation contenant de l'aluminium et/ou de l'alliage d'aluminium présente, à des températures dans la plage de 500 °C à 850 °C, une émissivité de la surface $\varepsilon_m$ dans la plage de 0,05 à 0,60, déterminée selon DIN EN 1993-1-2 : 2006-10; et

l'élément de construction en acier pourvu de la couche de galvanisation à chaud contenant de l'aluminium et/ou alliée à l'aluminium étant utilisé en l'absence de et/ou sans mesures et dispositifs constructifs supplémentaires de protection contre l'incendie, la couche de galvanisation à chaud contenant de l'aluminium et/ou alliée à l'aluminium présentant la composition suivante, toutes les indications de quantité mentionnées ci-après se rapportant à la couche de galvanisation à chaud contenant de l'aluminium et/ou alliée à l'aluminium et devant être choisies de telle sorte qu'il en résulte au total 100 % en poids:

(i) du zinc (Zn) en quantités de 92 % à 96 % en poids,
(ii) aluminium (Al) en quantités de 4 % à 8 % en poids
(iii) éventuellement un ou plusieurs autres métaux choisis dans le groupe du bismuth (Bi), du plomb (Pb), de l'étain (Sn), du nickel (Ni), du silicium (Si), du magnésium (Mg) ainsi que leurs combinaisons, en particulier dans des quantités de 0,001 % en poids à 10 % en poids;

étant entendu que la proportion de magnésium est inférieure à 0,2 % en poids, en particulier inférieure à 0,15 % en poids.

13. Utilisation d'un élément de construction en acier pourvu d'une couche de galvanisation à chaud contenant de l'aluminium et/ou allié à l'aluminium comme élément de construction de dispositifs de réception, en particulier d'enceintes ou de conteneurs, pour des accumulateurs ou des convertisseurs d'énergie, tels que des piles à combustible, des accumulateurs, des batteries, des éléments galvaniques ou similaires, en particulier pour le secteur automobile, de préférence pour satisfaire aux exigences de résistance au feu et/ou de résistance au feu

où l'élément de construction en acier est pourvu d'une couche de galvanisation à chaud contenant de l'aluminium et/ou allié à l'aluminium et/ou où l'élément de construction en acier est soumis à une galvanisation à chaud en utilisant une masse fondue de zinc contenant de l'aluminium et/ou allié à l'aluminium, la couche de galvanisation à chaud contenant de l'aluminium et/ou alliée à l'aluminium étant appliquée sur l'élément de construction en acier avec une épaisseur de couche dans la plage de 4$\mu$m à 25$\mu$m et la couche de galvanisation à chaud contenant de l'aluminium et/ou alliée à l'aluminium présentant une proportion d'aluminium, par rapport à la couche de galvanisation à chaud contenant de l'aluminium et/ou alliée à l'aluminium, dans la plage de 4 % en poids à 8 % en poids; de telle sorte et/ou avec la condition que l'élément de construction en acier pourvu de la couche de galvanisation à chaud contenant de l'aluminium et/ou de l'alliage d'aluminium et/ou l'élément de construction en acier soumis à la galvanisation à chaud en utilisant un bain de galvanisation contenant de l'aluminium et/ou de l'alliage d'aluminium présente, à des températures de l'ordre de 500 °C à 850 °C, une émissivité de la surface $\varepsilon_m$ de l'ordre de 0,05 à 0,60, déterminée selon DIN EN 1993-1-2: 2006-10; la couche de galvanisation à chaud contenant de l'aluminium et/ou alliée à l'aluminium présentant la composition suivante, toutes les indications de quantité mentionnées ci-après se rapportant à la couche de galvanisation à

EP 4 323 559 B1

chaud contenant de l'aluminium et/ou alliée à l'aluminium et devant être choisies de telle sorte qu'il en résulte au total 100 % en poids:

(i) du zinc (Zn) en quantités de 92 % à 96 % en poids,
(ii) aluminium (Al) en quantités de 4 % à 8 % en poids
(iii) éventuellement un ou plusieurs autres métaux choisis dans le groupe constitué par le bismuth (Bi), le plomb (Pb), l'étain (Sn), le nickel (Ni), le silicium (Si), le magnésium (Mg) ainsi que leurs combinaisons, en particulier en des quantités de 0,001 % à 10 % en poids;

étant entendu que la proportion de magnésium est inférieure à 0,2 % en poids, en particulier inférieure à 0,15 % en poids.

14. Structure porteuse, en particulier structure porteuse en acier, pour une construction, en particulier pour un bâtiment ou une partie de bâtiment, la structure porteuse comprenant, en tant que composants de construction pour respecter les exigences de résistance au feu et/ou de résistance au feu, en particulier de résistance au feu et/ou de résistance au feu selon DIN EN 13501-2: 2016-12 et/ou DIN 4102-2: 1977-09, une pluralité d'éléments de construction en acier pourvus d'une couche de galvanisation à chaud contenant de l'aluminium et/ou alliée à l'aluminium, la structure porteuse étant exempte de mesures et de dispositifs constructifs supplémentaires de protection contre l'incendie et/ou la structure porteuse ne présentant pas d'éléments constructifs supplémentaires de protection contre l'incendie,

où l'élément de construction en acier pourvu de la couche de galvanisation à chaud contenant de l'aluminium et/ou de l'alliage d'aluminium et/ou l'élément de construction en acier soumis à la galvanisation à chaud en utilisant un bain de galvanisation contenant de l'aluminium et/ou de l'alliage d'aluminium présente, à des températures dans la plage de 500 °C à 850 °C, une émissivité de la surface $\varepsilon_m$ dans la plage de 0,05 à 0,60, déterminée selon DIN EN 1993-1-2: 2006-10,
la couche de galvanisation à chaud contenant de l'aluminium et/ou alliée à l'aluminium présentant la composition suivante, toutes les indications de quantité mentionnées ci-après se rapportant à la couche de galvanisation à chaud contenant de l'aluminium et/ou alliée à l'aluminium et devant être choisies de telle sorte qu'il en résulte au total 100 % en poids:

(i) du zinc (Zn) en quantités de 92 % à 96 % en poids,
(ii) aluminium (Al) en quantités de 4 % à 8 % en poids
(iii) éventuellement un ou plusieurs autres métaux choisis dans le groupe constitué par le bismuth (Bi), le plomb (Pb), l'étain (Sn), le nickel (Ni), le silicium (Si), le magnésium (Mg) ainsi que leurs combinaisons, en particulier en des quantités de 0,001 % à 10 % en poids;

étant entendu que la teneur en magnésium est inférieure à 0,2 % en poids, notamment inférieure à 0,15 % en poids.

15. Ouvrage, en particulier bâtiment ou partie de bâtiment, présentant une structure porteuse selon la revendication 14.

16. Utilisation d'une couche de galvanisation à chaud contenant de l'aluminium et/ou alliée à l'aluminium pour conférer une résistance au feu et/ou une résistance au feu à des objets à base de fer ou contenant du fer, en particulier à base d'acier ou contenant de l'acier, et/ou pour équiper des objets à base de fer ou contenant du fer, en particulier à base d'acier ou contenant de l'acier, avec une résistance au feu et/ou une résistance au feu,

où l'élément de construction en acier est pourvu d'une couche de galvanisation à chaud contenant de l'aluminium et/ou allié à l'aluminium et/ou où l'élément de construction en acier est soumis à une galvanisation à chaud en utilisant une masse fondue de zinc contenant de l'aluminium et/ou allié à l'aluminium,
la couche de galvanisation à chaud contenant de l'aluminium et/ou alliée à l'aluminium étant appliquée sur l'élément de construction en acier avec une épaisseur de couche dans la plage de 4 μm à 25 μm et
la couche de galvanisation à chaud contenant de l'aluminium et/ou alliée à l'aluminium présentant une proportion d'aluminium, par rapport à la couche de galvanisation à chaud contenant de l'aluminium et/ou alliée à l'aluminium, dans la plage de 4 % en poids à 8 % en poids;
de telle sorte et/ou avec la condition que l'élément de construction en acier pourvu de la couche de galvanisation à chaud contenant de l'aluminium et/ou de l'alliage d'aluminium et/ou l'élément de construction en acier soumis à la galvanisation à chaud en utilisant un bain de galvanisation contenant de l'aluminium et/ou de l'alliage d'aluminium présente, à des températures de l'ordre de 500 °C à 850 °C, une émissivité de la surface $\varepsilon_m$ de

l'ordre de 0,05 à 0,60, déterminée selon DIN EN 1993-1-2: 2006-10;
la couche de galvanisation à chaud contenant de l'aluminium et/ou alliée à l'aluminium présentant la composition suivante, toutes les indications de quantité mentionnées ci-après se rapportant à la couche de galvanisation à chaud contenant de l'aluminium et/ou alliée à l'aluminium et devant être choisies de telle sorte qu'il en résulte au total 100 % en poids:

(i) du zinc (Zn) en quantités de 92 % à 96 % en poids,
(ii) aluminium (Al) en quantités de 4 % à 8 % en poids
(iii) éventuellement un ou plusieurs autres métaux choisis dans le groupe du bismuth (Bi), du plomb (Pb), de l'étain (Sn), du nickel (Ni), du silicium (Si), du magnésium (Mg) ainsi que leurs combinaisons, en particulier dans des quantités de 0,001 % en poids à 10 % en poids;

étant entendu que la proportion de magnésium est inférieure à 0,2 % en poids, en particulier inférieure à 0,15 % en poids.

Fig. 1

Fig. 2

ε =0,50 ab 650°C

ε =0,40 ab 600°C

ε =0,20 bis 650°C

ε =0,20 bis 600°C

Emissivität [-]

Temperatur [°C]

Fig. 3

Zn-5%Al    Zn-5%Al + Passivierung    Zn-5%Al + Versiegelung

EP 4 323 559 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007048504 A1
- WO 2020173586 A1
- WO 2019029856 A1
- US 2014185650 A1
- EP 2599889 A1
- EP 2385181 A2
- WO 2002042512 A1
- EP 1352100 B1
- DE 60124767 T2
- US 20030219543 A1


**In der Beschreibung aufgeführte Nicht-Patentliteratur**

- Thermal impact on HDG construction. **C. GAIGL ; M. MENSINGER.** Technical Report. Technische Universität, Februar 2018
- **M. MENSINGER ; C. GAIGL.** Feuerwiderstand verzinkter Stahlkonstruktionen. *Stahlbau,* Januar 2019, vol. 88, 3-10
- Thermal impact on HDG construction. **C. GAIGL ; M. MENSINGER.** Technical Report. Technische Universität München, Februar 2018